(19) **Europäisches Patentamt European Patent Office Office européen des brevets**

(11) **EP 2 110 872 B1**

(12) **EUROPEAN PATENT SPECIFICATION**

(45) Date of publication and mention of the grant of the patent:
**12.02.2014 Bulletin 2014/07**

(21) Application number: **07859978.4**

(22) Date of filing: **21.12.2007**

(51) Int Cl.:
*H01M 4/131* (2010.01)   *H01M 4/485* (2010.01)
*H01M 4/505* (2010.01)   *H01M 4/525* (2010.01)
*H01M 10/0525* (2010.01)

(86) International application number:
**PCT/JP2007/074698**

(87) International publication number:
**WO 2008/078695 (03.07.2008 Gazette 2008/27)**

(54) **LITHIUM TRANSITION METAL COMPOUND POWDER, PROCESS FOR PRODUCTION THEREOF, SPRAY-DRIED PRODUCT AS PRECURSOR, POSITIVE ELECTRODE FOR LITHIUM SECONDARY BATTERY AND LITHIUM SECONDARY BATTERY MADE BY USING THE SAME**

LITHIUM-ÜBERGANGSMETALLVERBINDUNGSPULVER, VERFAHREN ZU SEINER HERSTELLUNG, SPRÜHGETROCKNETES PRODUKT ALS VORLÄUFER, POSITIVE ELEKTRODE FÜR EINE LITHIUM-SEKUNDÄRBATTERIE UND DAMIT HERGESTELLTE LITHIUM-SEKUNDÄRBATTERIE.

POUDRE DE COMPOSE METALLIQUE DE TRANSITION AU LITHIUM, SON PROCEDE DE FABRICATION, PRODUIT SECHE PAR PULVERISATION UTILISE COMME PRECURSEUR, ELECTRODE POSITIVE POUR BATTERIE SECONDAIRE AU LITHIUM ET BATTERIE SECONDAIRE AU LITHIUM FABRIQUEE UTILISANT CELLE-CI.

(84) Designated Contracting States:
**AT BE BG CH CY CZ DE DK EE ES FI FR GB GR HU IE IS IT LI LT LU LV MC MT NL PL PT RO SE SI SK TR**

(30) Priority: **26.12.2006 JP 2006349912**
**26.03.2007 JP 2007079360**

(43) Date of publication of application:
**21.10.2009 Bulletin 2009/43**

(60) Divisional application:
**11159159.0 / 2 337 125**
**11159225.9 / 2 341 570**

(73) Proprietor: **Mitsubishi Chemical Corporation Chiyoda-ku Tokyo 100-8251 (JP)**

(72) Inventors:
• **SHIZUKA, Kenji Ibaraki 300-0332 (JP)**
• **OKAHARA, Kenji Ibaraki 300-0332 (JP)**
• **KIKUCHI, Kazuhiro Ibaraki 300-0332 (JP)**
• **TERADA, Kaoru Ibaraki 300-0332 (JP)**

(74) Representative: **Vossius & Partner Siebertstrasse 4 81675 München (DE)**

(56) References cited:
**JP-A- 10 241 691      JP-A- 11 016 566**
**JP-A- 2000 113 884   JP-A- 2005 251 716**

**EP 2 110 872 B1**

**Description**

The present invention relates to a lithium transition metal based compound powder used as a lithium secondary battery positive electrode material, a method for manufacturing the same, a spray-dried substance serving as a firing precursor thereof, a lithium secondary battery positive electrode by using the lithium transition metal based compound powder, and a lithium secondary battery including the lithium secondary battery positive electrode.

Lithium secondary batteries have excellent energy densities, output densities, and the like and are effective for miniaturization and weight reduction. Therefore the demands therefore as power supplies of portable equipment, e.g., notebook personal computers, cellular phones, and handy video cameras, have grown sharply. Furthermore, the lithium secondary batteries have been also noted as power  supplies of electric vehicles (EV), load leveling of electric powers, and the like. In recent years, demands as power supplies of hybrid electric vehicles (HEV) have expanded sharply. In particular, in the application to the electric vehicle, excellence is necessary in low cost, safety, life (in particular at high temperatures), and load characteristics, and an improvement in material has been desired.

Among the materials constituting the lithium secondary battery, as for a positive electrode active material, substances having a function of enabling elimination and insertion of lithium ions can be used. There are various positive electrode active materials having respective characteristics. Furthermore, an enhancement in load characteristics is mentioned as a common issue in facilitating an improvement in performance, and an improvement in material has been desired intensely.

Moreover, a material exhibiting well-balanced performance as well as excellence in low cost, safety, and life (in particular at high temperatures) is desired.

As for the positive electrode active material for the lithium secondary battery, lithium manganese based composite oxides having a spinel structure, layer lithium nickel based composite oxides, layer lithium cobalt based composite oxides, and the like are in practical use at present. All lithium secondary batteries by using these lithium-containing composite oxides have advantages and disadvantages in characteristics. That is, regarding the lithium manganese based composite oxides having a spinel structure, the price is low, the synthesis is relatively easy, and the safety of batteries produced is excellent, whereas the capacity is low and the high-temperature characteristics (cycle, preservation) are poor. Regarding the layer lithium nickel based composite oxides, the capacity is high and the high-temperature characteristics are excellent, whereas there are disadvantages in that the synthesis is difficult, the safety of batteries produced is poor, the preservation requires caution, and the like. The layer lithium cobalt based composite oxides are easy to synthesize and exhibit excellent battery performance balance and, thereby, are widely used as power supplies for portable equipment, whereas there are significant disadvantages in that the safety is unsatisfactory and the cost is high.

Under the above-described present circumstances, a lithium nickel manganese cobalt based composite oxide having a layer structure has been proposed as a promising candidate for an active material which overcomes or minimize the  disadvantages included in these positive electrode active materials and which exhibits excellent battery performance balance. In particular, demands for cost reduction, demands for increase in voltage, and demands for enhancement of the safety have been intensified in recent years and, therefore, it is believed that this composite oxide is a promising positive electrode active material capable of responding to all needs.

However, the extents of the cost reduction, the increase in voltage, and the enhancement of the safety are changed depending on the composition ratio. Therefore, in order to respond to demands for further cost reduction, use in a higher setting of an upper limit of voltage, and a higher degree of safety, it is necessary that a composite oxide having a composition within a limited range is selected and used, for example, a manganese/nickel atomic ratio is specified to be about 1 or more and a cobalt ratio is reduced. However, regarding a lithium secondary battery in which the lithium nickel manganese cobalt based composite oxide having a composition within the above-described range is used as a positive electrode material, load characteristics, e.g., rate and output characteristics, and a low-temperature output characteristic become poor and, therefore, further improvement has been required in  commercialization.

Incidentally, as for known documents in which a lithium transition metal based compound is subjected to an introduction treatment of "Additive element 1 (B, Bi)" or "Additive element 2 (Mo, W)" shown in the present invention, Patent Documents 1 to 24 and Non-Patent Documents 1 to 3, as described below, have been disclosed previously.

Patent Document 1 discloses that a positive electrode containing an active material, in which a part of Co in $LiCoO_2$ has been substituted with Bi, B, is included.

Patent Document 2 discloses that boron (B) is added to $Li_{1-x}CoO_2$ serving as a positive electrode active material and, thereby, surfaces of grains are covered with boron, the active material is not decomposed at a high voltage, and an excellent charge-discharge cycle characteristic is exhibited.

Patent Document 3 discloses that boron (B) or bismuth (Bi) is contained as an element constituting a composite oxide having a layer structure.

Patent Document 4 discloses that a lithium boron cobalt composite oxide represented by $LiB_xCo_{(1-x)}O_2$ (0.001 $\leq$ x $\leq$  0.25) is used as a positive electrode active material.

Patent Document 5 discloses a lithium nickel cobalt based composite oxide containing B as a substitution element.

Patent Document 6 discloses that a positive electrode primarily composed of a composite oxide of lithium and cobalt contains a composite oxide of Bi and lithium.

Patent Document 7 discloses a layer structure oxide which is a layer structure oxide including a composition represented by a formula $AMO_2$ (A = Li, Na, M = Co, Ni, Fe, Cr) and in which Bi or B in the form of an oxide is present on the surface of this crystallite or between crystallites.

Patent Document 8 discloses those in which Li, O, and Mg are specified to be indispensable elements as constituent elements of a positive electrode active material, a layer or a zigzag layer $LiMeO_2$ structure is included, Me includes at least one type selected from Mn, Co, Ni, and Fe, and Mg is present at a position of Li in the $LiMeO_2$ structure, and those further containing Mo, or Bi, B as constituent elements.

Patent Document 9 discloses that a positive electrode active material covered around with an intermetallic compound or an oxide of B, Bi, Mo, W or the like is used.

Patent Document 10 discloses base grains composed of an oxide of at least one type of transition element selected from the group consisting of Co, Ni, Mn, and Fe, which contain lithium, wherein a part of or a whole surface is covered with an electrically conductive layer composed of a metal, e.g., Bi.

Patent Document 11 discloses that lithium cobalt oxide or lithium nickel oxide, to which an element, e.g., B, Bi, Mo, or W, is added, is used as a positive electrode active material.

Patent Document 12 discloses that regarding a secondary battery by using a mixture of lithium manganese oxide and lithium nickel oxide as a positive electrode active material, Bi is contained in a positive electrode.

Patent Document 13 discloses that a boron compound is contained in a method for manufacturing a lithium nickel manganese cobalt based composite oxide.

Patent Document 14 discloses a lithium nickel manganese cobalt based composite oxide, wherein a part of transition metal sites are substituted with B.

Patent Document 15 discloses that lithium borate is included on a surface of a lithium nickel manganese cobalt based composite oxide grains having a layer structure.

Patent Document 16 discloses that a compound of Mo, W, B, or the like is included in at least grain surfaces of lithium transition metal based composite oxide having a layer structure.

Patent Document 17 discloses that a mixture containing lithium, nickel, manganese, and boron is fired in a method for manufacturing a lithium nickel manganese based composite oxide having a layer structure.

Patent Document 18 discloses that a surface of a spinel type lithium manganese composite oxide is modified by an oxide containing tungsten.

Patent Document 19 and Patent Document 20 disclose that W, and Mo are used as substitution elements for transition metal sites in a lithium nickel based composite oxide having a layer structure. It is described that the heat stability in a charged state is thereby improved.

Patent Document 21 discloses that a lithium nickel manganese cobalt based composite oxide containing W, Mo is used. It is described that an inexpensive, high-capacity oxide exhibiting excellent heat stability in a charged state as compared with $LiCoO_2$ is thereby obtained.

Patent Document 22 discloses an example in which a transition metal site in a lithium nickel manganese cobalt based composite oxide is substituted with W.

Patent Document 23 discloses that a monoclinic structure lithium manganese nickel based composite oxide in which transition metal sites are substituted with Mo, W is used as a positive electrode active material. It is described that a lithium secondary battery having a high energy density and a high voltage and exhibiting high reliability can be thereby provided.

Patent Document 24 discloses that a lithium nickel manganese cobalt based composite oxide having a layer structure is used.

Non-Patent Document 1 discloses a $LiNi_{1/3}Mn_{1/3}Mo_{1/3}O_2$ composite oxide having a layer structure.

Non-Patent Document 2 discloses a material in which a surface of $LiNi_{0.8}Co_{0.2}O_2$ is subjected to a covering treatment with $Li_2O$-$B_2O_3$ glass.

Non-Patent Document 3 discloses that $Li[Ni_xCo_{1-2x}Mn_x]O_2$ is subjected to a $B_2O_3$ addition treatment, and an effect of a sintering additive is examined.

Here, regarding Patent Documents 1 to 7, 10, 12 to 15, and 17 to 24 and Non-Patent Documents 1 to 3, there is no description related to addition of Additive 1 and Additive 2 in combination according to the present invention and, therefore, it is difficult to achieve objects of the present invention.

Furthermore, Patent Documents 8, 9, 11, and 16 describe that both Additive element 1 and Additive element 2 are included. Among them, according to Patent Document 8, there is a description of an example in which B as Additive element 1 and Mo as Additive element 2 are used in combination. However, the total amount of these elements is a too large 2 percent by mole and, in addition, it is necessary that Mg is present at the Li site. Therefore, there is a problem in that insertion and elimination reactions of lithium during charge and discharge are hindered easily and the performance is not sufficiently improved.

Patent Documents 9 and 11 describe both Additive element 1 and Additive element 2, but there is no description that the two are actually used in combination in a positive electrode active material. Furthermore, there is no description nor indication that such a positive electrode active material according to the present invention exhibits high load characteristics.

Patent Document 16 describes that B serves as Additive element 1 and Mo or W serves as Additive element 2, but there is no description that the two are actually used in combination in a positive electrode active material.

Patent Document 1: Japanese Unexamined Patent Application Publication No. 4-253162
Patent Document 2: Japanese Unexamined Patent Application Publication No. 4-328258
Patent Document 3: Japanese Unexamined Patent Application Publication No. 5-54889
Patent Document 4: Japanese Unexamined Patent Application Publication No. 5-325971
Patent Document 5: Japanese Unexamined Patent Application Publication No. 8-213052
Patent Document 6: Japanese Unexamined Patent Application Publication No. 5-47384
Patent Document 7: Japanese Unexamined Patent Application Publication No. 8-55624
Patent Document 8: Japanese Unexamined Patent Application Publication No. 10-241691
Patent Document 9: Japanese Unexamined Patent Application Publication No. 11-16566
Patent Document 10: Japanese Unexamined Patent Application Publication No. 2000-48820
Patent Document 11: Japanese Unexamined Patent Application Publication No. 2000-113884
Patent Document 12: Japanese Unexamined Patent Application Publication No. 2002-260632
Patent Document 13: Japanese Unexamined Patent Application Publication No. 2002-304993
Patent Document 14: Japanese Unexamined Patent Application Publication No. 2003-31219
Patent Document 15: Japanese Unexamined Patent Application Publication No. 2004-335278
Patent Document 16: Japanese Unexamined Patent Application Publication No. 2005-251716
Patent Document 17: Japanese Unexamined Patent Application Publication No. 2004-152753
Patent Document 18: Japanese Unexamined Patent Application Publication No. 2005-320184
Patent Document 19: Japanese Patent No. 3088716
Patent Document 20: Japanese Patent No. 3362025
Patent Document 21: WO2002-041419
Patent Document 22: Japanese Unexamined Patent Application Publication No. 2004-303673
Patent Document 23: Japanese Unexamined Patent Application Publication No. 2005-235628
Patent Document 24: Japanese Unexamined Patent Application Publication No. 2006-164934
Non-Patent Document 1: Microelectronics Journal, 36 (2005) 491.
Non-Patent Document 2: J. Power Sources, 102 (2001) 162.
Non-Patent Document 3: J. Electrochem. Soc., 151 (2004) A1739.

The present inventors considered that in order to solve an issue of improvement of load characteristics, e.g., rate and output characteristics, it is important to allow the crystallinity to become sufficiently high at the stage of sintering an active material and, in addition, suppress growth of grains and sintering so as to obtain fine grains and conducted intensive research. As a result, it was found that regarding especially a layer lithium nickel manganese cobalt based composite oxide, growth of grains and sintering were suppressed and a lithium transition metal based compound powder composed of fine grains were obtained by conducting sintering at a certain temperature or higher after a compound containing an element of Mo, W, or the like was added. Consequently, regarding the lithium secondary battery positive electrode material, besides cost reduction, increase in withstand voltage, and enhancement of safety, the compatibility with the improvement of load characteristics, e.g., rate and output characteristics, was made possible.

However, in this method, changes in properties, e.g., a reduction in bulk density and an increase in specific surface area, occurred. Consequently, a new problem came up in that handling as a powder and preparation of electrode became difficult.

Accordingly, it is an object of the present invention to provide a lithium transition metal based compound powder for a lithium secondary battery positive electrode material capable of improving powder properties while improving load characteristics, e.g., rate and output characteristics, and preferably being compatible with cost reduction, increase in withstand voltage, and enhancement of safety in the use as the lithium secondary battery positive electrode material, a method for manufacturing the same, a lithium secondary battery positive electrode by using the lithium transition metal based compound powder, and a lithium secondary battery including the lithium secondary battery positive electrode.

In order to solve the issue of improving powder properties while improving load characteristics, e.g., rate and output characteristics, the present inventors conducted intensive research on an improvement in bulk density and optimization of specific surface area. As a result, it was found that a lithium-containing transition metal based compound powder, which was easy to handle and suitable for preparation of an electrode, was able to be obtained without impairing the above-described improvement effects by adding at least one type of compound containing at least one type of element selected from B and Bi and at least one type of compound containing at least one type of element selected from Mo and W in combination at a predetermined ratio and, thereafter, conducting firing, a lithium transition metal based compound powder, which exhibited excellent powder properties, high load characteristics, high-voltage resistance, and a high degree of safety and which was capable of reducing the cost, was able to be obtained as a lithium secondary battery positive electrode material, and such a lithium transition metal based compound powder had a characteristic peak in a surface enhanced Raman spectrum. Consequently, the present invention has been completed.

The present invention is as defined in the annexed claims.

In the case where the lithium transition metal based compound powders for a lithium secondary battery positive electrode material according to the present invention are used as lithium secondary battery positive electrodes, compatibility of cost reduction and enhancement of safety with high load characteristics and improvement in powder handleability can be ensured. Consequently, according to the present invention, an inexpensive lithium secondary battery which exhibits excellent handleability and a high degree of safety and which delivers excellent performance even in the use at a high charge voltage is provided.

[Fig. 1] Fig. 1 is a graph showing the pore distribution curve of a lithium nickel manganese cobalt composite oxide powder produced in Example 1.

[Fig. 2] Fig. 2 is a graph showing the pore distribution curve of a lithium nickel manganese cobalt composite oxide powder produced in Example 2.

[Fig. 3] Fig. 3 is a graph showing the pore distribution curve of a lithium nickel manganese cobalt composite oxide powder produced in Example 3.

[Fig. 4] Fig. 4 is a graph showing the pore distribution curve of a lithium nickel manganese cobalt composite oxide powder produced in Example 4.

[Fig. 5] Fig. 5 is a graph showing the pore distribution curve of a lithium nickel manganese cobalt composite oxide powder produced in Example 5.

[Fig. 6] Fig. 6 is a graph showing the pore distribution curve of a lithium nickel manganese cobalt composite oxide powder produced in Comparative example 1.

[Fig. 7] Fig. 7 is a graph showing the pore distribution curve of a lithium nickel manganese cobalt composite oxide powder produced in Comparative example 2.

[Fig. 8] Fig. 8 is a graph showing the pore distribution curve of a lithium nickel manganese cobalt composite oxide powder produced in Comparative example 3.

[Fig. 9] Fig. 9 is a graph showing the pore distribution curve of a lithium nickel manganese cobalt composite oxide powder produced in Comparative example 4.

[Fig. 10] Fig. 10 is a graph showing the pore distribution curve of a lithium nickel manganese cobalt composite oxide powder produced in Comparative example 5.

[Fig. 11] Fig. 11 is a graph showing the pore distribution curve of a lithium nickel manganese cobalt composite oxide powder produced in Comparative example 6.

[Fig. 12] Fig. 12 is a graph showing the pore distribution curve of a lithium nickel manganese cobalt composite oxide powder produced in Comparative example 7.

[Fig. 13] Fig. 13 is a SEM image (photograph) (magnification $\times$10,000) of the lithium nickel manganese cobalt composite oxide produced in Example 1.

[Fig. 14] Fig. 14 is a SEM image (photograph) (magnification $\times$10,000) of the lithium nickel manganese cobalt composite oxide produced in Example 2.

[Fig. 15] Fig. 15 is a SEM image (photograph) (magnification $\times$10,000) of the lithium nickel manganese cobalt composite oxide produced in Example 3.

[Fig. 16] Fig. 16 is a SEM image (photograph) (magnification $\times$10,000) of the lithium nickel manganese cobalt composite oxide produced in Example 4.

[Fig. 17] Fig. 17 is a SEM image (photograph) (magnification $\times$10,000) of the lithium nickel manganese cobalt composite oxide produced in Example 5.

[Fig. 18] Fig. 18 is a SEM image (photograph) (magnification $\times$10,000) of the lithium nickel manganese cobalt composite oxide produced in Comparative example 1.

[Fig. 19] Fig. 19 is a SEM image (photograph) (magnification $\times$10,000) of the lithium nickel manganese cobalt composite oxide produced in Comparative example 2.

[Fig. 20] Fig. 20 is a SEM image (photograph) (magnification $\times$10,000) of the lithium nickel manganese cobalt composite oxide produced in Comparative example 3.

[Fig. 21] Fig. 21 is a SEM image (photograph) (magnification $\times$10,000) of the lithium nickel manganese cobalt composite oxide produced in Comparative example 4.

[Fig. 22] Fig. 22 is a SEM image (photograph) (magnification ×10,000) of the lithium nickel manganese cobalt composite oxide produced in Comparative example 5.

[Fig. 23] Fig. 23 is a SEM image (photograph) (magnification ×10,000) of the lithium nickel manganese cobalt composite oxide produced in Comparative example 6.

[Fig. 24] Fig. 24 is a SEM image (photograph) (magnification ×10,000) of the lithium nickel manganese cobalt composite oxide produced in Comparative example 7.

[Fig. 25] Fig. 25 is a graph showing the XRD pattern of the lithium nickel manganese cobalt composite oxide produced in Example 1.

[Fig. 26] Fig. 26 is a graph showing the XRD pattern of the lithium nickel manganese cobalt composite oxide produced in Example 2.

[Fig. 27] Fig. 27 is a graph showing the XRD pattern of the lithium nickel manganese cobalt composite oxide produced in Example 3.

[Fig. 28] Fig. 28 is a graph showing the XRD pattern of the lithium nickel manganese cobalt composite oxide produced in Example 4.

[Fig. 29] Fig. 29 is a graph showing the XRD pattern of the lithium nickel manganese cobalt composite oxide produced in Example 5.

[Fig. 30] Fig. 30 is a graph showing the XRD pattern of the lithium nickel manganese cobalt composite oxide produced in Comparative example 1.

[Fig. 31] Fig. 31 is a graph showing the XRD pattern of the lithium nickel manganese cobalt composite oxide produced in Comparative example 2.

[Fig. 32] Fig. 32 is a graph showing the XRD pattern of the lithium nickel manganese cobalt composite oxide produced in Comparative example 3.

[Fig. 33] Fig. 33 is a graph showing the XRD pattern of the lithium nickel manganese cobalt composite oxide produced in Comparative example 4.

[Fig. 34] Fig. 34 is a graph showing the XRD pattern of the lithium nickel manganese cobalt composite oxide produced in Comparative example 5.

[Fig. 35] Fig. 35 is a graph showing the XRD pattern of the lithium nickel manganese cobalt composite oxide produced in Comparative example 6.

[Fig. 36] Fig. 36 is a graph showing the XRD pattern of the lithium nickel manganese cobalt composite oxide produced in Comparative example 7.

[Fig. 37] Fig. 37 is a graph showing the SERS pattern of a lithium transition metal based compound powder produced in Example 1.

[Fig. 38] Fig. 38 is a graph showing the SERS pattern of a lithium transition metal based compound powder produced in Example 2.

[Fig. 39] Fig. 39 is a graph showing the SERS pattern of a lithium transition metal based compound powder produced in Example 3.

[Fig. 40] Fig. 40 is a graph showing the SERS pattern of a lithium transition metal based compound powder produced in Example 4.

[Fig. 41] Fig. 41 is a graph showing the SERS pattern of a lithium transition metal based compound powder produced in Example 5.

[Fig. 42] Fig. 42 is a graph showing the ToF-SIMS pattern of the lithium transition metal based compound powder produced in Example 1.

Detailed Descriptions

The embodiments according to the present invention will be described below in detail. However, the explanation of the constituent features described below is an example (typical example) of execution forms of the present invention, and the present invention is not limited to these contents.

[Lithium transition metal based compound powder]

A lithium transition metal based compound powder for a lithium secondary battery positive electrode material according to the present invention may hereafter be referred to as a "positive electrode active material according to the present invention". The positive electrode active material is characterized by having a peak A at 800 cm$^{-1}$ or more, and 900 cm$^{-1}$ or less in a surface enhanced Raman spectrum.

Here, the surface enhanced Raman spectroscopy (hereafter abbreviated as SERS) is a technique in which a noble metal, e.g., silver, is thinly evaporated on a sample surface in the manner of sea-island so as to selectively amplify a Raman spectrum originated from molecular vibration of an outermost surface of the sample. In common Raman spectroscopy, it is believed that the detection depth is about 0.1 to 1 $\mu$m. However, in SERS, signals of surface layer portion in contact with noble metal grains constitute a most part.

Peak A is present at 800 cm$^{-1}$ or more, and 900 cm$^{-1}$ or less in the SERS spectrum. The position of the peak A is usually at 800 cm$^{-1}$ or more, preferably 810 cm$^{-1}$ or more, more preferably 820 cm$^{-1}$ or more, further preferably 830 cm$^{-1}$ or more, and most preferably 840 cm$^{-1}$ or more, and usually at 900 cm$^{-1}$ or less, preferably 895 cm$^{-1}$ or less, more preferably 890 cm$^{-1}$ or less, and most preferably 885 cm$^{-1}$ or less. If the position is out of this range, the effects described herein may not be exerted sufficiently.

Furthermore, in SERS of the positive electrode active material, it is preferable that the half-width of the above-described peak A is 30 cm$^{-1}$ or more, and further preferably 60 cm$^{-1}$ or more. It is estimated that a broad peak having such a half-width is originated from chemical changes of additive elements due to interactions with the elements in the positive electrode active material. In the case where the half-width of the peak A is out of the above-described range, that is, in the case where the interaction between the additive elements and the elements in the positive electrode active material is small, the effects described herein may not be exerted sufficiently. Incidentally, the additive element here is synonymous with an additive element described later.

Moreover, regarding the positive electrode active material, it is preferable that the intensity of the peak A to the intensity of a peak B at 600 $\pm$ 50 cm$^{-1}$ is larger than 0.04, further preferably 0.05 or more in SERS. Here, the peak B at 600 $\pm$ 50 cm$^{-1}$ is a peak originated from stretching vibration of M"O$_6$ (M" represents a metal element in the positive electrode active material). In the case where the intensity of the peak A to the intensity of the peak B is small, the effects described herein may not be exerted sufficiently.

In addition, in time-of-flight secondary ion mass spectrometry (hereafter abbreviated as ToF-SIMS) of the positive electrode active material, it is preferable that a peak originated from a fragment resulting from bonding between the additive elements or between the additive element and the element constituting the positive electrode active material is observed.

Here, ToF-SIMS is a technique in which a sample is irradiated with ion beams, generated secondary ions are detected with a time-of-flight mass spectroscope and, thereby, chemical species present at the outermost surface of the sample are estimated. According to this method, the distribution state of additive elements present in the vicinity of the surface layer can be estimated. In the case where no peak originated from a fragment resulting from bonding between the additive elements or between the additive element and the element in the positive electrode active material is observed, the dispersion of the additive elements may not be sufficient and the effects described herein may not be exerted sufficiently.

Incidentally, the lithium transition metal based compound powder for a lithium secondary battery positive electrode material according to the present invention is characterized in that when B and W are used as additive elements, peaks originated from BWO$_5^-$ and M'3WO$_6^-$ (M' represents an element capable of assuming the state of divalent) or BWO$_5^-$ and Li$_2$BWO$_6^-$ are observed in ToF-SIMS. In the case where the above-described peaks are not observed, the dispersion of the additive elements may not be sufficient and the effects of the present invention may not be exerted sufficiently.

The positive electrode material according to the present invention is characterized by containing the lithium transition metal based compound, which has the function of enabling insertion and elimination of lithium ions, as a primary component and being produced by conducting firing after at least one type of compound (hereafter referred to as "Additive 1") containing at least one type of element (hereafter referred to as "Additive element 1") selected from B and Bi and at least one type of compound (hereafter referred to as "Additive 2") containing at least one type of element (hereafter referred to as "Additive element 2") selected from Mo and W are added in combination to the raw material of the primary component at a ratio of a total of Additive 1 and Additive 2 to a total amount of moles of transition metal elements in the raw material of the primary component of 0.01 percent by mole or more, and less than 2 percent by mole, wherein the compositions are represented by Composition formula (I) described below:

$$LiMO_2 \qquad (I)$$

In formula (I) described above, M represents elements composed of Li, Ni, and Mn or Li, Ni, Mn, and Co, a Mn/Ni molar ratio is 0.1 or more, and 5 or less, a Co/(Mn + Ni + Co) molar ratio is 0 or more, and 0.35 or less, and an Li molar ratio in M is 0.001 or more, and 0.2 or less, and wherein in the metal based compound powder additive elements 1 and/or 2 are present through concentration on a surface portion of a primary grain of the powder.

<Lithium-containing transition metal compound>

The lithium transition metal based compound according to the present invention refers to a compound having a structure enabling elimination and insertion of Li ions. Herein disclosed are sulfides, phosphate compounds, and lithium transition metal composite oxides. Examples of sulfides include compounds, e.g., TiS$_2$ and MoS$_2$, having a two-dimen-

sional layer structure and Chevrel compounds represented by a general formula $Me_xMo_6S_8$ (Me represents Pb, Ag, Cu, and other various transition metals), which have a strong three-dimensional skeleton structure. Examples of phosphate compounds include compounds belonging to an olivine structure and, in general, is represented by $LiMePO_4$ (Me represents at least one type of transition metal). Specific examples include $LiFePO_4$, $LiCoPO_4$, $LiNiPO_4$, and $LiMnPO_4$. Examples of lithium transition metal composite oxides include composite oxides belonging to a spinel structure enabling three-dimensional diffusion and composite oxides belonging to a layer structure enabling two-dimensional diffusion of lithium ions. In general, the composite oxides having the spinel structure are represented by $LiMe_2O_4$ (Me represents at least one type of transition metal). Specific examples thereof include $LiMn_2O_4$, $LiCoMnO_4$, $LiNi_{0.5}Mn_{1.5}O_4$, and $CoLiVO_4$. In general, the composite oxides having the layer structure are represented by $LiMeO_2$ (Me represents at least one type of transition metal). Specific examples thereof include $LiCoO_2$, $LiNiO_2$, $LiNi_{1-x}Co_xO_2$, $LiNi_{1-x-y}CO_xMn_yO_2$, $LiNi_{0.5}Mn_{0.5}O_2$, $Li_{1.2}Cr_{0.4}Mn_{0.4}O_2$, $Li_{1.2}Cr_{0.4}Ti_{0.4}O_2$, and $LiMnO_2$.

Herein disclosed is lithium transition metal based compound powder configured to include a crystal structure belonging to the olivine structure or the spinel structure. From the viewpoint of diffusion of lithium ions, compound powders according to the present invention are configured to include a crystal structure belonging to the layer structure.

Furthermore, foreign elements may be introduced in the lithium transition metal based compound powder according to the present invention. The foreign element is selected from at least one type of Na, Mg, Al, Si, K, Ca, Ti, V, Cr, Fe, Cu, Zn, Ga, Ge, Sr, Y, Zr, Nb, Ru, Rh, Pd, Ag, In, Sn, Sb, Te, Ba, Ta, Re, Os, Ir, Pt, Au, Pb, La, Ce, Pr, Nd, Sm, Eu, Gd, Tb, Dy, Ho, Er, Tm, Yb, Lu, N, F, P, S, Cl, Br, and I. These foreign elements may be taken into a crystal structure of the lithium nickel manganese cobalt based composite oxide or may not be taken into the crystal structure of the lithium nickel manganese cobalt based composite oxide but be unevenly distributed as simple substances or compounds on grain surfaces thereof or at crystal grain boundaries.

The present invention is characterized in that at least one type selected from B and Bi is used as Additive element 1. Among these Additive elements 1, it is preferable that Additive element 1 is B from the viewpoint of being available as an industrial raw material inexpensively and being a light element.

Regarding the type of compound (Additive 1) containing Additive element 1, the type thereof is not specifically limited insofar as the effect of the present invention are exerted. Usually, boric acid, oxoacid salts, oxides, hydroxides, and the like are used. Among these Additives 1, boric acid and oxides are preferable from the viewpoint of being available as an industrial raw material inexpensively, and boric acid is particularly preferable.

Examples of compounds serving as Additives 1 include BO, $B_2O_2$, $B_2O_3$, $B_4O_5$, $B_6O$, $B_7O$, $B_{13}O_2$, $LiBO_2$, $LiB_5O_8$, $Li_2B_4O_7$, $HBO_2$, $H_3BO_3$, $B(OH)_3$, $B(OH)_4$, $BiBO_3$, $Bi_2O_3$, $Bi_2O_5$, and $Bi(OH)_3$. Preferable examples include $B_2O_3$, $H_3BO_3$, and $Bi_2O_3$ from the viewpoint of being available as an industrial raw material relatively inexpensively and easily, and $H_3BO_3$ is particularly preferable. These Additive 1 may be used alone, or at least two types may be used in combination.

The present invention is characterized in that at least one type selected from Mo and W is used as Additive element 2. Among these Additive elements 2, it is preferable that Additive element 2 is W from the viewpoint of a significant effect.

Regarding the type of compound (Additive 2) containing Additive element 2, the type thereof is not specifically limited insofar as the effect of the present invention are exerted. Usually, oxides are used.

Examples of compounds serving as Additives 2 include MoO, $MoO_2$, $MoO_3$, $MoO_x$, $Mo_2O_3$, $Mo_2O_5$, $Li_2MoO_4$, WO, $WO_2$, $WO_3$, $WO_x$, $W_2O_3$, $W_2O_5$, $W_{18}O_{49}$, $W_{20}O_{58}$, $W_{24}O_{70}$, $W_{25}O_{73}$, $W_{40}O_{118}$, and $Li_2WO_4$. Preferable examples include $MoO_3$, $Li_2MoO_4$, $WO_3$, and $Li_2WO_4$ from the viewpoint of being available as an industrial raw material relatively easily or containing lithium, and $WO_3$ is particularly preferable. One type of these Additives 2 may be used alone, or at least two types may be used in combination.

The range of the amount of addition of a total of Additive 1 and Additive 2 relative to a total amount of moles of transition metal elements constituting the primary component is 0.01 percent by mole or more, and less than 2 percent by mole, preferably 0.03 percent by mole or more, and less than 1.8 percent by mole, more preferably 0.04 percent by mole or more, and less than 1.6 percent by mole, and particularly preferably 0.05 percent by mole or more, and less than 1.5 percent by mole. If the amount is less than the lower limit, the above-described effects may not be exerted. If the amount exceeds the upper limit, deterioration of the battery performance may result.

The range of the ratio of addition of Additive 1 to Additive 2 is usually 10:1 or more, and 1:20 or less on a molar ratio basis, preferably 5:1 or more, and 1:15 or less, more preferably 2:1 or more, and 1:10 or less, and particularly preferably 1:1 or more, and 1:5 or less. If the ratio is out of this range, the effect of the present invention may not be easily exerted.

The lithium transition metal based compound powder according to the present invention is characterized in that elements (Additive elements) derived from Additives, that is, at least one type selected from B and Bi (Additive element 1) and Mo and W (Additive element 2), is present through concentration on a surface portion of a primary grain thereof. Specifically, an atomic ratio of Additive elements 1 in total to a total of metal elements except Li, Additive elements 1, and Additive elements 2 (that is, other than Li, Additive elements 1, and Additive elements 2) of the surface portion of the primary grain is usually 20 times or more larger than the atomic ratio on the whole grain basis. Preferably, the lower limit of this ratio is 30 times or more, more preferably 40 times or more, and particularly preferably 50 times or more. Usually the upper limit is not specifically limited. However 500 times or less is preferable, 400 times or more is more preferable, 300 times or more is particularly preferable, and 200 times or less is most preferable. If this ratio is too small, an effect of improving the powder properties is small. In contrast, if the ratio is too large, deterioration of the battery performance may result.

Furthermore, usually, a molar ratio of Additive element 2 to a total of metal elements except Li, Additive elements 1, and Additive elements 2 (that is, other than Li, Additive elements 1, and Additive elements 2) of the surface portion of the primary grain is 3 times or more larger than the atomic ratio on the whole grain basis. Preferably, the lower limit of this ratio is 4 times or more, more  preferably 5 times or more, and particularly preferably 6 times or more. Usually the upper limit is not specifically limited. However 150 times or less is preferable, 100 times or less is more preferable, 50 times or more is particularly preferable, and 30 times or less is most preferable. If this ratio is too small, an effect of improving the battery performance is small. In contrast, if the ratio is too large, deterioration of the battery performance may result.

The analysis of the composition of the surface portion of the primary grain of the lithium transition metal based compound powder is conducted by X-ray photoelectron spectroscopy (XPS) under the condition in which monochromatic ray $AlK\alpha$ is used as an X-ray source, an analysis area is 0.8 mm diameter, and take-off angle is 65°. The analyzable range (depth) is different depending on the composition of the primary grain. Usually, the range is 0.1 nm or more, and 50 nm or less. In particular, regarding the positive electrode active material, the range is usually 1 nm or more, and 10 nm or less. Therefore, in the present invention, the surface portion of the primary grain of the lithium transition metal based compound powder refers to the range measurable under this condition.

<Median size and 90 percent cumulative diameter ($D_{90}$)>

The median size of the lithium transition metal based compound powder according to the present invention is usually 2 $\mu$m or more, preferably 2.5 $\mu$m or more, more preferably 3 $\mu$m or more, further preferably 3.5 $\mu$m or more, and most preferably 4 $\mu$m or more, and usually 8 $\mu$m or less, preferably 7.5 $\mu$m or less, more preferably 7 $\mu$m or less, further preferably 6.5 $\mu$m or less, and most preferably 6 $\mu$m or less. If the median size is smaller than this lower limit, a problem may occur in the coating performance in formation of the positive electrode active material layer. If the median size exceeds the upper limit, deterioration of the battery performance may result.

Furthermore, the 90 percent cumulative diameter ($D_{90}$) of a secondary grain of the lithium transition metal based compound powder according to the present invention is usually 15 $\mu$m or less, preferably 12 $\mu$m or less, more preferably 10 $\mu$m or less, and most preferably 8 $\mu$m or less, and usually 3 $\mu$m or more, preferably 4 $\mu$m or more, more preferably 5 $\mu$m or more, and most preferably 6 $\mu$m or more. If the 90 percent cumulative diameter ($D_{90}$) exceeds the above-described upper limit, deterioration of the battery performance may result. If the 90 percent cumulative diameter ($D_{90}$) is smaller than the lower limit, a problem may occur in the coating performance in formation of the  positive electrode active material layer.

Incidentally, in the present invention, the median size serving as an average grain size and the 90 percent cumulative diameter ($D_{90}$) are measured with a known laser diffraction/scattering grain size distribution measuring apparatus, where the refractive index is set at 1.24 and the reference of grain size is on a volume basis. In the present invention, a 0.1 percent by weight sodium hexametaphosphate aqueous solution is used as a dispersion medium used in the measurement, and measurement is conducted after 5 minutes of ultrasonic dispersion (output 30W, frequency 22.5 kHz).

<Average primary grain size>

The average size (average primary grain size) of the lithium transition metal based compound powder according to the present invention is not specifically limited. However, the lower limit is preferably 0.1 $\mu$m or more, more preferably 0.2 $\mu$m or more, and most preferably 0.3 $\mu$m or more, and the upper limit is preferably 2 $\mu$m or less, more preferably 1.5 $\mu$m or less, further preferably 1 $\mu$m or less, and most preferably 0.9 $\mu$m or less. If the average primary grain size exceeds the above-described upper limit, the powder filling performance is adversely affected, and the  specific surface area is reduced. Consequently, there is a possibility that the battery performance, e.g., a rate characteristic and an output characteristic, may deteriorate. If the average primary grain size is smaller than the above-described lower limit, the crystal is undeveloped and, therefore, problems may occur in that, for example, reversibility of charge and discharge becomes poor.

The average primary grain size in the present invention refers to an average size observed with a scanning electron microscope (SEM) and can be determined as an average value of about 10 to 30 primary grains by using a SEM image magnified by 30,000 times.

<BET specific surface area>

Furthermore, the BET specific surface area of the lithium transition metal based compound powder according to the present invention is usually 0.5 m$^2$/g or more, preferably 0.6 m$^2$/g or more, further preferably 0.8 m$^2$/g or more, and most preferably 1.0 m$^2$/g or more, and usually 3 m$^2$/g or less, preferably 2.8 m$^2$/g or less, further preferably 2.5 m$^2$/g or less, and most preferably 2.0 m$^2$/g or less. If the BET specific surface area is smaller than this range, the battery performance deteriorates easily. If the BET specific surface area is larger than this range, the bulk density does not increase easily and a problem may occur in the coating performance in formation of the positive electrode active material.

The BET specific surface area can be measured with a known BET powder specific surface area measuring apparatus. In the present invention, AMS8000 Automatic powder specific surface area measuring apparatus: produced by OHKURA RIKEN CO., LTD., was used, nitrogen was used as an adsorption gas, helium was used as a carrier gas, and the measurement was conducted by a BET single point method based on a continuous flow method. Specifically, a powder sample was heat-deaerated with a mixed gas at a temperature of 150°C. Then, cooling is conducted to a liquid nitrogen temperature so that the mixed gas was adsorbed. Thereafter, the temperature of this was raised to room temperature with water and, thereby, the adsorbed nitrogen was desorbed. The amount thereof was detected with a thermal conductivity detector and the specific surface area of the sample was calculated therefrom.

<Pore characteristics based on mercury penetration method>

Preferably, the lithium transition metal based compound powder for a lithium secondary battery positive electrode material according to the present invention satisfies specific condition in a measurement based on a mercury penetration method.

The mercury penetration method adopted for an evaluation of the lithium transition metal based compound powder according to the present invention will be described below.

The mercury penetration method is a technique in which mercury is allowed to penetrate into pores of a sample, e.g., porous grains, while a pressure is applied, so as to obtain information, e.g., a specific surface area and pore size distribution, from the relationship between the pressure and the amount of mercury penetration.

Specifically, the inside of a container including a sample is evacuated and, thereafter, the inside of the container is filled with mercury. Since mercury has a high surface tension, mercury does not penetrate pores of the sample surface on an "as-is" basis. However, when a pressure is applied to mercury and the pressure is gradually increased, mercury gradually penetrates the pores sequentially from large-size pores to small-size pores. A mercury penetration curve indicating the relationship between the pressure applied to mercury and the amount of mercury penetration is obtained by detecting changes in a liquid level of mercury (that is, the amount of mercury penetration into pores) while the pressure is increased continuously.

Here, the shape of a pore is assumed to be cylindrical, and when the radius thereof is represented by r, the surface tension of mercury is represented by $\delta$, and the contact angle is represented by $\theta$, the magnitude in a direction of pushing mercury out of the pore is represented by $-2\pi r\delta(\cos\theta)$ (when $\theta > 90°$, this takes on a positive value). Furthermore, the magnitude of a force in a direction of pushing mercury into the pore at a pressure of P is represented by $\pi r^2 P$. Therefore, Mathematical expression (1) and Mathematical expression (2), as described below, are derived on the basis of a balance between these forces.

$$-2\pi r\delta(\cos\theta) = \pi r^2 P \quad \cdots (1)$$

$$Pr = -2\delta(\cos\theta) \quad \cdots (2)$$

Regarding mercury, in general, the value of surface tension = about 480 dyn/cm and the value of contact angle = about 140° are used frequently. In the case where these values are used, the radius of pore, into which mercury is penetrated at a pressure of P, is represented by Mathematical expression (3) as described below.

[Mathematical formula 1]

$$r\,(nm) = \frac{7.5 \times 10^8}{P\,(Pa)} \quad \cdots (3)$$

That is, since there is an interrelation between the pressure P applied to mercury and the radius r of the pore, into which mercury is penetrated, a pore distribution curve indicating the relationship between the dimension of the pore radius of the sample and the volume thereof can be obtained on the basis of the resulting mercury penetration curve. For example, when the pressure P is changed from 0.1 MPa to 100 MPa, the measurement can be conducted with respect to the pores within the range of about 7,500 nm to about 7.5 nm.

Regarding the rough measurement limit of the pore radius by the mercury penetration method, the lower limit is about 2 nm or more, and the upper limit is about 200 $\mu$m or less. Therefore, it can be said that the mercury penetration method is suitable for the analysis of the pore distribution in a relatively large pore radius range as compared with a nitrogen adsorption method described later.

The measurement by the mercury penetration method can be conducted by using an apparatus, e.g., a mercury porosimeter. Specific examples of mercury porosimeters include AutoPore produced by Micromeritics and PoreMaster produced by Quantachrome.

Regarding the lithium transition metal based compound powder according to the present invention, it is preferable that the amount of mercury penetration is 0.4 cm$^3$/g or more, and 1.5 cm$^3$/g or less during pressurization from a pressure of 3.86 kPa to 413 MPa in the mercury penetration curve based on the mercury penetration method. The amount of mercury penetration is more preferably 0.45 cm$^3$/g or more, most preferably 0.5 cm$^3$/g or more, and more preferably 1.4 cm$^3$/g or less, further preferably 1.3 cm$^3$/g or less, and most preferably 1.2 cm$^3$/g or less. If the upper limit of this range is exceeded, voids become too much, and in the case where the lithium transition metal based compound powder according to the present invention is used as a positive electrode material, the filling factor of the positive electrode active material into a positive electrode plate is reduced and, thereby, the battery capacity is limited. On the other hand, if the amount is less than the lower limit of this range, voids between grains become too small and, therefore, in the case where a battery is produced while the lithium transition metal based compound powder according to the present invention is used as the positive electrode material, lithium diffusion between grains is inhibited and the load characteristics deteriorate.

Regarding the lithium transition metal based compound powders according to the present invention, in the case where the pore distribution curve is measured by the above-described mercury penetration method, usually, a specific main peak, as described below, appears.

In the present specification, the "pore distribution curve" refers to a plot, where the horizontal axis indicates the pore radius and the vertical axis indicates the value of a total pore volume per unit weight (usually 1 g) of pores having radii larger than or equal to the radius on the horizontal axis, the value of total pore volume being differentiated with respect to the logarithm of the pore radius. Usually, plotted points are bonded and represented as a graph. In particular, the pore distribution curve obtained by measuring the lithium transition metal based compound powder according to the present invention by the mercury penetration method is appropriately referred to as a "pore distribution curve according to the present invention" in the description hereafter.

Incidentally, in the present specification, a "main peak" refers to a largest peak among peaks included in the pore distribution curve. A "subpeak" refers to a peak other than the main peak included in the pore distribution curve.

In the present specification, a "peak top" refers to a point which takes on a largest coordinate value with respect to the vertical axis in each peak included in the pore distribution curve.

<Main peak>

Regarding a main peak included in the pore distribution curve according to the present invention, the peak top thereof is present at a pore radius within the range of usually 300 nm or more, more preferably 500 nm or more, and most preferably 700 nm or more, and usually 1,500 nm or less, preferably 1,200 nm or less, more preferably 1,000 nm or less, further preferably 980 nm or less, and most preferably 950 nm or less. If the upper limit of this range is exceeded, in the case where a battery is produced while the lithium transition metal based compound powder according to the present invention is used as the positive electrode material, lithium diffusion in the positive electrode material is inhibited or there is a shortage of conduction path, so that the load characteristics may deteriorate. On the other hand, if the pore radius is smaller than the lower limit of this range, in the case where a positive electrode is produced by using the lithium transition metal based compound powder according to the present invention, the amounts of required conductive material and binder increase, so that the filling factor of the active material into a positive electrode plate (collector of positive electrode) may be limited and, thereby, the battery capacity may be limited. Furthermore, as grains are made finer, in preparation of a paint, the mechanical property of a coating film becomes hard or brittle, peeling of the coating film may occur easily in a winding step during battery assembly.

Moreover, regarding a pore distribution curve according to the present invention, it is favorable that the pore volume related to the peak with a peak top present at a pore radius of 300 nm or more, and 1,500 nm or less is usually 0.3 cm$^3$/g or more, preferably 0.32 cm$^3$/g or more, more preferably 0.34 cm$^3$/g or more, and most preferably 0.35 cm$^3$/g or, and usually 0.8 cm$^3$/g or less, preferably 0.7 cm$^3$/g or less, more preferably 0.6 cm$^3$/g or less, and most preferably, 0.5 cm³/g or less. If the upper limit of this range is exceeded, voids become too much, and in the case where the lithium transition metal based compound powder according to the present invention is used as a positive electrode material, the filling factor of the positive electrode active material into a positive electrode plate is reduced and, thereby, the battery capacity may be limited. On the other hand, if the pore volume is less than the lower limit of this range, voids between grains become too small and, therefore, in the case where a battery is produced while the lithium transition metal based compound powder according to the present invention is used as the positive electrode material, lithium diffusion between secondary grains is inhibited and the load characteristics may deteriorate.

<Subpeak>

The pore distribution curve according to the present invention may have a plurality of subpeaks in addition to the above-described main peak. In particular, it is preferable to have subpeaks with peak tops present at pore radii within the range of 80 nm or more, and 300 nm or less.

In particular, in the case where a main peak with a peak top present at a pore radius of 400 nm or more, and 1,500 nm or less is included, it is preferable to have subpeaks with peak tops present at pore radii of 300 nm or more, and less than 400 nm.

Regarding a pore distribution curve according to the present invention, it is favorable that the pore volume related to the subpeak with a peak top present at a pore radius of 80 nm or more, and less than 300 nm is usually 0.01 cm³/g or more, preferably 0.02 cm³/g or more, more preferably 0.03 cm³/g or more, and most preferably 0.04 cm³/g or more, and usually 0.3 cm³/g or less, preferably 0.25 cm³/g or less, more preferably 0.20 cm³/g or less, and most preferably, 0.18 cm³/g or less. If the upper limit of this range is exceeded, voids between secondary grains become too much, and in the case where the lithium transition metal based compound powder according to the present invention is used as a positive electrode material, the filling factor of the positive electrode active material into a positive electrode plate is reduced and, thereby, the battery capacity may be limited. On the other hand, if the pore volume is less than the lower limit of this range, voids between secondary grains become too small and, therefore, in the case where a battery is produced while the lithium transition metal based compound powder according to the present invention is used as the positive electrode material, lithium diffusion between secondary grains is inhibited and the load characteristics may deteriorate.

In the present invention, preferable examples include a lithium transition metal based compound powder for a lithium secondary battery positive electrode material exhibiting the pore distribution curves, based on the mercury penetration method, having at least one main peak with a peak top present at a pore radius of 300 nm or more, and 1,500 nm or less and having subpeaks with peak tops present at pore radii of 80 nm or more, and less than 300 nm.

Furthermore, preferable examples also include a lithium transition metal based compound powder for a lithium secondary battery positive electrode material exhibiting the pore distribution curves, based on the mercury penetration method, having at least one main peak with a peak top present at a pore radius of 400 nm or more, and 1,500 nm or less and having subpeaks with peak tops present at pore radii of 300 nm or more, and less than 400 nm.

<Bulk density>

The bulk density of the lithium transition metal based compound powder according to the present invention is usually 1.2 g/cc or more, preferably 1.3 g/cc or more, more preferably 1.4 g/cc or more, and most preferably 1.5 g/cc, and usually 2.0 g/cc or less, preferably 1.9 g/cc or less, more preferably 1.8 g/cc or less, and most preferably 1.7 g/cc or less. It is preferable for the powder filling performance and the improvement in electrode density that the bulk density exceeds this upper limit. On the other hand, the specific surface area may become too small and the battery performance may deteriorate. If the bulk density is smaller than this lower limit, the powder filling performance and the electrode preparation may be adversely affected.

In the present invention, the bulk density is determined as a powder packing density (tap density) g/cc when 5 to 10 g of lithium transition metal based compound powder is put into a 10 ml glass graduated cylinder and tapping is conducted 200 times at a stroke of about 20 mm.

<Volume resistivity>

Regarding the volume resistivity of the lithium transition metal based compound powder according to the present invention when compaction is conducted at a pressure of 40 MPa, the lower limit is preferably $1 \times 10^3$ Ω·cm or more, more preferably $1 \times 10^4$ Ω·cm or more, further preferably $1 \times 10^5$ Ω·cm or more, and most preferably $5 \times 10^5$ Ω·cm or more. The upper limit is preferably $1 \times 10^7$ Ω·cm or less, more preferably $8 \times 10^6$ Ω·cm or less, further preferably $5 \times 10^6$ Ω·cm or less, and most preferably $3 \times 10^6$ Ω·cm or less. If the volume resistivity exceeds this upper limit, in the case where a battery is produced, the load characteristics may deteriorate. On the other hand, if the volume resistivity is less than this lower limit, in the case where a battery is produced, the safety and the like may deteriorate.

In the present invention, the volume resistivity of the lithium transition metal based compound powder is a volume resistivity measured with a four-probe·ring electrode, where a distance between electrodes is 5.0 mm, an electrode radius is 1.0 mm, a sample radius is 12.5 mm, and an applied voltage limiter is set at 90 V, in the state in which a lithium transition metal based compound powder is compacted at a pressure of 40 MPa. For example, the measurement of the volume resistivity can be conducted with respect to a powder under a predetermined pressure with a probe unit for a powder by using a powder resistance measuring apparatus (for example, Loresta GP Powder Resistivity Measuring System produced by Dia Instruments Co., Ltd.).

<Crystal structure>

The lithium transition metal based compound powder according to the present invention contains a lithium nickel manganese cobalt based composite oxide, which is configured to include a crystal structure belonging to a layer structure, as a primary component.

Here, the layer structure will be described in further detail. Examples of typical crystal systems having the layer structure include crystal systems, such as $LiCoO_2$ and $LiNiO_2$, belonging to $\alpha$-$NaFeO_2$ type. They are hexagonal systems and belong to a space group

[Mathematical formula 2]

$$R\overline{3}m$$

(hereafter may be expressed as a "layer R(-3)m structure) on the basis of the symmetry thereof.

However, layer $LiMeO_2$ is not limited to the layer R(-3)m structure. Besides this, $LiMnO_2$, which is so-called layer Mn, is an orthorhombic system and is a layer compound of a space group Pm2m. Furthermore, $Li_2MnO_3$, which is a so-called 213 phase, can be expressed as $Li[Li_{1/3}Mn_{2/3}]O_2$ and is also a layer compound, in which a Li layer, a $[Li_{1/3}Mn_{2/3}]$ layer, and an oxygen layer are laminated, although it is a monoclinic system having a space group C2/m structure.

<Composition>

Furthermore, the lithium-containing transition metal compound powder according to the present invention is a lithium transition metal based compound powder represented by Composition formula (I) described below.

$$LiMO_2 \qquad (I)$$

In the formula, M represents elements composed of Li, Ni, and Mn or Li, Ni, Mn, and Co, a Mn/Ni molar ratio is usually 0.1 or more, preferably 0.3 or more, more preferably 0.5 or more, further preferably 0.6 or more, still preferably 0.7 or more, still further preferably 0.8 or more, and most preferably 0.9 or more, and usually 5 or less, preferably 4 or less, more preferably 3 or less, further preferably 2.5 or less, and most preferably 1.5 or less. A Co/(Mn + Ni + Co) molar ratio is usually 0 or more, preferably 0.01 or more, more preferably 0.02 or more, further preferably 0.03 or more, and most preferably 0.05 or more, and usually 0.35 or less, preferably 0.20 or less, more preferably 0.15 or less, further preferably 0.10 or less, and most preferably 0.099 or less. A Li molar ratio in M is usually 0.001 or more, preferably 0.01 or more, more preferably 0.02 or more, further preferably 0.03 or more, and most preferably 0.05 or more, and usually 0.2 or less, preferably 0.19 or less, more preferably 0.18 or less, further preferably 0.17 or less, and most preferably 0.15 or less.

In Composition formula (I) described above, the atomic ratio representing the amount of oxygen is described as 2 for convenience, but somewhat non-stoichiometry is allowable. In the case where the non-stoichiometry is present, the atomic ratio of oxygen is within the range of usually $2 \pm 0.2$, preferably within the range of $2 \pm 0.15$, more preferably within the range of $2 \pm 0.12$, further preferably within the range of $2 \pm 0.10$, and particularly preferably within the range of $2 \pm 0.05$.

Preferably, the lithium transition metal based compound powder according to the present invention has been fired by conducting high temperature firing in an oxygen-containing gas atmosphere in order to enhance the crystallinity of the positive electrode active material. In particular, regarding the lithium nickel manganese cobalt based composite oxide having the composition represented by Composition formula (I) described above, the lower limit of the firing temperature is usually 900°C or higher, preferably 920°C or higher, more preferably 940°C or higher, further preferably 950°C or higher, and most preferably 960°C or higher. The upper limit is 1,200°C or lower, preferably 1,175°C or lower, further preferably 1,150°C or lower, and most preferably 1,125°C or lower. If the firing temperature is too low, heterogeneous phases are also present, the crystal structure is not developed, and the lattice strain increases. Furthermore, the specific surface area becomes two large. Conversely, if the firing temperature is too high, primary grains grow excessively, sintering between grains proceeds excessively, and the specific surface area becomes too small.

<Carbon content C>

The value of carbon content C (percent by weight) of the lithium transition metal based compound powder according to the present invention is usually 0.005 percent by weight or more, preferably 0.01 percent by weight or more, further preferably 0.015 percent by weight or more, and most preferably 0.02 percent by weight or more, and usually 0.25 percent by weight or less, preferably 0.2 percent by weight or less, more preferably 0.15 percent by weight or less, further preferably 0.1 percent by weight or less, and most preferably 0.07 percent by weight or less. If the carbon content is less than this lower limit, the battery performance may deteriorate. If the carbon content exceeds the upper limit, in the case where a battery is produced, blistering due to gas generation may increase and the battery performance may deteriorate.

In the present invention, the carbon content C of the lithium nickel manganese cobalt based composite oxide powder is determined through measurement by an infrared absorption method after combustion in an oxygen stream (high frequency furnace type), as shown in an item of examples described later.

Incidentally, the carbon content of the lithium nickel manganese cobalt based composite oxide powder determined through carbon analysis described later can be assumed to indicate information on the amount of adhesion of carbonate compound, particularly lithium carbonate. This is because the value based on the assumption that the entire amount of carbon determined through carbon analysis is derived from carbonate ions almost agrees with the carbonate ion concentration analyzed through ion chromatography.

On the other hand, in the case where a treatment for combination with electrically conductive carbon is conducted as a technique to enhance electron conductivity, the amount of C exceeding the above-described specific range may be detected. However, the C value in the case where such a treatment is conducted is not limited to the above-described specific range.

<Favorable composition>

Regarding the lithium transition metal based composite oxide powder for a lithium secondary battery positive electrode material, it is particularly preferable that the atomic configuration in the M site of Composition formula (I) described above is represented by Formula (II) or Formula (II') described below.

$$M = Li_{z/(2+z)}\{(Ni_{(1+y)/2}Mn_{(1-y)/2})_{1-x}CO_x\}_{2/(2+z)}) \qquad (II)$$

(in Formula (II) described above,

$$0 \leq x \leq 0.1$$

$$-0.1 \leq y \leq 0.1$$

$$(1 - x)(0.05 - 0.98y) \leq z \leq (1 - x)(0.20 - 0.88y))$$

$$M-Li_{z'/(2+z')}\{(Ni_{(1+y')/2}Mn_{(1-y')/2})_{1-x'}CO_{x'}\}_{2/(2+z')} \qquad (II')$$

(in Composition formula (II'),

$$0.1 < x' \leq 0.35$$

$$-0.1 \leq y' \leq 0.1$$

$$(1 - x')(0.02 - 0.98y') \leq z' \leq (1 - x')(0.20 - 0.88y'))$$

In Formula (II) described above, the value of x is usually 0 or more, preferably 0.01 or more, more preferably 0.02 or more, further preferably 0.03 or more, and most preferably 0.04 or more, and usually 0.1 or less, preferably 0.099 or less, and most preferably 0.098 or less.

The value of y is usually -0.1 or more, preferably -0.05 or more, more preferably -0.03 or more, and most preferably -0.02 or more, and usually 0.1 or less, preferably 0.05 or less, more preferably 0.03 or less, and most preferably 0.02 or less.

The value of z is usually (1 - x)(0.05 - 0.98y) or more, preferably (1 - x)(0.06 - 0.98y) or more, more preferably (1 - x)(0.07 - 0.98y) or more, further preferably (1 - x)(0.08 - 0.98y) or more, and most preferably (1 - x)(0.10 - 0.98y) or more, and usually (1 - x)(0.20 - 0.88y) or less, preferably (1 - x)(0.18 - 0.88y) or less, more preferably, (1 - x)(0.17 - 0.88y), and most preferably (1 - x)(0.16 - 0.88y) or less. If z is less than this lower limit, the electrical conductivity deteriorates. If z exceeds the upper limit, deterioration of the performance of the lithium secondary battery by using this may result, for example, the amount of substitution for the transition metal sites increases excessively so as to reduce the battery capacity. Furthermore, if z is too large, the carbon dioxide absorbency of the active material powder increases and, thereby, carbon dioxide in the air is absorbed easily. As a result, it is estimated that the carbon content increases.

In Formula (II') described above, the value of x' is usually 0.1 or more, preferably 0.15 or more, more preferably 0.2 or more, further preferably 0.25 or more, and most preferably 0.30 or more, and usually 0.35 or less, preferably 0.345 or less, and most preferably 0.34 or less.

The value of y' is usually -0.1 or more, preferably -0.05 or more, more preferably -0.03 or more, and most preferably -0.02 or more, and usually 0.1 or less, preferably 0.05 or less, more preferably 0.03 or less, and most preferably 0.02 or less.

The value of z' is usually (1 - x')(0.02 - 0.98y') or more, preferably (1 - x')(0.03 - 0.98y') or more, more preferably (1 - x')(0.04 - 0.98y') or more, and most preferably (1 - x')(0.05 - 0.98y') or more, and usually (1 - x')(0.20 - 0.88y') or less, preferably (1 - x')(0.18 - 0.88y') or less, more preferably, (1 - x')(0.17 - 0.88y') or less, and most preferably (1 - x')(0.16 - 0.88y') or less. If z' is less than this lower limit, the electrical conductivity deteriorates. If z' exceeds the upper limit, deterioration of the performance of the lithium secondary battery by using this may result, for example, the amount of substitution for the transition metal sites increases excessively so as to reduce the battery capacity. Furthermore, if z' is too large, the carbon dioxide absorbency of the active material powder increases and, thereby, carbon dioxide in the air is absorbed easily. As a result, it is estimated that the carbon content increases.

In the above-described composition range of Formulae (II) and (II'), as z and z' approach the lower limits, which are stoichiometric, the rate characteristic and the output characteristic tend to become low when a battery is produced. Conversely, as z and z' approach the upper limits, the rate characteristic and the output characteristic tend to become high when a battery is produced, whereas the capacity tends to become low. Furthermore, as z and z' approach the lower limits, that is, a manganese/nickel atomic ratio becomes small, the capacity is ensured at a low charge voltage, whereas the cycle characteristic and the safety of a battery with the setting of a high charge voltage tend to become low. Conversely, as y and y' approach the upper limits, the cycle characteristic and the safety of a battery with the setting of a high charge voltage tend to become improved, whereas the discharge capacity, the rate characteristic, and the output characteristic tend to become low. Moreover, as x and x' approach the lower limits, the load characteristics, e.g., the rate characteristic and the output characteristic, tend to become low when a battery is produced. Conversely, as x and x' approach the higher limits, the rate characteristic and the output characteristic tend to become high when a battery is produced. However, if this upper limit is exceeded, in the case where a high charge voltage is set, the cycle characteristic and the safety become low  and the raw material cost becomes high. It is an important constituent feature of the present invention to regulate the above-described composition parameters x, x', y, y', z, and z' within the specific range.

Here, a chemical meaning of the Li composition (z, z' and x, x') in the lithium nickel manganese cobalt based composite oxide, that is, a favorable composition of the lithium transition metal based compound powder according to the present invention, will be described below in further detail.

As described above, the layer structure is not necessarily limited to the R(-3)m structure, but it is preferable from the viewpoint of electrochemical performance that the layer structure can belong to the R(-3)m structure.

The above-described x, x', y, y', z, and z' of the composition formula of the lithium transition metal based compound are determined through calculation by analyzing individual transition metals and Li with an inductively coupled plasma atomic emission spectroscope (ICP-AES) and determining the ratio of Li/Ni/Mn/Co.

From the structural viewpoint, it is believed that Li related to z and z' is introduced in the same transition metal site by substitution. Here, according to Li related to z and z', the average valence of Ni becomes larger than divalent (trivalent Ni is generated) on the basis of a principle of charge neutrality. Since z and z' increase the average valence of Ni, they serve as indices of the valence of Ni (proportion of Ni(III)).

When the valence (m) of Ni along with changes in z and z' is calculated from Composition formulae described above,

$$m = 2\left[2 - \frac{1 - x - z}{(1-x)\ (1+y)}\right]$$

$$m = 2\left[2 - \frac{1 - x' - z'}{(1-x')\ (1+y')}\right]$$

are derived on the assumption that the valence of Co is trivalent and the valence of Mn is tetravalent. This calculation result indicates that the valence of Ni is not determined on the basis of merely z and z', but is a function of x, x' and y, y'. When z, z' = 0 and y, y' = 0, the valence of Ni remains divalent regardless of the values of x, x'. In the case where z, z' become negative values, it is indicated that the amount of Li contained in the active material is less than a stoichiometric amount, and as for a too large negative value, the effects of the present invention may not be exerted. On the other hand, it is indicated that even when the z, z' values are equal, the Ni-rich (y, y' values are large) and/or Co-rich (x, x' values are large) composition exhibits higher valence of Ni. As a result, in the case where such a composition is used for a battery, the rate characteristic and the output characteristic become high, whereas the capacity is reduced easily. Consequently, it can be said more preferable that the upper limit and the lower limit of z, z' values are specified as functions of x, x' and y, y'.

Furthermore, in the case where the x value is within the range of $0 \leq x \leq 0.1$ in which the amount of Co is small, the cost is reduced and, in addition, in the use as a lithium secondary battery designed to be charged at a high charge potential, the charge-discharge capacity, the cycle characteristic, and the safety are improved.

On the other hand, in the case where the x' value is within the range of $0.10 \leq x' \leq 0.35$ in which the amount of Co is relatively large, in the use as a lithium secondary battery, the charge-discharge capacity, the cycle characteristic, the load characteristics, and the safety are improved in a balanced manner.

<Powder X-ray diffraction peak>

In the present invention, the lithium nickel manganese cobalt based composite oxide powder having a composition satisfying Composition formulae (I) and (II) described above is characterized in that in the powder X-ray diffraction pattern by using CuK$\alpha$ rays, when the full width at half maximum of a (110) diffraction peak present at a diffraction angle 2$\theta$ in the vicinity of 64.5° is assumed to be FWHM(110), the FWHM(110) is within the range of $0.01 \leq$ FWHM(110) $\leq 0.3$.

In general, the full width at half maximum of an X-ray diffraction peak is used as a yardstick to measure the crystallinity. Therefore, the present inventors conducted intensive research on the interrelation between the crystallinity and the battery performance. As a result, it was found that good battery performance was exhibit in the case where the value of the full width at half maximum of a (110) diffraction peak present at a diffraction angle 2$\theta$ in the vicinity of 64.5° was within a specific range.

In the present invention, FWHM(110) is usually 0.01 or more, preferably 0.05 or more, more preferably 0.10 or more, further preferably 0.12 or more, and most preferably 0.14 or more, and usually 0.3 or less, preferably 0.28 or less, more preferably 0.26 or less, further preferably 0.24 or less, and most preferably 0.22 or less.

Furthermore, in the present invention, in powder X-ray diffractometry by using CuK$\alpha$ rays of the lithium nickel manganese cobalt based composite oxide powder having a composition satisfying Composition formulae (I) and (II) described above, it is preferable that regarding a (018) diffraction peak present at a diffraction angle 2$\theta$ in the vicinity of 64°, a (110) diffraction peak present in the vicinity of 64.5°, and a (113) diffraction peak present in the vicinity of 68°, no diffraction peak originated from a heterogeneous phase is present on the side at an angle higher than the angle of each peak top, or in the case where diffraction peaks originated from heterogeneous phases are present, the ratio of the integrated intensity of heterogeneous phase peaks to that of the diffraction peak of each intrinsic crystal phase is within the following range.

$$0 \leq I_{018}{}^*/I_{018} \leq 0.20$$

$$0 \leq I_{110}{}^*/I_{110} \leq 0.25$$

$$0 \leq I_{113}{}^*/I_{113} \leq 0.30$$

(Here, $I_{018}$, $I_{110}$, and $I_{113}$ represent integrated intensities of the (018), (110), and (113) diffraction peaks, respectively, and $I_{018}{}^*$, $I_{110}{}^*$, and $I_{113}{}^*$ represent integrated intensities of the diffraction peaks originated from heterogeneous phases and observed on the sides at angles higher than the angles of peak tops of the (018), (110), and (113) diffraction peaks, respectively.)

Incidentally, the details of a causative substance of the diffraction peak originated from this heterogeneous phase is not certain, and if the heterogeneous phase is included, the rate characteristic, the cycle characteristic, and the like deteriorate when a battery is produced. Consequently, the diffraction peaks may include diffraction peaks to the extent that does not adversary affect the battery performance according to the present invention. However, it is preferable that the proportion is within the above-described range. The ratio of the integrated intensity of diffraction peaks originated from heterogeneous phases to that of each diffraction peak is usually $I_{018}{}^*/I_{018} \leq 0.20$, $I_{110}{}^*/I_{110} \leq 0.25$, and $I_{113}{}^*/I_{113} \leq 0.30$, preferably $I_{018}{}^*/I_{018} \leq 0.15$, $I_{110}{}^*/I_{110} \leq 0.20$, and $I_{113}{}^*/I_{113} \leq 0.25$, more preferably $I_{018}{}^*/I_{018} \leq 0.10$, $I_{110}{}^*/I_{110} \leq 0.15$, $I_{113}{}^*/I_{113} \leq 0.20$, further preferably $I_{018}{}^*/I_{018} \leq 0.05$, $I_{110}{}^*/I_{110} \leq 0.10$, $I_{113}{}^*/I_{113} \leq 0.15$, and most preferably, there is no diffraction peak originated from the heterogeneous phase.

<Reason that lithium transition metal based compound powder according to the present invention exerts the above-described effects>

The reason that lithium transition metal based compound powder according to the present invention exerts the above-described effects is believed as described below.

That is, it is estimated as follows. Regarding the lithium transition metal based compound powder according to the present invention, crystalline secondary grains maintain spherical skeletons, the amount of mercury penetration during pressurization in a mercury penetration curve is large, and pore volumes between crystal grains are large. Therefore, in the case where a battery is produced by using this, it is possible to increase the contact area between the positive electrode active material surface and an electrolytic solution. In addition, the surface state becomes suitable for improving the load characteristics (in particular, low-temperature output characteristic), the crystallinity is developed to a high extent, and furthermore, the ratio of presence of heterogeneous phase is reduced to a very low level. As a result, excellent balance in characteristics and excellent powder handleability required for the positive electrode active material can be achieved.

<Method for manufacturing lithium transition metal based compound powder for lithium secondary battery positive electrode material>

A method for manufacturing the lithium transition metal based compound powder according to the present invention is not limited to a specific manufacturing method. Production is conducted favorably by a method for manufacturing a lithium transition metal based compound powder for a lithium secondary battery positive electrode material according to the present invention including the steps of pulverizing a lithium compound, at least one type of transition metal compound selected from V, Cr, Mn, Fe, Co, Ni, and Cu, Additive 1, and Additive 2 in a liquid medium and preparing a slurry in which they are dispersed homogeneously in a slurry preparation step, spray-drying the resulting slurry in a spray-drying step, and firing the resulting spray-dried substance in a firing step.

For example, an explanation will be made with reference to a lithium nickel manganese cobalt based composite oxide powder. A slurry in which a lithium compound, a nickel compound, a manganese compound, a cobalt compound, Additive 1, and Additive 2 are dispersed in a liquid medium is spray-dried, and the resulting spray-dried substance is fired in an oxygen-containing gas atmosphere, so that the production can be conducted.

The method for manufacturing a lithium transition metal based compound powder according to the present invention will be described below in detail with reference to the method for manufacturing a lithium nickel manganese cobalt based composite oxide powder which is a favorable form of the present invention.

<Slurry preparation step>

In production of a lithium transition metal based compound powder by a method according to the present invention, among raw material compounds used for preparation of a slurry, examples of lithium, compounds include $Li_2CO_3$, $LiNO_3$, $LiNO_2$, LiOH, $LiOH \cdot H_2O$, LiH, LiF, LiCl, LiBr, LiI, $CH_3OOLi$, $Li_2O$, $Li_2SO_4$, Li dicarboxylate, Li citrate, fatty acid lithium, and alkyllithium. Among these lithium compounds, lithium compounds which do not contain a nitrogen atom, a sulfur atom, nor a halogen atom are preferable because harmful substances, e.g., $SO_x$ and $NO_x$, are not generated during a firing treatment. Furthermore, compounds in which voids are formed easily through, for example, generation of decomposition gases during firing and generation of decomposition gases in secondary grains of spray-dried powder, are preferable. In consideration of these points, $Li_2CO_3$, LiOH, and $LiOH-H_2O$ are preferable, and in particular $Li_2CO_3$ is preferable. One type of these lithium compounds may be used alone or at least two types may be used in combination.

Examples of nickel compounds include $Ni(OH)_2$, NiO, NiOOH, $NiCO_3$, $2NiCO_3 \cdot 3Ni(OH)_2 \cdot 4H_2O$, $NiC_2O_4 \cdot 2H_2O$, $Ni(NO_3)_2 \cdot 6H_2O$, $NiSO_4 \cdot 6H_2O$, fatty acid nickel, and nickel halide. Among them, nickel compounds, such as $Ni(OH)_2$, NiO, NiOOH, $NiCO_3$, $2NiCO_3 \cdot 3Ni(OH)_2 \cdot 4H_2O$, and $NiC_2O_4 \cdot 2H_2O$ are preferable because harmful substances, e.g., $SO_x$ and $NO_x$, are not generated during a firing treatment. Furthermore, $Ni(OH)_2$, NiO, NiOOH, and $NiCO_3$ are preferable from the viewpoint of availability as inexpensive industrial raw materials and from the viewpoint of high reactivity. More-over, $Ni(OH)_2$, NiOOH, and $NiCO_3$ are particularly preferable from the viewpoint that voids are formed in secondary grains of spray-dried powder easily through, for example, generation of decomposition gases during firing. One type of these nickel compounds may be used alone or at least two types may be used in combination.

Examples of manganese compounds include manganese oxides, e.g., $Mn_2O_3$, $MnO_2$, and $Mn_3O_4$, manganese salts, e.g., $MnCO_3$, $Mn(NO_3)_2$, $MnSO_4$, manganese acetate, manganese dicarboxylate, manganese citrate, and fatty acid manganese, oxyhydroxides, and halides, e.g., manganese chloride. Among these manganese compounds, $MnO_2$, $Mn_2O_3$, $Mn_3O_4$, and $MnCO_3$ are preferable because gases, e.g., $SO_x$ and $NO_x$, are not generated during a firing treatment and, furthermore, there is ease of availability as inexpensive industrial raw materials. One type of these manganese compounds may be used alone or at least two types may be used in combination.

Examples of cobalt compounds include $Co(OH)_2$, CoOOH, CoO, $Co_2O_3$, $Co_3O_4$, $Co(OCOCH_3)_2 \cdot 4H_2O$, $CoCl_2$, $Co(NO_3)_2 \cdot 6H_2O$, $Co(SO_4)_2 \cdot 7H_2O$, and $CoCO_3$. Most of all, $Co(OH)_2$, CoOOH, CoO, $Co_2O_3$, $Co_3O_4$, and $CoCO_3$ are preferable because harmful substances, e.g., $SO_x$ and $NO_x$, are not generated during a firing treatment, and $Co(OH)_2$ and CoOOH are further preferable from the viewpoint of industrial availability at low prices and high reactivity. In addition, $Co(OH)_2$, CoOOH, and $CoCO_3$ are particularly preferable from the viewpoint that voids are formed in secondary grains of spray-dried powder easily through, for example, generation of decomposition gases during firing. One type of these cobalt compounds may be used alone or at least two types may be used in combination.

Besides the above-described Li, Ni, Mn, and Co raw material compounds, it is possible to use a group of compounds for the purpose of introducing the above-described foreign elements by conducting substitution with the foreign elements and forming voids efficiently in secondary grains formed by spray-drying described later. The stage of addition of the compounds used here for the purpose of forming voids efficiently in secondary grains can be selected from one of before mixing of raw materials and after the mixing depending on the properties thereof. In particular, it is preferable that compounds which are decomposed easily by, for example, application of a mechanical shear stress because of a mixing step are added after the mixing step.

Additive 1 is as described above. Furthermore, Additive 2 is as described above.

A method for mixing the raw materials is not specifically limited and may be either a wet type or a dry type. Examples thereof include methods in which apparatuses, e.g., a ball mill, a vibration mill, and a beads mill, are used. The wet mixing, in which raw material compounds are mixed in a liquid medium, e.g., water or alcohol, is preferable because more homogeneous mixing can be conducted and, in addition, the reactivity of the mixture can be enhanced in a firing step.

The mixing time is different depending on the mixing method. However, it is enough that the raw materials are mixed homogeneously at a grain level. For example, as for the ball mill (wet type or dry type), the mixing time is usually about 1 hour to 2 days, and as for the beads mill (continuous wet method), the residence time is usually about 0.1 hour to 6 hours.

Incidentally, at the mixing stage of the raw materials, it is preferable that pulverization of the raw materials is conducted in combination with the mixing. Regarding the degree of pulverization, the grain sizes of the raw material grains after the pulverization serve as indices, and the average grain size (median size) is specified to be usually 0.4 $\mu$m or less, preferably 0.3 $\mu$m or less, further preferably 0.25 $\mu$m or less, and most preferably 0.2 $\mu$m or less. If the average grain size of the raw material grains after the pulverization is too large, the reactivity in the firing step deteriorates and, in addition, the composition does not become uniform easily. However, excessive reduction in grain size leads to an increase in pulverization cost. Therefore, it is enough that pulverization is conducted in such a way as to control the average grain size at usually 0.01 $\mu$m or more, preferably 0.02 $\mu$m or more, and further preferably 0.05 $\mu$m or more. Means for realizing such a degree of pulverization is not specifically limited, but a wet pulverization method is preferable. Specific examples thereof include DYNO-MILL.

In the present invention, the median size of pulverized grains in the slurry is measured with a known laser diffraction/scattering grain size distribution measuring apparatus, where the refractive index is set at 1.24 and the reference of grain size is set to be on a volume basis. In the present invention, a 0.1 percent by weight sodium hexametaphosphate aqueous solution was used as a dispersion medium used in a measurement and the measurement was conducted after 5 minutes of ultrasonic dispersion (output 30W, frequency 22.5 kHz). The median sizes of spray-dried substance described later were measured under the same condition except that the measurement were conducted after 0, 1, 3, and 5 minutes of ultrasonic dispersion, respectively.

<Spray-drying step>

After the wet mixing, a drying step is conducted by spray drying. This is favorable from the viewpoint of homogeneity and powder fluidity of the resulting grained substances, powder handleability, efficient production of dried grains, and the like.

<Spray-dried powder>

In the method for manufacturing a lithium transition metal based compound powder, e.g., the lithium nickel manganese cobalt based composite oxide powder, according to the present invention, the slurry obtained by wet-pulverizing the raw material compounds, Additive 1, and Additive 2 is spray-dried and, thereby, a powder in which primary grains are aggregated so as to form secondary grains is obtained. The spray-dried powder in which primary grains are aggregated so as to form secondary grains is a characteristic shape of the spray-dried powder according to the present invention. Examples of methods for identifying the shape include SEM observation and cross-sectional SEM observation.

The median size (here, the value measured without applying ultrasonic dispersion) of the powder obtained by spray-drying, which is a firing precursor of the lithium transition metal based compound powder, e.g., the lithium nickel manganese cobalt based composite oxide powder, according to the present invention is specified to be usually 10 $\mu$m or less, more preferably 9 $\mu$m or less, further preferably 8 $\mu$m or less, and most preferably 7 $\mu$m or less. However, extremely small grain size tends to be difficult to obtain and, therefore, the median size is usually 3 $\mu$m or more, preferably 4 $\mu$m or more, and more preferably 5 $\mu$m or more. In the case where grained substances are produced by the spray-drying method, the grain sizes thereof can be controlled by selecting the spraying type, the pressuring gas stream supply rate, the slurry supply rate, the drying temperature, and the like appropriately.

That is, in the production of the lithium nickel manganese cobalt based composite oxide powder by spray-drying the slurry in which, for example, a lithium compound, a nickel compound, a manganese compound, a cobalt compound, Additive 1, and Additive 2 are dispersed in a liquid medium and, thereafter, firing the resulting powder, spray drying is conducted under a condition in which the slurry viscosity V satisfies 50 cp $\leq$ V $\leq$ 4,000 cp and the gas liquid ratio G/S satisfies 500 $\leq$ G/S $\leq$ 10,000, where V (cp) represents a slurry viscosity, S (L/min) represents an amount of supply of slurry, and G (L/min) represents an amount of supply of gas in the spray drying.

If the slurry viscosity V (cp) is too low, the powder in which primary grains are aggregated so as to form secondary grains may become difficult to obtain. If the slurry viscosity is too high, a feed pump may go out of order or a nozzle may be clogged. Therefore, regarding the slurry viscosity V (cp), the lower limit value is usually 50 cp or more, preferably 100 cp or more, further preferably 300 cp or more, and most preferably 500 cp, and the upper limit is usually 4,000 cp or less, preferably 3,500 cp or less, further preferably 3,000 cp or less, and most preferably 2,500 cp or less.

If the gas liquid ratio G/S is smaller than the above-described lower limit, for example, the secondary grain size may become coarse, and the drying performance may deteriorate. If the upper limit is exceeded, the productivity may deteriorate. Therefore, regarding the gas liquid ratio G/S, the lower limit is usually 500 or more, preferably 800 or more, further preferably 1,000 or more, and most preferably 1,500 or more. The upper limit is usually 10,000 or less, preferably 9,000 or less, further preferably 8,000 or less, and most preferably 7,500 or less.

The amount S of supply of slurry and the amount G of supply of gas are set appropriately on the basis of the viscosity of slurry subjected to spray drying, specifications of a spray-drying apparatus to be used, and the like.

In the method of the present invention, it is enough that the spray drying is conducted while the above-described slurry viscosity V (cp) is satisfied and the amount of supply of slurry and the amount of supply of gas suitable for the specification of the spray-drying apparatus to be used are controlled so as to satisfy the above-described range of gas liquid ratio G/S. The other conditions are set appropriately in accordance with the type of the apparatus to be used and the like and it is preferable that the following conditions are selected.

That is, it is favorable that the spray drying of the slurry is conducted at usually 50°C or higher, preferably 70°C or higher, further preferably 120°C or higher, and most preferably 140°C or higher, and usually 300°C or lower, preferably 250°C or lower, further preferably 200°C or lower, and most preferably 180°C or lower. If this temperature is too high, there is a possibility that most of the resulting granulated grains have a hollow structure and the packing density of the powder may be reduced. On the other hand, if the temperature is too low, powder adhesion·clogging problems and the like due to dew condensation at a powder outlet portion may occur.

Furthermore, the spray-dried powder of the lithium transition metal based compound powder, e.g., the lithium nickel manganese cobalt based composite oxide powder, according to the present invention is characterized in that the cohesive force between primary grains is small. This can be ascertained by examining changes in median size along with the ultrasonic dispersion. Here, the upper limit of the median size of the spray-dried grains measured after being subjected to 5 minutes of ultrasonic dispersion "Ultra Sonic" (output 30W, frequency 22.5 kHz) is usually 4 $\mu$m or less, preferably 3.5 $\mu$m or less, more preferably 3 $\mu$m or less, further preferably 2.5 $\mu$m or less, and most preferably 2 $\mu$m or less. The lower limit is usually 0.01 $\mu$m or more, preferably 0.05 $\mu$m or more, more preferably 0.1 $\mu$m or more, and most preferably 0.2 $\mu$m or more. Regarding a lithium transition metal based compound powder fired by using the spray-dried grains having a median size after the ultrasonic dispersion larger than the above-described value, voids between grains are small and the load characteristics are not improved. On the other hand, regarding a lithium transition metal based compound powder fired by using the spray-dried grains having a median size after the ultrasonic dispersion smaller than the above-described value, voids between grains become too large and problems may occur in that the bulk density is reduced, the coating performance deteriorates, and the like.

The bulk density of the spray-dried grains of the lithium transition metal based compound powder, e.g., the lithium nickel manganese cobalt based composite oxide powder, according to the present invention is usually 0.1 g/cc or more, preferably 0.3 g/cc or more, more preferably 0.5 g/cc or more, and most preferably 0.7 g/cc or more. If the bulk density is lower than this lower limit, the powder filling performance and the powder handleability may be adversely affected. Furthermore, the bulk density is usually 1.7 g/cc or less, preferably 1.6 g/cc or less, more preferably 1.5 g/cc or less, and most preferably 1.4 g/cc or less. It is preferable for the powder filling performance and the powder handleability that the bulk density exceeds the upper limit, whereas the specific surface area may become too small and the reactivity in the firing step may deteriorate.

If the specific surface area is small, the reactivity of the powder, which is obtained by the spray drying, with the lithium compound is reduced in the firing reaction, which is the next step, with the lithium compound. Therefore, as described above, it is preferable that the specific surface area is maximized by the means, e.g., pulverization of the raw material before spray drying. On the other hand, an excessive increase in specific surface area is industrially disadvantageous and, in addition, the lithium transition metal based compound according to the present invention may not be obtained. Consequently, the BET specific surface area of the thus obtained spray-dried grains is specified to be usually 10 m$^2$/g or more, preferably 20 m$^2$/g or more, further preferably 30 m$^2$/g or more, and most preferably 50 m$^2$/g or more, and usually 100 m$^2$/g or less, preferably 80 m$^2$/g or less, further preferably 70 m$^2$/g or less, and most preferably 65 m$^2$/g or less.

<Firing step>

The thus obtained firing precursor is then subjected to a firing treatment.

Here, in the present invention, the "firing precursor" refers to a precursor of the lithium transition metal based compound, e.g., the lithium nickel manganese cobalt based composite oxide, before firing, the precursor being obtained by treating the spray-dried grains. For example, the above-described compound which generates decomposition gases or sublimates during the firing to form voids in secondary grains may be contained in the above-described spray-dried grains so as to form the firing precursor.

This firing condition is depending on the composition and lithium compound raw material used. However, the tendency is as described below. If the firing temperature is too high, primary grains grow excessively, sintering between grains proceeds excessively, and the specific surface area becomes too small. Conversely, if the firing temperature is too low, heterogeneous phases are present together, the crystal structure is not developed, and the lattice strain increases. Furthermore, the specific surface area becomes two large. However, regarding the composition represented by General formulae (I) and (II) described above, the firing temperature is preferably 900°C or higher, more preferably 920°C or higher, further preferably 940°C or higher, still preferably 950°C or higher, and most preferably 960°C or higher, and usually 1,200°C or lower, preferably 1,175°C or lower, further preferably 1,150°C or lower, and most preferably 1,125°C or lower.

As for firing, for example, a box furnace, a tube furnace, a tunnel furnace, a rotary kiln, and the like can be used. Usually, the firing step can be divided into three parts of temperature raising·maximum temperature keeping·temperature lowering. The second part of maximum temperature keeping is not necessarily once, and may include two or more stages depending on the purpose. The steps of temperature raising·maximum temperature keeping·temperature lowering may be repeated twice or more times while a disintegration step referring to eliminate agglomeration in such a way that secondary grains are not broken or a pulverization step referring to crush until primary grains or a still finer powder results is conducted therebetween.

Regarding the temperature raising step, the temperature in the furnace is raised at a temperature increase rate of usually 1°C/min or more, and 10°C/min or less. If this temperature increase rate is too low, it takes much time and, therefore, it is industrially disadvantageous. However, if the temperature increase rate is too high, the temperature in the furnace do not follow the set temperature depending on furnaces. The temperature increase rate is preferably 2°C/min or more, more preferably 3°C/min or more, and preferably 7°C/min or less, and more preferably 5°C/min or less.

The keeping time in the maximum temperature keeping step is different depending on the temperature. However, in the above-described temperature range, the keeping time is usually 30 minutes or more, preferably 1 hour or more, further preferably 3 hours or more, and most preferably 5 hours or more, and 50 hours or less, preferably 25 hours or less, further preferably 20 hours or less, and most preferably 15 hours or less. If the firing time is too short, a lithium transition metal based compound powder exhibiting good crystallinity is not obtained easily, and a too long firing time is not practical. A too long firing time is disadvantageous because disintegration may become necessary thereafter, or pulverization may become difficult.

In the temperature lowering step, the temperature in the furnace is lowered at a temperature decrease rate of usually 0.1°C/min or more, and 10°C/min or less. If this temperature decrease rate is too low, it takes much time and, therefore, it is industrially disadvantageous. However, if the temperature decrease rate is too high, the homogeneity of an object tends to become poor, and deterioration of a container tends to be accelerated. The temperature decrease rate is preferably 1°C/min or more, more preferably 3°C/min or more, and preferably 7°C/min or less, and more preferably 5°C/min or less.

Regarding the atmosphere in the firing, since there is an oxygen partial pressure region suitable for the composition of the lithium transition metal based compound powder to be produced, various gas atmospheres suitable for satisfying them are used. Examples of gas atmospheres can include oxygen, air, nitrogen, argon, hydrogen, carbon dioxide, and mixed gases thereof. Regarding the lithium nickel manganese cobalt based composite oxide powder specifically conducted in the present invention, oxygen-containing gas atmospheres, e.g., air, can be used. The oxygen concentration in the atmosphere is usually 1 percent by volume or more, preferably 10 percent by volume or more, and more preferably 15 percent by volume or more, and 100 percent by volume or less, preferably 50 percent by volume or less, and more preferably 25 percent by volume or less.

Regarding the above-described manufacturing method, in the case where the lithium transition metal based compound powder, e.g., the lithium nickel manganese cobalt based composite oxide powder having the above-described specific composition, according to the present invention is produced, when the manufacturing condition is constant, the desired Li/Ni/Mn/Co molar ratio can be controlled by adjusting the mixing ratio of individual compounds in the preparation of the slurry in which the lithium compound, the nickel compound, the manganese compound, the cobalt compound, Additive 1, and Additive 2 are dispersed in the liquid medium.

According to the thus obtained lithium transition metal based compound powder, e.g., the lithium nickel manganese cobalt based composite oxide powder, of the present invention, a lithium secondary battery positive electrode material having a high capacity, exhibiting excellent low-temperature output characteristic and preservation characteristic, and exhibiting good performance balance is provided.

[Lithium secondary battery positive electrode]

A lithium secondary battery positive electrode according to the present invention is produced by forming a positive electrode active material layer containing the lithium transition metal based compound powder for a lithium secondary battery positive electrode material according to the present invention and a binder on a collector.

Usually, the positive electrode active material layer is formed by contact bonding a sheet-shaped mixture, in which a positive electrode material, a binder, if necessary an electrically conductive material and a thickener, and the like are dry-mixed, to a positive electrode collector or dissolving or dispersing these materials into a liquid medium to prepare a slurry, applying the slurry to a positive electrode collector, and conducting drying.

As for a material for the positive electrode collector, usually, metal materials, e.g., aluminum, stainless steel, nickel plating, titanium, and tantalum, and carbon materials, e.g., carbon cloth and carbon paper, are used. Most of all, metal materials are preferable, and aluminum is particularly preferable. Examples of shapes of metal materials include metal foil, metal cylindrical columns, metal coils, metal sheets, metal thin films, expanded metals, punched metals, and foam metals. Examples of shapes of carbon materials include carbon sheets, carbon thin films, and carbon cylindrical columns. Most of all, metal thin films are preferable because they are used for industrial products at present. The thin film may be formed into a mesh appropriately.

In the case where the thin film is used as the positive electrode collector, the thickness thereof is optional.

However, favorable thickness is within the range of usually 1 $\mu$m or more, preferably 3 $\mu$m or more, more preferably 5 $\mu$m or more, and usually 100 mm or less, preferably 1 mm or less, and more preferably 50 $\mu$m or less. If the thickness is smaller than the above-described range, the structure required for a collector may become insufficient. On the other hand, if the thickness is larger than the above-described range, the handleability may be impaired.

The binder used for producing the positive electrode active material layer is not specifically limited. As for a coating method, it is enough that the material is stable toward a liquid medium used in electrode production. Specific examples thereof include resin polymers, e.g., polyethylenes, polypropylenes, polyethylene terephthalates, polymethyl methacrylates, aromatic polyamides, celluloses, and nitrocelluloses; rubber polymers, e.g., SBR (styrene-butadiene rubber, NBR (acrylonitrile-butadiene rubber), fluororubber, isoprene rubber, butadiene rubber, and ethylene-propylene rubber; thermoplastic elastomer polymers, e.g., styrene-butadiene-styrene block copolymers and hydrogenated products thereof, EPDM (ethylene-propylene-diene ternary polymer), styrene-ethylene-butadiene-ethylene copolymers, and styrene-isoprene-styrene block copolymers and hydrogenated products thereof; soft resin polymers, e.g., syndiotactic-1,2-polybutadiene, polyvinyl acetates, ethylene-vinyl acetate copolymers, and propylene-$\alpha$-olefin copolymers; fluoropolymers, e.g., polyvinylidene fluorides, polytetrafluoroethylenes, fluorinated polyvinylidene fluorides, and polytetrafluoroethylene-ethylene copolymers; and polymer compositions having ionic conductivity of alkali metal ions (particularly lithium ion). One type of these substances may be used alone or at least two types may be used together in any combination at any ratio.

The proportion of the binder in the positive electrode active material layer is usually 0.1 percent by weight or more, preferably 1 percent by weight or more, and further preferably 5 percent by weight or more, and usually 80 percent by weight or less, preferably 60 percent by weight or less, further preferably 40 percent by weight or less, and most preferably 10 percent by weight or less. If the proportion of the binder is too low, there is a possibility that the positive electrode active material cannot be held sufficiently, the mechanical strength of the positive electrode becomes insufficient, and the battery performance, e.g., a cycle characteristic, deteriorates. On the other hand, a too high proportion may lead to reduction in the battery capacity and the electrical conductivity.

The positive electrode active material is usually allowed to contain an electrically conductive material in order to increase the electrical conductivity. The type thereof is not specifically limited. Specific examples thereof can include metal materials, e.g., copper and nickel, and carbon materials, for example, graphite, e.g., natural graphite and artificial graphite; carbon black, e.g., acetylene black; and amorphous carbon, e.g., needle coke. One type of these substances may be used alone or at least two types may be used together in any combination at any ratio. The proportion of the electrically conductive material in the positive electrode active material layer is usually 0.01 percent by weight or more, preferably 0.1 percent by weight or more, and further preferably 1 percent by weight or more, and usually 50 percent by weight or less, preferably 30 percent by weight or less, and further preferably 20 percent by weight or less. If the proportion of the electrically conductive material is too low, the electrical conductivity may become insufficient. Conversely, if the proportion is too high, the battery capacity may be reduced.

The type of liquid medium for forming the slurry is not specifically limited insofar as it is a solvent capable of dissolving or dispersing the lithium transition metal based compound powder, which is the positive electrode material, the binder, and the electrically conductive material and the thickener, which are used as necessary, and either an aqueous solvent or an organic solvent may be used. Examples of aqueous solvents include water and alcohol. Examples of organic solvents can include N-methylpyrrolidone (NMP), dimethylformamide, dimethylacetamide, methyl ethyl ketone, cyclohexanone, methyl acetate, methyl acrylate, diethyltriamine, N,N-dimethylaminopropylamine, ethylene oxide, tetrahydrofuran (THF), toluene, acetone, dimethyl ether, dimethylacetamide, hexamethylphosphoramide, dimethylsulfoxide, benzene, xylene, quinoline, pyridine, methylnaphthalene, and hexane. In particular, in the case where the aqueous solvent is used, a dispersant is added besides the thickener, and slurry is prepared by using latex, e.g., SBR. One type of these solvents may be used alone or at least two types may be used together in any combination at any ratio.

The content of the lithium transition metal based compound powder according to the present invention serving as the positive electrode material in the positive electrode active material layer is usually 10 percent by weight or more, preferably 30 percent by weight or more, and further preferably 50 percent by weight or more, and usually 99.9 percent by weight or less, and preferably 99 percent by weight or less. If the proportion of the lithium transition metal based compound powder in the positive electrode active material layer is too large, the strength of the positive electrode tends to become insufficient. If the proportion is too small, the capacity may become insufficient.

The thickness of the positive electrode active material layer is usually about 10 to 200 $\mu$m.

Preferably, the positive electrode active material layer obtained by coating and drying is compacted through roller press or the like in order to increase the packing density of the positive electrode active material.

In this manner, the lithium secondary battery positive electrode according to the present invention can be prepared.

<Lithium secondary battery>

A lithium secondary battery according to the present invention includes the above-described positive electrode capable of absorbing and releasing lithium, according to the present invention, a negative electrode capable of absorbing and releasing lithium, and a non-aqueous electrolyte containing a lithium salt serving as an electrolytic salt. Furthermore, a separator for holding the non-aqueous electrolyte may be provided between the positive electrode and the negative electrode. It is desirable to interpose the separator, as described above, in order to effectively prevent an occurrence of short-circuit due to contact between the positive electrode and the negative electrode.

<Negative electrode>

Usually, the negative electrode is constructed by forming a negative electrode active material layer on a negative electrode collector, as in the positive electrode.

As for a material for the negative electrode collector, metal materials, e.g., copper, nickel, stainless steel, and nickel plated steel, and carbon materials, e.g., carbon cloth and carbon paper, are used. Most of all, regarding the metal materials, metal foil, metal cylindrical columns, metal coils, metal sheets, metal thin films, and the like are mentioned. Regarding the carbon materials, carbon sheets, carbon thin films, carbon cylindrical columns, and the like are mentioned. Most of all, metal thin films are preferable because they are used for industrial products at present. The thin film may be formed into a mesh appropriately. In the case where the thin film is used as the negative electrode collector, the range of favorable thickness thereof is equal to the above-described range with respect to the positive electrode collector.

The negative electrode active material layer is configured to contain a negative electrode active material. The type of the negative electrode active material is not specifically limited insofar as it can absorb and release lithium ions electrochemically. However, usually, the carbon materials capable of absorbing and releasing lithium ions are used from the viewpoint of a high degree of safety.

The type of the carbon material is not specifically limited. Examples thereof include graphite, e.g., artificial graphite and natural graphite, and thermal decomposition products of organic materials under various thermal decomposition conditions. Examples of thermal decomposition products of organic materials include coal based coke, petroleum based coke, carbonized products of coal based pitch, carbonized products of petroleum based pitch, carbonized products of these pitches subjected to an oxidation treatment, needle coke, pitch coke, carbonized products of, for example, phenol resins and crystalline celluloses, and the like, carbon materials prepared by graphitizing a part of them, furnace black, acetylene black, and pitch based carbon fibers. Among them, graphite is preferable. Particularly favorably, artificial graphite, refined natural graphite, which are produced by subjecting graphitizable pitches obtained from various raw materials to a high temperature heat treatment, graphite materials in which a pitch is included in the above-described graphite, and the like are mainly used after being subjected to various surface treatments. One type of these carbon materials may be used alone or at least two types may be used in combination.

In the case where a graphite material is used as the negative electrode active material, it is favorable that the d value (interlayer distance: $d_{002}$) of the lattice plane (002 plane) determined through X-ray diffraction based on Gakushin method is usually 0.335 nm or more, usually 0.34 nm or less, and preferably 0.337 nm or less.

The ash content of the graphite material is usually 1 percent by weight or less relative to the weight of the graphite material, and most of all, 0.5 percent by weight or less, in particular 0.1 percent by weight or less is preferable.

Furthermore, the crystallite size (Lc) of the graphite material, determined through X-ray diffraction based on Gakushin method, is usually 30 nm or more. Most of all, 50 nm or more, and in particular 100 nm or more is preferable.

Preferably, the median size of the graphite material, determined by a laser diffraction·scattering method, is usually 1 $\mu$m or more, most of all 3 $\mu$m or more, furthermore 5 $\mu$m or more, and in particular 7 $\mu$m or more, and usually 100 $\mu$m or less, most of all, 50 $\mu$m or less, furthermore 40 $\mu$m or less, and in particular 30 $\mu$m or less.

The specific surface area by the BET method of the graphite material is usually 0.5 m$^2$/g or more, preferably 0.7 m$^2$/g or more, more preferably 1.0 m$^2$/g or more, and further preferably 1.5 m$^2$/g or more, and usually 25.0 m$^2$/g or less, preferably 20.0 m$^2$/g or less, more preferably 15.0 m$^2$/g or less, and further preferably 10.0 m$^2$/g or less.

Moreover, in the case where Raman spectrometry by using argon laser light is conducted with respect to the graphite material, it is preferable that the intensity ratio $I_A/I_B$ of the intensity $I_A$ of a peak $P_A$ detected within the range of 1,580 to 1,620 cm$^{-1}$ to the intensity $I_B$ of a peak $P_B$ detected within the range of 1,350 to 1,370 cm$^{-1}$ is 0 or more, and 0.5 or less. In addition, the full width at half maximum of the peak $P_A$ is preferably 26 cm$^{-1}$ or less, and more preferably 25 cm$^{-1}$ or less.

Besides the above-described various carbon materials, other materials capable of absorbing and releasing lithium can also be used as the negative electrode active material. Specific examples of negative electrode active materials other than carbon materials include metal oxides, e.g., tin oxide and silicon oxide, nitrides, e.g., $Li_{2.6}Co_{0.4}N$, lithium simple substance, and lithium alloys, e.g., lithium aluminum alloys. One type of these materials other than the carbon materials may be used alone or at least two types may be used in combination. Alternatively, combinations with the above-described carbon materials may be employed.

Usually, in a manner similar to that in the positive electrode active material layer, the negative electrode active material layer can be produced by applying a slurry, in which the above-described negative electrode active material, a binder, and if necessary an electrically conductive material and a thickener are made into a slurry with a liquid medium, to a negative electrode collector, and conducting drying. As for the liquid medium for forming the slurry, the binder, the thickener, the electrically conductive material, and the like, the same substances as those described above with respect to the positive electrode active material layer can be used.

<Non-aqueous electrolyte>

As for the non-aqueous electrolyte, for example, known organic electrolytic solutions, polymer solid electrolytes, gel electrolytes, inorganic solid electrolytes, and the like can be used. Most of all, organic electrolytic solutions are preferable. The organic electrolytic solution is formed by dissolving a solute (electrolyte) into an organic solvent.

Here, the type of organic solvent is not specifically limited. For example, carbonates, ethers, ketones, sulfolane based compounds, lactones, nitriles, chlorinated hydrocarbons, amines, esters, amides, phosphoric acid ester compounds, and the like can be used. Typical examples include dimethyl carbonate, diethyl carbonate, ethyl methyl carbonate, propylene carbonate, ethylene carbonate, vinylene carbonate, vinyl ethylene carbonate, tetrahydrofuran, 2-methyltetrahydrofuran, 1,4-dioxane, 4-methyl-2-pentanone, 1,2-dimethoxyethane, 1,2-diethoxyethane, $\gamma$-butyrolactone, 1,3-dioxolane, 4-methyl-1,3-dioxolane, diethyl ether, sulfolane, methylsulfolane, acetonitrile, propionitrile, benzonitrile, butyronitrile, valeronitrile, 1,2-dichloroethane, dimethylformamide, dimethylsulfoxide, trimethyl phosphate, and triethyl phosphate. Regarding these compounds, a part of hydrogen atoms may be substituted with halogen atoms. These solvents can be used alone or mixed solvents of at least two types can be used.

It is preferable that the above-described organic solvent is allowed to contain a high dielectric constant solvent in order to dissociate an electrolytic salt. Here, the high dielectric constant solvent refers to a compound having a relative dielectric constant of 20 or more at 25°C. It is preferable that among the high dielectric constant solvents, ethylene carbonate, propylene carbonate, and compounds in which hydrogen atoms thereof are substituted with other elements, e.g., halogen, or alkyl groups and the like are contained in the electrolytic solution. The proportion constituted by the high dielectric constant solvent in the electrolytic solution is preferably 20 percent by weight or more, further preferably 25 percent by weight or more, and most preferably 30 percent by weight or more. If the content of the high dielectric constant solvent is less than the above-described range, a desired battery characteristics may not be obtained.

Furthermore, additives, for example, gases, e.g., $CO_2$, $N_2O$, $CO$, and $SO_2$, vinylene carbonate, and polysulfide $S_x^{2-}$, which form favorable coating films enabling efficient charge and discharge of lithium ions on a negative electrode surface, may be added at any ratio to the organic electrolytic solution. Regarding such additives, most of all, vinylene carbonate is preferable.

The type of electrolytic salt is not specifically limited, and any previously known solute can be used. Specific examples include $LiClO_4$, $LiAsF_6$, $LiPF_6$, $LiBF_4$, $LiB(C_6H_5)_4$, LiBOB, LiCl, LiBr, $CH_3SO_3Li$, $CF_3SO_3Li$, $LiN(SO_2CF_3)_2$, $LiN(SO_2C_2F_5)_2$, $LiC(SO_2CF_3)_3$, and $LiN(SO_3CF_3)_2$. Any one type of these electrolytic salt may be used alone or at least two types may be used together in any combination at any ratio.

A lithium salt serving as the electrolytic salt is contained in the electrolytic solution in such a way that the content becomes usually 0.5 mol/L or more, and 1.5 mol/L or less. If the lithium salt concentration in the electrolytic solution is less than 0.5 mol/L or exceeds 1.5 mol/L, the electrical conductivity is reduced and the battery characteristics may be adversely affected. It is preferable that the lower limit of this concentration is 0.75 mol/L or more, and the upper limit is 1.25 mol/L or less.

Likewise, in the case where the polymer solid electrolyte is used, the type thereof is not specifically limited, and any crystalline·amorphous inorganic substance known as a solid electrolyte can be used. Examples of crystalline inorganic solid electrolytes include LiI, $Li_3N$, $Li_{1+x}J_xTi_{2-x}(PO_4)_3$ (J = Al, Sc, Y, La), and $Li_{0.5-3x}RE_{0.5+x}TiO_3$ (RE = La, Pr, Nd, Sm). Furthermore, examples of amorphous inorganic solid electrolytes include oxide glass, e.g., $4.9LiI-34.1Li_2O-61B_2O_5$ and $33.3Li_2O-66.7SiO_2$. Any one type of these electrolytes may be used alone or at least two types may be used together in any combination at any ratio.

<Separator>

In the case where the above-described organic electrolytic solution is used as the electrolyte, a separator is interposed between the positive electrode and the negative electrode in order to prevent an occurrence of short-circuit between the electrodes. The material and the shape of the separator are not specifically limited. However, it is preferable that the stability toward the organic electrolytic solution used is ensured, excellent liquid holding property is exhibited, and an occurrence of short-circuit between electrodes can be prevented reliably. Preferable examples include fine porous films, sheets, nonwoven fabrics, and the like formed from various polymer materials. Specific examples of usable polymer materials include polyolefin polymers, e.g., nylons, cellulose acetates, nitrocelluloses, polysulfones, polyacrylonitriles, polyvinylidene fluorides, polypropylenes, polyethylenes, and polybutenes. In particular, polyolefin polymers are preferable from the viewpoint of the chemical and electrochemical stability which is an important factor of the separator, and polyethylenes are particularly desirable from the viewpoint of the temperature of self locking which is one of the purposes of use of the separator in the battery.

In the case where the separator formed from the polyethylene is used, it is preferable that an ultrahigh molecular weight polyethylene is used from the viewpoint of high-temperature shape-maintaining property. The lower limit of the molecular weight thereof is preferably 500,000, further preferably 1,000,000, and most preferably 3,500,000. On the other hand, the upper limit of the molecular weight is preferably 5,000,000, further preferably 4,000,000, and most preferably 3,000,000. This is because if the molecular weight is too large, the fluidity becomes too low and, thereby, the holes of the separator may not be clogged when being heated.

<Battery shape>

The lithium secondary battery according to the present invention is produced by assembling the above-described lithium secondary battery positive electrode according to the present invention, the negative electrode, the electrolyte, and the separator used as necessary into an appropriate shape. Furthermore, other constituents, e.g., an outer casing, can be used, if necessary.

The shape of the lithium secondary battery according to the present invention is not specifically limited and can be selected appropriately from various shapes adopted generally in accordance with the use thereof. Examples of shapes adopted generally include a cylinder type in which sheet electrodes and a separator are made to be spiral, a cylinder type having an inside-out structure in which pellet electrodes and a separator are combined, and a coin type in which pellet electrodes and a separator are laminated. Furthermore, the method for assembling the battery is not specifically limited and can be selected appropriately from various methods used usually in accordance with the shape of a desired battery.

Up to this point, general embodiments of the lithium secondary battery according to the present invention have been described. However, the lithium secondary battery according to the present invention is not limited to the above-described embodiments, but can be variously modified and executed within the bounds of the gist thereof.

EXAMPLES

The present invention will be described below in further detail with reference to the examples. However, the present invention is not limited to these examples within the bounds of the gist thereof.

[Methods for measuring properties]

The individual properties and the like of lithium transition metal based compound powders produced in individual examples and comparative examples described later are measured as described below.

<Composition (Zi/Ni/Mn/Co)>

ICP-AES analysis was conducted.

<Quantification of additive elements (Mo, W, Nb, B, Sn) >

ICP-AES analysis was conducted.

<Composition analysis of primary grain surface by X-ray photoelectron spectroscopy (XPS)>

An X-ray photoelectron spectroscope "ESCA-5700" produced by Physical Electronics, Inc., was used and the measurement was conducted under the following condition.
X-ray source: monochromatic AlK$\alpha$
Analysis area: 0.8 mm diameter
Take-off angle: 65°
Quantification method: areas of individual peaks of B1s, Mn2p$_{1/2}$, Co2p$_{3/2}$, Ni2p$_{3/2}$, and W4f were corrected with a sensitivity coefficient.

<Median size of secondary grains>

The measurement was conducted after 5 minutes of ultrasonic dispersion.

<Average primary grain size>

A SEM image magnified by 30,000 times was used for determination.

<Measurement of various properties by mercury penetration method>

As for a measurement apparatus by the mercury penetration method, AutoPore III Model 9420 produced by Micromeritics was used. Regarding the measurement condition in the mercury penetration method, the measurement was conducted at room temperature while the pressure was increased from 3.86 kPa to 413 MPa. The value of surface tension of mercury was assumed to be 480 dyn/cm, and the value of contact angle was assumed to be 141.3°.

<Bulk density>

The bulk density was determined as a powder packing density when 4 to 10 g of sample powder was put into a 10 ml glass graduated cylinder and tapping was conducted 200 times at a stroke of about 20 mm.

<Specific surface area>

The specific surface area was determined by the BET method.

<Carbon content C>

Carbon/Sulfur Analyzer EMIA-520 produced by HORIBA, Ltd., was used. A few tens of mg to 100 mg of sample was weighed into a magnetic crucible subjected burning in advance, a supporting agent was added, combustion was conducted with a high frequency furnace in an oxygen stream, and carbon was extracted. Quantification of $CO_2$ in the combustion gas was conducted by nondispersive infrared absorption spectrometry. As for sensitivity calibration, 150-15 Low alloy steel No. 1 (C certified value: 0.469 percent by weight) produced by the Japan Iron and Steel Federation was used.

<Volume resistivity>

A powder resistivity measuring apparatus (Loresta GP resistivity measuring system PD-41: produced by Dia Instruments Co., Ltd) was used. The volume resistivity [Ω·cm] of a powder was measured under various pressures with a powder probe unit (four-probe·ring electrode, electrode distance of 5.0 mm, electrode radius of 1.0 mm, and sample radius of 12.5 mm), where a sample weight was 3 g and an applied voltage limiter was set at 90 V, and the values of volume resistivity at a pressure of 40 MPa were compared.

<Identification of crystal phase (layer structure), measurement of full width at half maximum FWHM(110) ascertainment of presence and absence of heterogeneous phase peak in (018), (110), (113) diffraction peaks and  calculation of integrated intensity and integrated intensity ratio of heterogeneous phase peak/intrinsic crystal phase peak>

Powder X-ray diffractometry by using CuKα rays, as described below, was conducted. Profile fitting was conducted with respect to (018), (110), (113) diffraction peaks originated from hexagonal system R-3m (No. 166) observed with respect to each sample, and the integrated intensity, integrated intensity ratio, and the like were calculated.

·Full width at half maximum and the area were calculated by using a diffraction pattern in the case where the measurement was conducted at a fixed slit mode of a focusing beam method
·Actual XRD measurement (examples, comparative examples) was conducted at a variable slit mode and data conversion from variable to fixed was conducted
·Conversion from variable to fixed was conducted on the basis of a calculation formula, intensity (fixed) = intensity (valuable)/$\sin\theta$

(Specification of powder X-ray diffraction measuring apparatus)

Apparatus name: X'Pert Pro MPD produced by PANalytical, the Nether lands
Optical system: focusing beam optical system

(Specification of optical system)

Incident side: sealed X-ray tube (CuKα)
Soller Slit (0.04 rad)
Divergence Slit (Variable Slit)
Sample stage: rotating sample stage (Spinner)
Light receiving side: semiconductor array detector

(X'Celerator)

Ni-filter
Goniometer: 243 mm

(Measurement condition)

X-ray power (CuKα): 40 kV, 30 mA
Scanning axis: θ/2θ
Scanning range (2θ): 10.0°-75.0°
Measurement mode: Continuous
Reading width: 0.015°
Counting time: 99.7 sec
Automatic valuable slit (Automatic-DS: 10 mm (irradiation width))
Horizontal divergence mask: 10 mm (irradiation width)

<Median size of pulverized grains in slurry>

The median size was measured by using a known laser diffraction/scattering grain size distribution measuring apparatus, where the refractive index was set at 1.24 and the reference of grain size was on a volume basis. A 0.1 percent by weight sodium hexametaphosphate aqueous solution was used as a dispersion medium, and the measurement was conducted after 5 minutes of ultrasonic dispersion (output 30W, frequency 22.5 kHz).

<Median size as average grain size of raw material $Li_2CO_3$ powder>

The median size was measured by using a known laser diffraction/scattering grain size distribution measuring apparatus (LA-920, produced by HORIBA, Ltd.), where the refractive index was set at 1.24 and the reference of grain size was on a volume basis. Ethyl alcohol was used as a dispersion medium, and the measurement was conducted after 5 minutes of ultrasonic dispersion (output 30W, frequency 22.5 kHz).

<Properties of grained powder obtained through spray-drying>

The form was identified through SEM observation and cross-sectional SEM observation. The median size serving as an average grain size and the 90 percent cumulative diameter ($D_{90}$) were measured by using a known laser diffraction/scattering grain size distribution measuring apparatus (LA-920, produced by HORIBA, Ltd.), where the refractive index was set at 1.24 and the reference of grain size was on a volume basis. A 0.1 percent by weight sodium hexametaphosphate aqueous solution was used as a dispersion medium, and the measurement was conducted after 0 minutes, 1 minute, 3 minutes, or 5 minutes of ultrasonic dispersion (output 30W, frequency 22.5 kHz). The specific surface area was determined by the BET method. The bulk density was determined as a powder packing density when 4 to 6 g of sample powder was put into a 10 ml glass graduated cylinder and tapping was conducted 200 times at a stroke of about 20 mm.

[Production of lithium transition metal based compound powder (examples and comparative examples)]

EXAMPLE 1

A slurry was prepared by weighing $Li_2CO_3$, $Ni(OH)_2$, $Mn_3O_4$, CoOOH, $H_3BO_3$, and $WO_3$ in such a way that a molar ratio became Li:Ni:Mn:Co:B:W = 1.12:0.45:0.45:0.10:0.005:0.010, conducting mixing and, thereafter, adding pure water thereto. Solid matters in the resulting slurry were pulverized until the median size became 0.15 $\mu$m by using a circulating medium agitation type wet pulverizer while the slurry was agitated.

Subsequently, the resulting slurry (solid content 15 percent by weight, viscosity 1,140 cp) was spray-dried by using a two-fluid nozzle type spray dryer (Model LT-8: produced by Ohkawara Kakohki Co., Ltd.). Air was used as a drying gas at this time, the amount G of introduction of drying gas was specified to be 45 L/min, and the amount S of introduction of slurry was specified to be 7 x $10^{-3}$ L/min (gas liquid ratio G/S = 6,429). The drying inlet temperature was specified to be 150°C. About 15 g of grained powder obtained by spray drying with the spray dryer was put into an alumina crucible, and firing was conducted in an air atmosphere at 950°C for 6 hours (temperature increase and decrease rate 3.33°C/min.). Thereafter, disintegration was conducted so as to obtain a lithium nickel manganese cobalt composite oxide (x = 0.098, y = 0.000, z = 0.118) having a volume resistivity of 2.5 x $10^6$ $\Omega \cdot$cm, a carbon content C of 0.064 percent by weight, and a composition of $Li_{1.118}(Ni_{0.451}Mn_{0.451}Co_{0.098})O_2$ and having a layer structure. Furthermore, when a molar ratio of total (Ni, Mn, Co) was assumed to be 1, molar ratios of contained B and W were 0.39 percent by mole and 0.96 percent by mole, respectively. The average primary grain size was 0.3 $\mu$m, the median size was 4.7 $\mu$m, the 90% cumulative diameter ($D_{90}$) was 7.0 $\mu$m, the bulk density was 1.2 g/cc, and the BET specific surface area was 1.8 $m^2$/g. Moreover, the atomic ratio of B (boron), (B/(Ni + Mn + Co)), of primary grain surface was 69 times larger than the atomic ratio of B of the whole grain, and the atomic ratio of W (tungsten), (W/(Ni + Mn + Co)), of primary grain surface was 6.0 times larger than the atomic ratio of W of the whole grain.

EXAMPLE 2

A slurry was prepared by weighing $Li_2CO_3$, $Ni(OH)_2$, $Mn_3O_4$, CoOOH, $H_3BO_3$, and $WO_3$ in such a way that a molar ratio became Li:Ni:Mn:Co:B:W = 1.12:0.45:0.45:0.10:0.005:0.010, conducting mixing and, thereafter, adding pure water thereto. Solid matters in the resulting slurry were pulverized until the median size became 0.27 $\mu$m by using a circulating medium agitation type wet pulverizer while the slurry was agitated.

Subsequently, the resulting slurry (solid content 15 percent by weight, viscosity 650 cp) was spray-dried by using a two-fluid nozzle type spray dryer (Model LT-8: produced by Ohkawara Kakohki Co., Ltd.). Air was used as a drying gas at this time, the amount G of introduction of drying gas was specified to be 45 L/min, and the amount S of introduction of slurry was specified to be 6 $\times$ $10^{-3}$ L/min (gas liquid ratio G/S = 7,500). The drying inlet temperature was specified to be 150°C. About 15 g of grained powder obtained by spray drying with the spray dryer was put into an alumina crucible, and firing was conducted in an air atmosphere at 1,000°C for 6 hours (temperature increase and decrease rate 3.33°C/min.). Thereafter, disintegration was conducted so as to obtain a lithium nickel manganese cobalt composite oxide (x = 0.098, y = -0.007, z = 0.129) having a volume resistivity of 1.5 $\times$ $10^6$ $\Omega \cdot$cm, a carbon content C of 0.038 percent by weight, and a composition of $Li_{1.129}(Ni_{0.448}Mn_{0.454}Co_{0.098})O_2$ and having a layer structure. Furthermore, when a molar ratio of total (Ni, Mn, Co) was assumed to be 1, molar ratios of contained B and W were 0.39 percent by mole and 0.96 percent by mole, respectively. The average primary grain size was 0.6 $\mu$m, the median size was 4.1 $\mu$m, the 90% cumulative diameter ($D_{90}$) was 6.2 $\mu$m, the bulk density was 1.5 g/cc, and the BET specific surface area was 1.0 $m^2$/g. Moreover, the atomic ratio of B (boron), (B/(Ni + Mn + Co)), of primary grain surface was 134 times larger than the atomic ratio of B of the whole grain, and the atomic ratio of W (tungsten), (W/(Ni + Mn + Co)), of primary grain surface was 12 times larger than the atomic ratio of W of the whole grain.

EXAMPLE 3

A slurry was prepared by weighing $Li_2CO_3$, $Ni(OH)_2$, $Mn_3O_4$, CoOOH, $H_3BO_3$, and $WO_3$ in such a way that a molar ratio became Li:Ni:Mn:Co:B:W = 1.12:0.45:0.45:0.10:0.0025:0.005, conducting mixing and, thereafter, adding pure water thereto. Solid matters in the resulting slurry were pulverized until the median size became 0.38 $\mu$m by using a circulating medium agitation type wet pulverizer while the slurry was agitated.

Subsequently, the resulting slurry (solid content 15 percent by weight, viscosity 750 cp) was spray-dried by using a two-fluid nozzle type spray dryer (Model LT-8: produced by Ohkawara Kakohki Co., Ltd.). Air was used as a drying gas at this time, the amount G of introduction of drying gas was specified to be 45 L/min, and the amount S of introduction of slurry was specified to be 6 $\times$ $10^{-3}$ L/min (gas liquid ratio G/S = 7,500). The drying inlet temperature was specified to be 150°C. About 15 g of grained powder obtained by spray drying with the spray dryer was put into an alumina crucible, and firing was conducted in an air atmosphere at 1,000°C for 6 hours (temperature increase and decrease rate 3.33°C/min.). Thereafter, disintegration was conducted so as to obtain a lithium nickel manganese cobalt composite oxide (x = 0.097, y = -0.010, z = 0.135) having a volume resistivity of 7.3 $\times$ $10^5$ $\Omega \cdot$cm, a carbon content C of 0.038 percent by weight, and a composition of $Li_{1.135}(Ni_{0.447}Mn_{0.456}Co_{0097})O_2$. Furthermore, when a molar ratio of total (Ni, Mn, Co) was assumed to be 1, molar ratios of contained B and W were 0.23 percent by mole and 0.51 percent by mole, respectively. The average primary grain size was 1.0 $\mu$m, the median size was 3.6 $\mu$m, the 90% cumulative diameter ($D_{90}$) was 5.7 $\mu$m, the bulk density was 1.3 g/cc, and the BET specific surface area was 0.8 m$^2$/g. Moreover, the atomic ratio of B (boron), (B/(Ni + Mn + Co)), of primary grain surface was 71 times larger than the atomic ratio of B of the whole grain, and the atomic ratio of W (tungsten), (W/(Ni + Mn + Co)), of primary grain surface was 16 times larger than the atomic ratio of W of the whole grain.

EXAMPLE 4

A slurry was prepared by weighing $Li_2CO_3$, $Ni(OH)_2$, $Mn_3O_4$, CoOOH, $H_3BO_3$, and $WO_3$ in such a way that a molar ratio became Li:Ni:Mn:Co:B:W = 1.12:0.45:0.45:0.10:0.0025:0.01, conducting mixing and, thereafter, adding pure water thereto. Solid matters in the resulting slurry were pulverized until the median size became 0.27 $\mu$m by using a circulating medium agitation type wet pulverizer while the slurry was agitated.

Subsequently, the resulting slurry (solid content 15 percent by weight, viscosity 1,020 cp) was spray-dried by using a two-fluid nozzle type spray dryer (Model LT-8: produced by Ohkawara Kakohki Co., Ltd.). Air was used as a drying gas at this time, the amount G of introduction of drying gas was specified to be 45 L/min, and the amount S of introduction of slurry was specified to be 6 $\times$ 10$^{-3}$ L/min (gas liquid ratio G/S = 7,500). The drying inlet temperature was specified to be 150°C. About 15 g of grained powder obtained by spray drying with the spray dryer was put into an alumina crucible, and firing was conducted in an air atmosphere at 1,000°C for 6 hours (temperature increase and decrease rate 3.33°C/min.). Thereafter, disintegration was conducted so as to obtain a lithium nickel manganese cobalt composite oxide (x = 0.098, y = -0.004, z = 0.134) having a volume resistivity of 3.0 $\times$ 10$^6$ $\Omega\cdot$cm, a carbon content C of 0.047 percent by weight, and a composition of $Li_{1.134}(Ni_{0.449}Mn_{0.453}Co_{0.098})O_2$. Furthermore, when a molar ratio of total (Ni, Mn, Co) was assumed to be 1, molar ratios of contained B and W were 0.23 percent by mole and 1.00 percent by mole, respectively. The average primary grain size was 0.5 $\mu$m, the median size was 2.1 $\mu$m, the 90% cumulative diameter ($D_{90}$) was 3.9 $\mu$m, the bulk density was 1.2 g/cc, and the BET specific surface area was 1.5 m$^2$/g. Moreover, the atomic ratio of B (boron), (B/(Ni + Mn + Co)), of primary grain surface was 53 times larger than the atomic ratio of B of the whole grain, and the atomic ratio of W (tungsten), (W/(Ni + Mn + Co)), of primary grain surface was 9.4 times larger than the atomic ratio of W of the whole grain.

EXAMPLE 5

A slurry was prepared by weighing $Li_2CO_3$, $Ni(OH)_2$, $Mn_3O_4$, CoOOH, $H_3BO_3$, and $WO_3$ in such a way that a molar ratio became Li:Ni:Mn:Co:B:W = 1.05:0.333:0.333:0.333:0.005:0.005, conducting mixing and, thereafter, adding pure water thereto. Solid matters in the resulting slurry were pulverized until the median size became 0.31 $\mu$m by using a circulating medium agitation type wet pulverizer while the slurry was agitated.

Subsequently, the resulting slurry (solid content 18 percent by weight, viscosity 830 cp) was spray-dried by using a two-fluid nozzle type spray dryer (Model LT-8: produced by Ohkawara Kakohki Co., Ltd.). Air was used as a drying gas at this time, the amount G of introduction of drying gas was specified to be 45 L/min, and the amount S of introduction of slurry was specified to be 6 $\times$ 10$^{-3}$ L/min (gas liquid ratio G/S = 7,500). The drying inlet temperature was specified to be 150°C. About 10 g of grained powder obtained by spray drying with the spray dryer was put into an alumina crucible, and firing was conducted in an air atmosphere at 940°C for 6 hours (temperature increase and decrease rate 3.33°C/min.). Thereafter, disintegration was conducted so as to obtain a lithium nickel manganese cobalt composite oxide (x = 0.333, y = -0.004, z = 0.054) having a volume resistivity of 2.0 $\times$ 10$^6$ $\Omega\cdot$cm, a carbon content C of 0.031 percent by weight, and a composition of $Li_{1.054}(Ni_{0.332}Mn_{0.335}Co_{0.333})O_2$. Furthermore, when a molar ratio of total (Ni, Mn, Co) was assumed to be 1, molar ratios of contained B and W were 0.41 percent by mole and 0.50 percent by mole, respectively. The average primary grain size was 0.6 $\mu$m, the median size was 3.8 $\mu$m, the 90% cumulative diameter ($D_{90}$) was 7.5 $\mu$m, the bulk density was 1.2 g/cc, and the BET specific surface area was 1.2 m$^2$/g. Moreover, the atomic ratio of B (boron), (B/(Ni + Mn + Co)), of primary grain surface was 73 times larger than the atomic ratio of B of the whole grain, and the atomic ratio of W (tungsten), (W/(Ni + Mn + Co)), of primary grain surface was 15 times larger than the atomic ratio of W of the whole grain.

SERS measurement

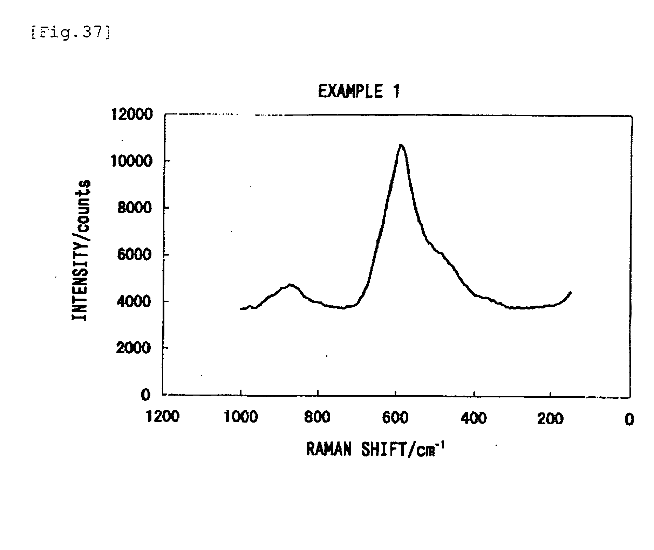

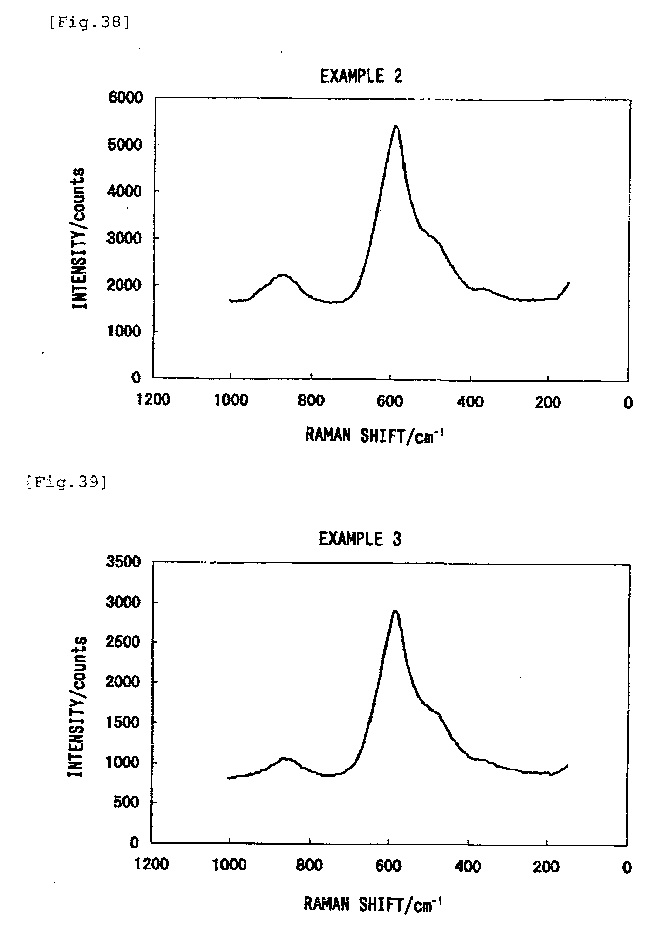

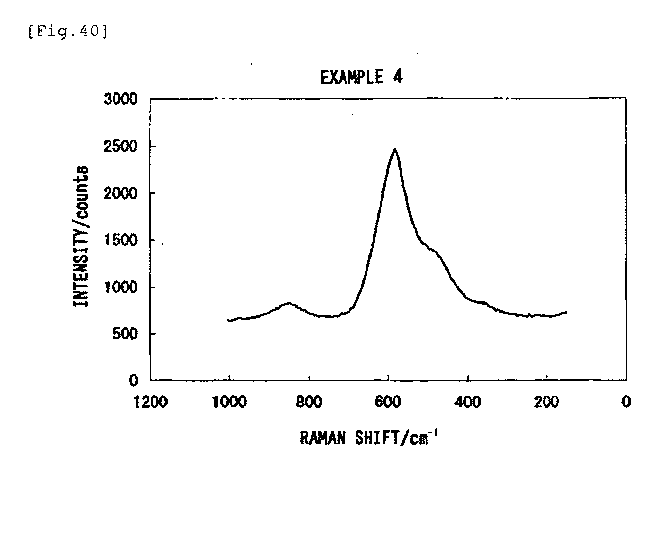

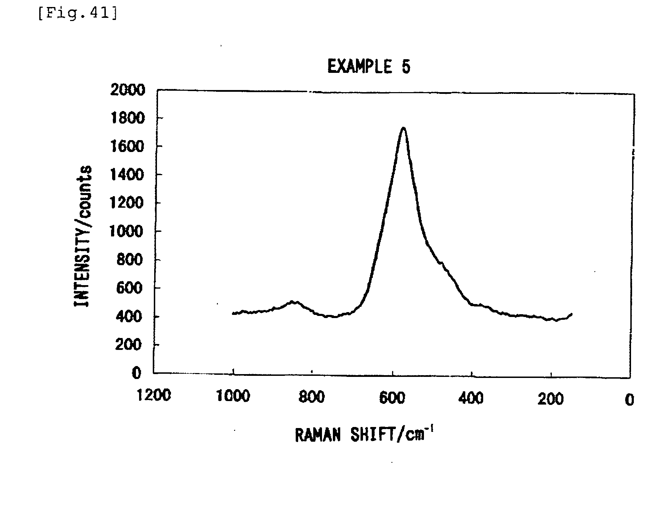

Regarding the lithium transition metal based compound powders obtained in Examples 1 to 5, SERS was measured under the following measurement condition. The resulting SERS patterns are shown in Figs. 37 to 41, respectively.

<Method for measuring SERS>

Apparatus: Nicoret Almega XR produced by Thermo Fisher Scientific
Pretreatment: silver evaporation (10 nm)
Excitation wavelength: 532 nm
Excitation output: 0.5 mW or less at position of sample
Analysis method: measurement of height and half-width of each peak, from which linear back ground is excluded
Spectrum resolution: 10 cm$^{-1}$

The results thereof are collectively shown in Table 1 described below.

[Table 1]

| | Peak A | | | Peak B | | Peak intensity ratio B/A |
|---|---|---|---|---|---|---|
| | Position (cm$^{-1}$) | Intensity (count) | Half-width (cm$^{-1}$) | Position (cm$^{-1}$) | Intensity (count) | |
| Example 1 | 874 | 988 | 96 | 591 | 6924 | 0.14 |
| Example 2 | 865 | 570 | 91 | 589 | 3767 | 0.15 |
| Example 3 | 864 | 218 | 88 | 587 | 2055 | 0.11 |
| Example 4 | 849 | 147 | 87 | 583 | 1787 | 0.08 |
| Example 5 | 853 | 84 | 67 | 581 | 1334 | 0.06 |

Method for measuring ToF-SIMS

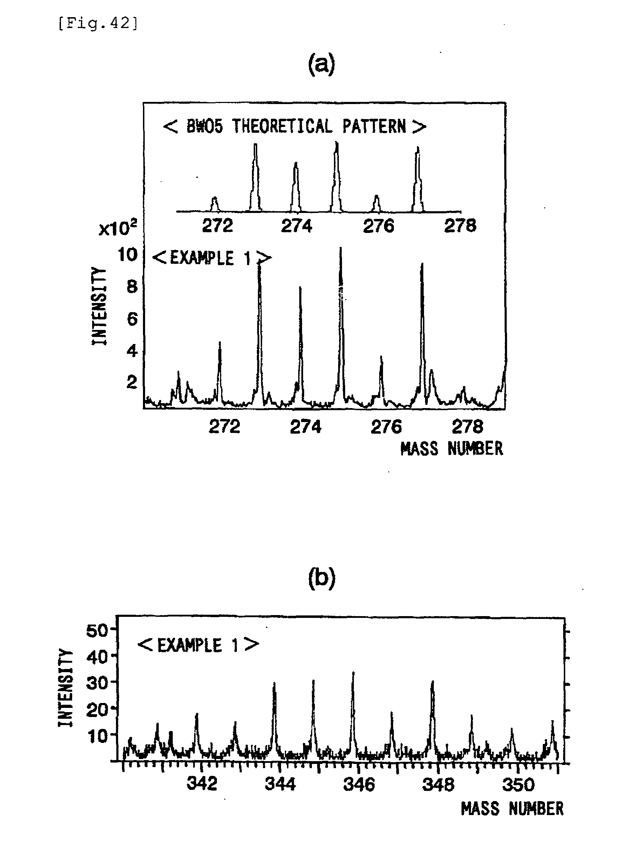

Regarding the positive electrode active material obtained in Example 1, ToF-SIMS was measured under the following measurement condition. The resulting ToF-SIMS pattern is shown in Fig. 42.

<Method for measuring ToF-SIMS>

Apparatus: ToF-SIMS IV produced by ION-TOF

Primary ion: $Bi_3^{++}$

Acceleration voltage: 25 kV

Irradiation current: 0.1 pA

Irradiation area: 200 $\mu$m $\times$ 200 $\mu$m

Integration time: 98 seconds

As shown in Fig. 42, six peaks originated from $BWO_5^-$ were detected within the mass number from 272 to 277 (Fig. 42 (a)). Furthermore, a group of peaks originated from $M'BWO_6^-$ were also detected, and particularly intense five peaks were detected within the mass number from 344 to 348 (Fig. 42 (b)).

COMPARATIVE EXAMPLE 1

A slurry was prepared by weighing $Li_2CO_3$, $Ni(OH)_2$, $Mn_3O_4$, CoOOH, and $Li_2WO_4$ in such a way that a molar ratio became Li:Ni:Mn:Co:W = 1.10:0.45:0.45:0.10:0.005, conducting mixing and, thereafter, adding pure water thereto. Solid matters in the resulting slurry were pulverized until the median size became 0.16 $\mu$m by using a circulating medium agitation type wet pulverizer while the slurry was agitated.

Subsequently, the resulting slurry (solid content 15 percent by weight, viscosity 1,720 cp) was spray-dried by using a two-fluid nozzle type spray dryer (Model LT-8: produced by Ohkawara Kakohki Co., Ltd.). Air was used as a drying gas at this time, the amount G of introduction of drying gas was specified to be 45 L/min, and the amount S of introduction of slurry was specified to be $6 \times 10^{-3}$ L/min (gas liquid ratio G/S = 7,500). The drying inlet temperature was specified to be 150°C. About 15 g of grained powder obtained by spray drying with the spray dryer was put into an alumina crucible, and firing was conducted in an air atmosphere at 1,000°C for 6 hours (temperature increase and decrease rate 3.33°C/min.). Thereafter, disintegration was conducted so as to obtain a lithium nickel manganese cobalt composite oxide (x = 0.097, y = 0.003, z = 0.114) having a volume resistivity of $5.4 \times 10^4$ $\Omega\cdot$cm, a carbon content C of 0.042 percent by weight, and a composition of $Li_{1.114}(Ni_{0.453}Mn_{0.450}Co_{0.097})O_2$ and having a layer structure. Furthermore, when a molar ratio of total (Ni, Mn, Co) was assumed to be 1, a molar ratio of contained W was 0.62 percent by mole. The average primary grain size was 0.4 $\mu$m, the median size was 1.4 $\mu$m, the 90% cumulative diameter ($D_{90}$) was 2.1 $\mu$m, the bulk density was 1.1 g/cc, and the BET specific surface area was 2.1 m$^2$/g. Moreover, the atomic ratio of W (tungsten), (W/(Ni + Mn + Co)), of primary grain surface was 9.8 times larger than the atomic ratio of W of the whole grain.

COMPARATIVE EXAMPLE 2

A slurry was prepared by weighing $Li_2CO_3$, $Ni(OH)_2$, $Mn_3O_4$, CoOOH, and $Li_2WO_4$ in such a way that a molar ratio became Li:Ni:Mn:Co:W = 1.10:0.45:0.45:0.10:0.01, conducting mixing and, thereafter, adding pure water thereto. Solid matters in the resulting slurry were pulverized until the median size became 0.17 $\mu$m by using a circulating medium agitation type wet pulverizer while the slurry was agitated.
Subsequently, the resulting slurry (solid content 15 percent by weight, viscosity 1,890 cp) was spray-dried by using a two-fluid nozzle type spray dryer (Model LT-8: produced by Ohkawara Kakohki Co., Ltd.). Air was used as a drying gas at this time, the amount G of introduction of drying gas was specified to be 45 L/min, and the amount S of introduction of slurry was specified to be $7 \times 10^{-3}$ L/min (gas liquid ratio G/S = 6,429). The drying inlet temperature was specified to be 150°C. About 15 g of grained powder obtained by spray drying with the spray dryer was put into an alumina crucible, and firing was conducted in an air atmosphere at 1,000°C for 6 hours (temperature increase and decrease rate 3.33°C/min.). Thereafter, disintegration was conducted so as to obtain a lithium nickel manganese cobalt composite oxide (x = 0.098, y = -0.002, z = 0.139) having a volume resistivity of $4.7 \times 10^4$ $\Omega\cdot$cm, a carbon content C of 0.030 percent by weight, and a composition of $Li_{1.139}(Ni_{0.450}Mn_{0.452}Co_{0.098})O_2$ and having a layer structure. Furthermore, when a molar ratio of total (Ni, Mn, Co) was assumed to be 1, a molar ratio of contained W was 1.03 percent by mole. The average primary grain size was 0.3 $\mu$m, the median size was 2.2 $\mu$m, the 90% cumulative diameter ($D_{90}$) was 3.9 $\mu$m, the bulk density was 1.0 g/cc, and the BET specific surface area was 2.9 m$^2$/g. Moreover, the atomic ratio of W (tungsten), (W/(Ni + Mn + Co)), of primary grain surface was 9.4 times larger than the atomic ratio of W of the whole grain.

COMPARATIVE EXAMPLE 3

A slurry was prepared by weighing $Li_2CO_3$, $Ni(OH)_2$, $Mn_3O_4$, CoOOH, and $Li_2WO_4$ in such a way that a molar ratio became Li:Ni:Mn:Co:W = 1.10:0.45:0.45:0.10:0.02, conducting mixing and, thereafter, adding pure water thereto. Solid matters in the resulting slurry were pulverized until the median size became 0.13 $\mu$m by using a circulating medium agitation type wet pulverizer while the slurry was agitated.
Subsequently, the resulting slurry (solid content 15 percent by weight, viscosity 1,910 cp) was spray-dried by using a two-fluid nozzle type spray dryer (Model LT-8: produced by Ohkawara Kakohki Co., Ltd.). Air was used as a drying gas at this time, the amount G of introduction of drying gas was specified to be 45 L/min, and the amount S of introduction of slurry was specified to be $7 \times 10^{-3}$ L/min (gas liquid ratio G/S = 6,429). The drying inlet temperature was specified to be 150°C. About 15 g of grained powder obtained by spray drying with the spray dryer was put into an alumina crucible, and firing was conducted in an air atmosphere at 1,000°C for 6 hours (temperature increase and decrease rate 3.33°C/min.). Thereafter, disintegration was conducted so as to obtain a lithium nickel manganese cobalt composite oxide (x = 0.097, y = 0.012, z = 0.124) having a volume resistivity of $1.1 \times 10^4$ $\Omega\cdot$cm, a carbon content C of 0.050 percent by weight, and a composition of $Li_{1.124}(Ni_{0.457}Mn_{0.446}Co_{0.097})O_2$ and having a layer structure. Furthermore, when a molar ratio of total (Ni, Mn, Co) was assumed to be 1, a molar ratio of contained W was 2.06 percent by mole. The average primary grain size was 0.2 $\mu$m, the median size was 0.8 $\mu$m, the 90% cumulative diameter ($D_{90}$) was 1.3 $\mu$m, the bulk density was 0.9 g/cc, and the BET specific surface area was 3.8 m$^2$/g. Moreover, the atomic ratio of W (tungsten), (W/(Ni + Mn + Co)), of primary grain surface was 6.0 times larger than the atomic ratio of W of the whole grain.

COMPARATIVE EXAMPLE 4

A slurry was prepared by weighing $Li_2CO_3$, $Ni(OH)_2$, $Mn_3O_4$, CoOOH, and $WO_3$ in such a way that a molar ratio became Li:Ni:Mn:Co:W = 1.10:0.45:0.45:0.10:0.005, conducting mixing and, thereafter, adding pure water thereto.

Solid matters in the resulting slurry were pulverized until the median size became 0.17 $\mu$m by using a circulating medium agitation type wet pulverizer while the slurry was agitated.

Subsequently, the resulting slurry (solid content 14 percent by weight, viscosity 1,670 cp) was spray-dried by using a two-fluid nozzle type spray dryer (Model LT-8: produced by Ohkawara Kakohki Co., Ltd.). Air was used as a drying gas at this time, the amount G of introduction of drying gas was specified to be 45 L/min, and the amount S of introduction of slurry was specified to be $7 \times 10^{-3}$ L/min (gas liquid ratio G/S = 6,429). The drying inlet temperature was specified to be 150°C. About 15 g of grained powder obtained by spray drying with the spray dryer was put into an alumina crucible, and firing was conducted in an air atmosphere at 1,000°C for 6 hours (temperature increase and decrease rate 3.33°C/min.). Thereafter, disintegration was conducted so as to obtain a lithium nickel manganese cobalt composite oxide (x = 0.097, y = 0.003, z = 0.094) having a volume resistivity of $5.8 \times 10^4$ $\Omega \cdot$cm, a carbon content C of 0.033 percent by weight, and a composition of $Li_{1.094}(Ni_{0.453}Mn_{0.450}Co_{0.097})O_2$ and having a layer structure. Furthermore, when a molar ratio of total (Ni, Mn, Co) was assumed to be 1, a molar ratio of contained W was 0.51 percent by mole. The average primary grain size was 0.5 $\mu$m, the median size was 1.6 $\mu$m, the 90% cumulative diameter ($D_{90}$) was 2.4 $\mu$m, the bulk density was 1.0 g/cc, and the BET specific surface area was 2.2 $m^2$/g. Moreover, the atomic ratio of W (tungsten), (W/(Ni + Mn + Co)), of primary grain surface was 12 times larger than the atomic ratio of W of the whole grain.

COMPARATIVE EXAMPLE 5

A slurry was prepared by weighing $Li_2CO_3$, $Ni(OH)_2$, $Mn_3O_4$, CoOOH, and $Li_2B_4O_7$ in such a way that a molar ratio became Li:Ni:Mn:Co:B = 1.10:0.45:0.45:0.10:0.005, conducting mixing and, thereafter, adding pure water thereto. Solid matters in the resulting slurry were pulverized until the median size became 0.16 $\mu$m by using a circulating medium agitation type wet pulverizer while the slurry was agitated.

Subsequently, the resulting slurry (solid content 15 percent by weight, viscosity 1,460 cp) was spray-dried by using a two-fluid nozzle type spray dryer (Model LT-8: produced by Ohkawara Kakohki Co., Ltd.). Air was used as a drying gas at this time, the amount G of introduction of drying gas was specified to be 45 L/min, and the amount S of introduction of slurry was specified to be $6 \times 10^{-3}$ L/min (gas liquid ratio G/S = 7,500). The drying inlet temperature was specified to be 150°C. About 15 g of grained powder obtained by spray drying with the spray dryer was put into an alumina crucible, and firing was conducted in an air atmosphere at 1,000°C for 6 hours (temperature increase and decrease rate 3.33°C/min.). Thereafter, disintegration was conducted so as to obtain a lithium nickel manganese cobalt composite oxide (x = 0.099, y = -0.001, z = 0.096) having a volume resistivity of $5.3 \times 10^4$ $\Omega \cdot$cm, a carbon content C of 0.047 percent by weight, and a composition of $Li_{1.096}(Ni_{0.450}Mn_{0.451}Co_{0.099})O_2$ and having a layer structure. Furthermore, when a molar ratio of total (Ni, Mn, Co) was assumed to be 1, a molar ratio of contained B was 0.24 percent by mole. The average primary grain size was 1.0 $\mu$m, the median size was 5.9 $\mu$m, the 90% cumulative diameter ($D_{90}$) was 8.9 $\mu$m, the bulk density was 1.8 g/cc, and the BET specific surface area was 0.8 $m^2$/g. Moreover, the atomic ratio of B (boron), (B/(Ni + Mn - Co)), of primary grain surface was 213 times larger than the atomic ratio of B of the whole grain.

COMPARATIVE EXAMPLE 6

A slurry was prepared by weighing $Li_2CO_3$, $Ni(OH)_2$, $Mn_3O_4$, CoOOH, and $H_3BO_3$ in such a way that a molar ratio became Li:Ni:Mn:Co:B = 1.10:0.45:0.45:0.10:0.005, conducting mixing and, thereafter, adding pure water thereto. Solid matters in the resulting slurry were pulverized until the median size became 0.22 $\mu$m by using a circulating medium agitation type wet pulverizer while the slurry was agitated.

Subsequently, the resulting slurry (solid content 15 percent by weight, viscosity 1,450 cp) was spray-dried by using a two-fluid nozzle type spray dryer (Model LT-8: produced by Ohkawara Kakohki Co., Ltd.). Air was used as a drying gas at this time, the amount G of introduction of drying gas was specified to be 45 L/min, and the amount S of introduction of slurry was specified to be $7 \times 10^{-3}$ L/min (gas liquid ratio G/S = 6,429). The drying inlet temperature was specified to be 150°C. About 15 g of grained powder obtained by spray drying with the spray dryer was put into an alumina crucible, and firing was conducted in an air atmosphere at 950°C for 6 hours (temperature increase and decrease rate 3.33°C/min.). Thereafter, disintegration was conducted so as to obtain a lithium nickel manganese cobalt composite oxide (x = 0.100, y = -0.007, z = 0.096) having a volume resistivity of $3.5 \times 10^4$ $\Omega \cdot$cm, a carbon content C of 0.065 percent by weight, and a composition of $Li_{1.096}(Ni_{0.447}Mn_{0.403}Co_{0.100})O_2$ and having a layer structure. Furthermore, when a molar ratio of total (Ni, Mn, Co) was assumed to be 1, a molar ratio of contained B was 0.39 percent by mole. The average primary grain size was 0.2 $\mu$m, the median size was 5.5 $\mu$m, the 90% cumulative diameter ($D_{90}$) was 8.6 $\mu$m, the bulk density was 1.2 g/cc, and the BET specific surface area was 1.8 $m^2$/g. Moreover, the atomic ratio of B (boron), (B/(Ni + Mn + Co)), of primary grain surface was 40 times larger than the atomic ratio of B of the whole grain.

COMPARATIVE EXAMPLE 7

A slurry was prepared by weighing $Li_2CO_3$, $Ni(OH)_2$, $Mn_3O_4$, CoOOH, and $H_3BO_3$ in such a way that a molar ratio became Li:Ni:Mn:Co:B = 1.10:0.45:0.45:0.10:0.005, conducting mixing and, thereafter, adding pure water thereto. Solid matters in the resulting slurry were pulverized until the median size became 0.22 $\mu$m by using a circulating medium agitation type wet pulverizer while the slurry was agitated.

Subsequently, the resulting slurry (solid content 15 percent by weight, viscosity 1,450 cp) was spray-dried by using a two-fluid nozzle type spray dryer (Model LT-8: produced by Ohkawara Kakohki Co., Ltd.). Air was used as a drying gas at this time, the amount G of introduction of drying gas was specified to be 45 L/min, and the amount S of introduction of slurry was specified to be $7 \times 10^{-3}$ L/min (gas liquid ratio G/S = 6,429). The drying inlet temperature was specified to be 150°C. About 15 g of grained powder obtained by spray drying with the spray dryer was put into an alumina crucible, and firing was conducted in an air atmosphere at 1,000°C for 6 hours (temperature increase and decrease rate 3.33°C/min.). Thereafter, disintegration was conducted so as to obtain a lithium nickel manganese cobalt composite oxide (x = 0.100, y = 0.007, z = 0.110) having a volume resistivity of $5.8 \times 10^4$ $\Omega$·cm, a carbon content C of 0.033 percent by weight, and a composition of $Li_{1.110}(Ni_{0.447}Mn_{0.453}Co_{0.100})O_2$ and having a layer structure. Furthermore, when a molar ratio of total (Ni, Mn, Co) was assumed to be 1, a molar ratio of contained B was 0.42 percent by mole. The average primary grain size was 0.8 $\mu$m, the median size was 5.3 $\mu$m, the 90% cumulative diameter ($D_{90}$) was 7.9 $\mu$m, the bulk density was 1.4 g/cc, and the BET specific surface area was 1.0 $m^2$/g. Moreover, the atomic ratio of B (boron), (B/(Ni + Mn + Co)), of primary grain surface was 113 times larger than the atomic ratio of B of the whole grain.

The compositions and property values of the lithium transition metal based compound powders produced in the above-described examples and comparative examples are shown in Table 2, Table 3, Table 4, and Table 5. Furthermore, the powder properties of the spray-dried substances serving as firing precursors are shown in Table 6.

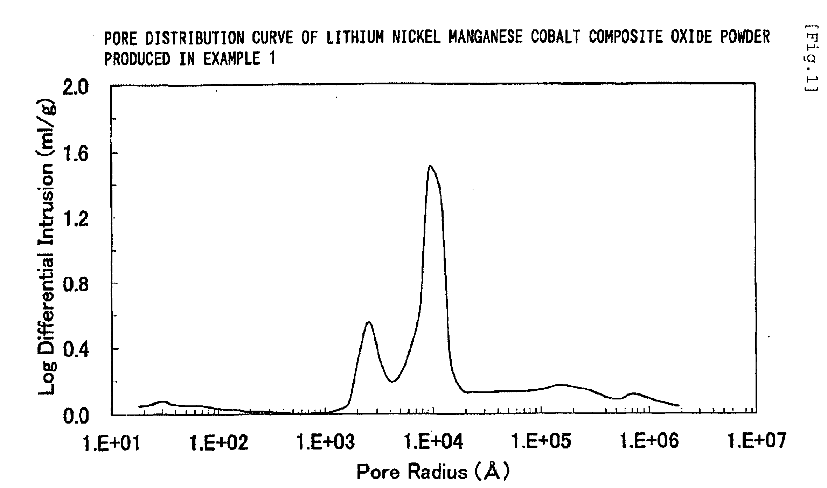

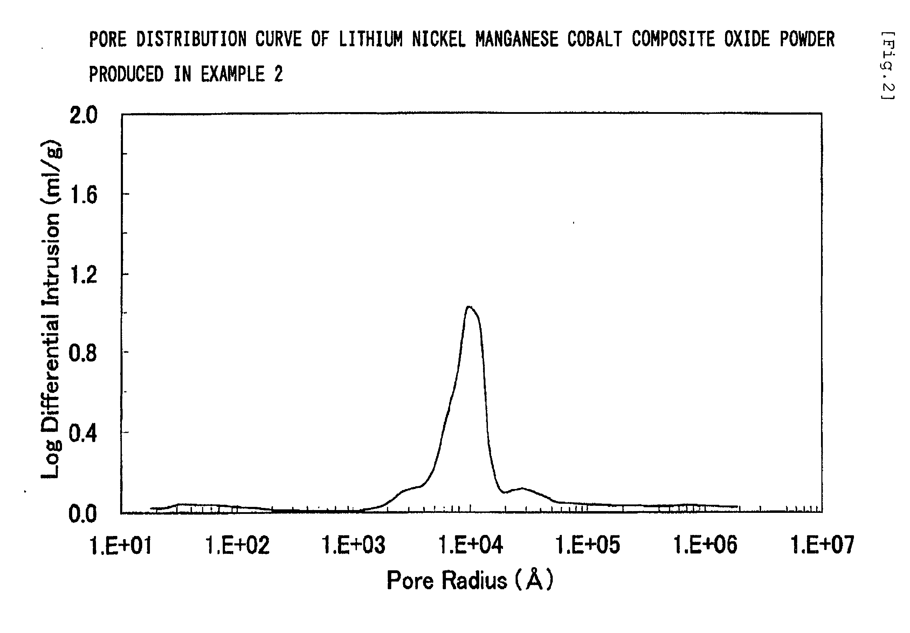

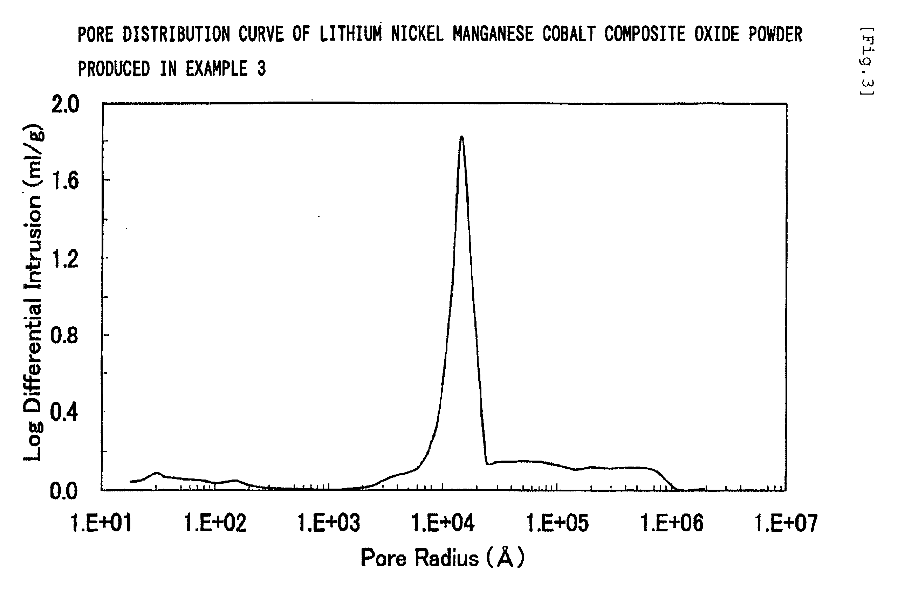

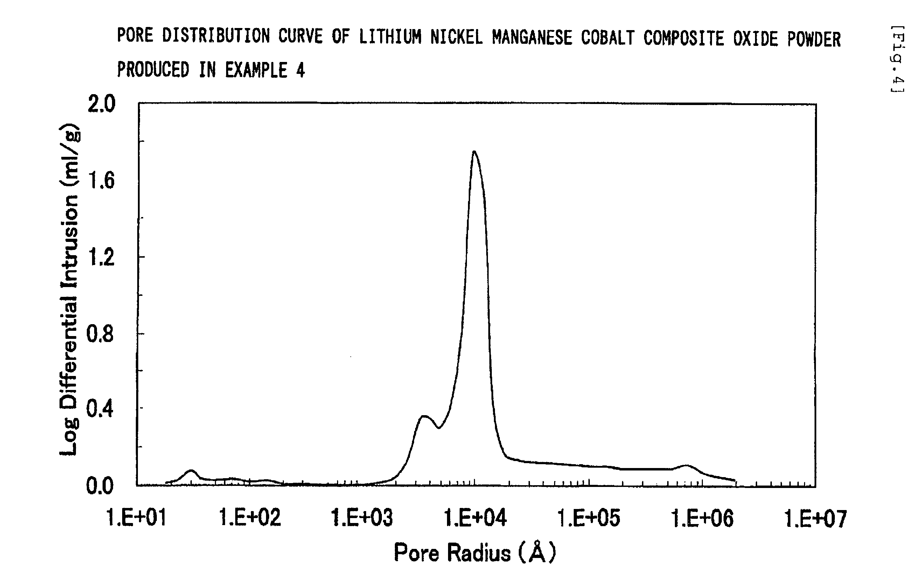

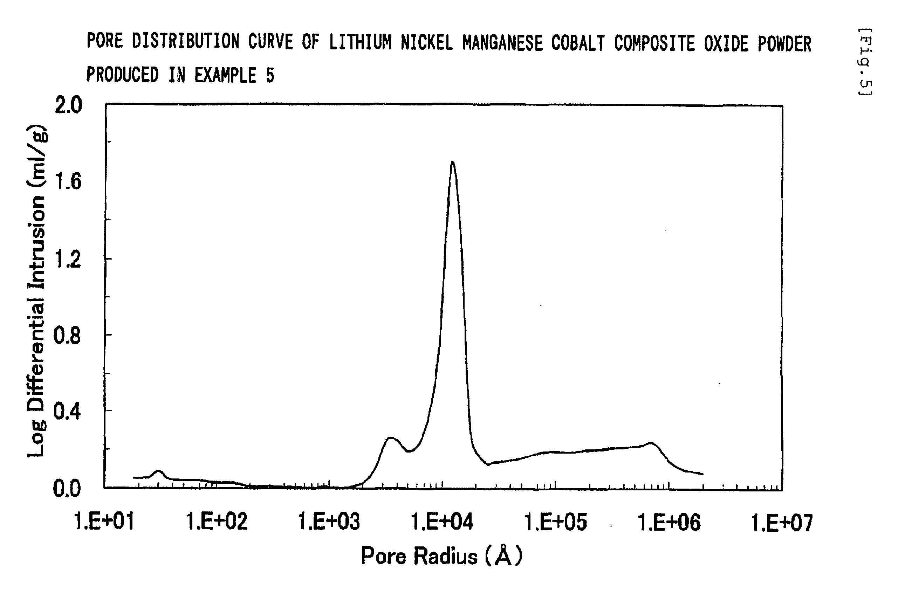

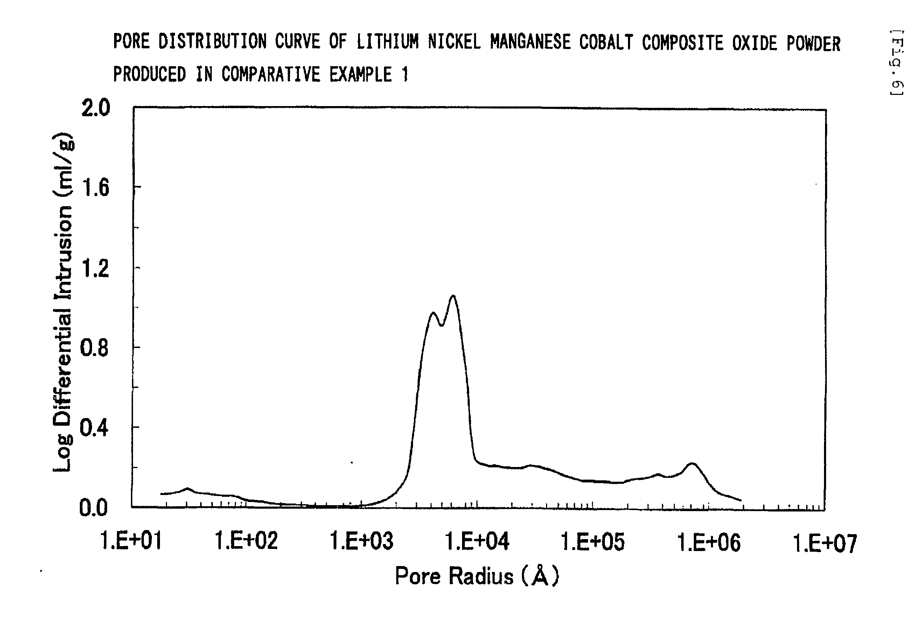

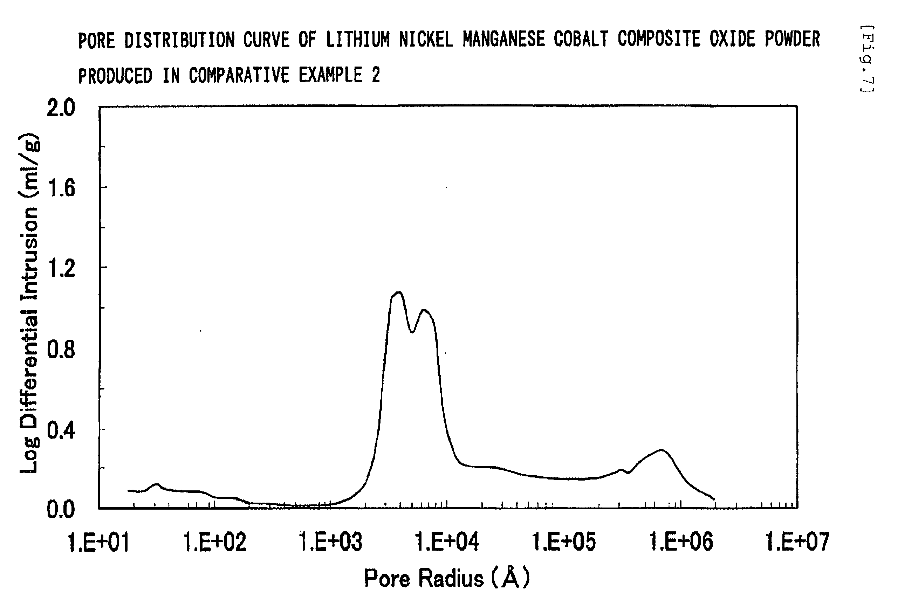

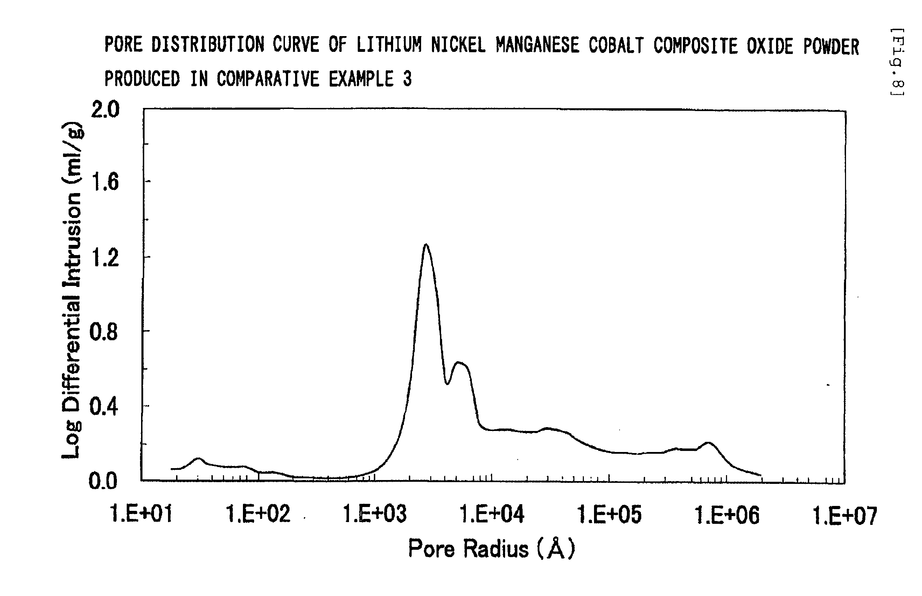

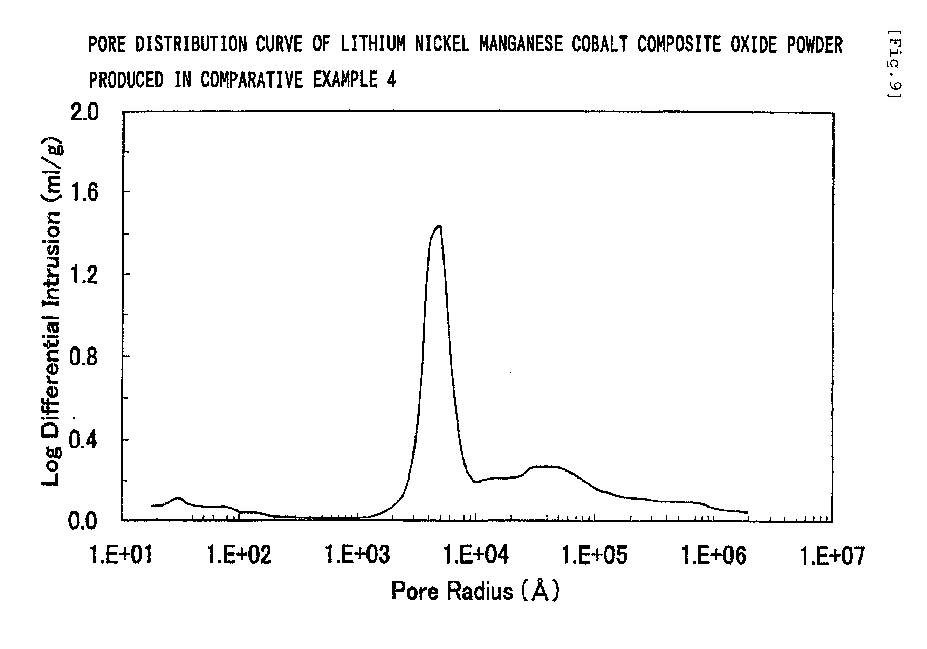

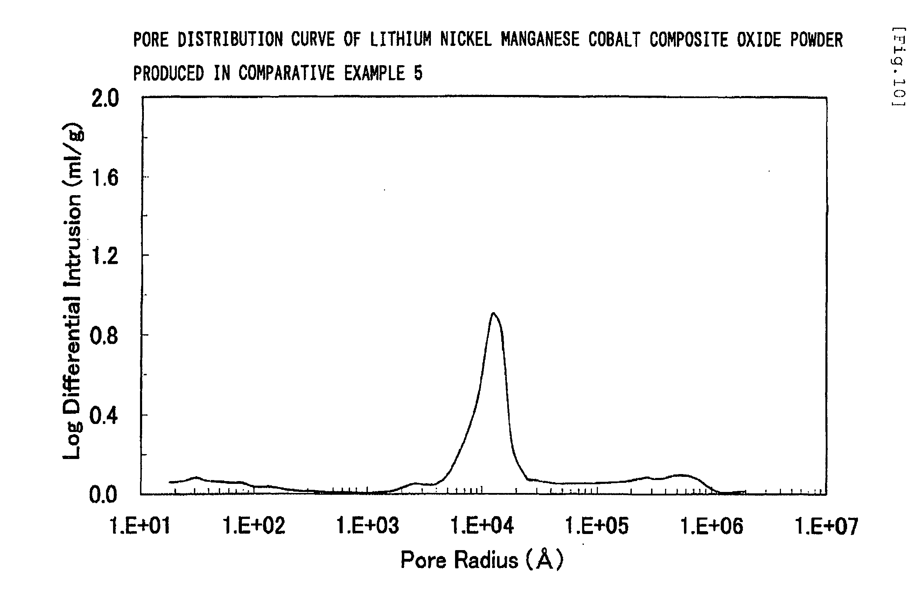

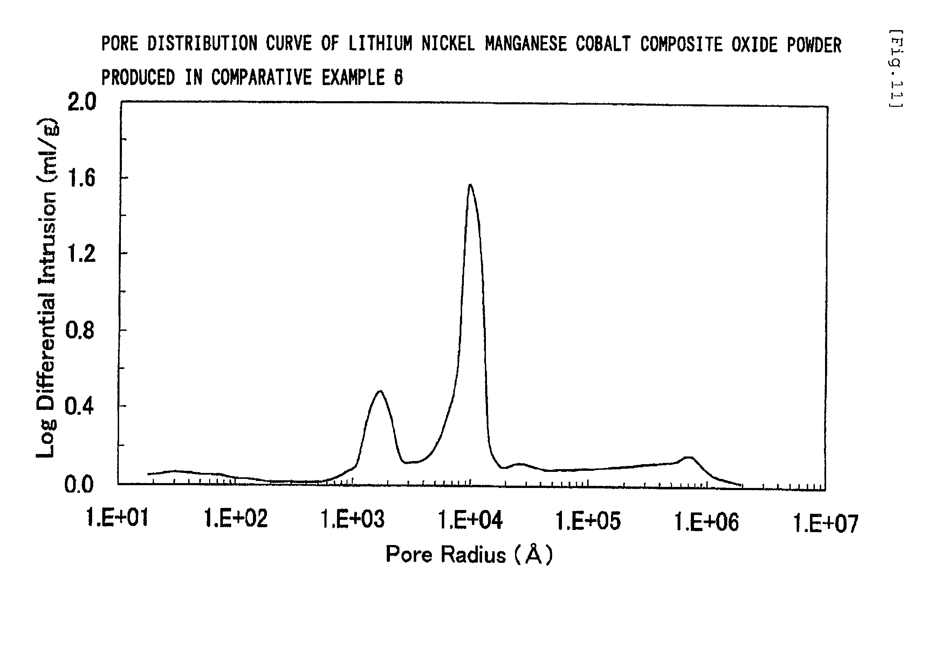

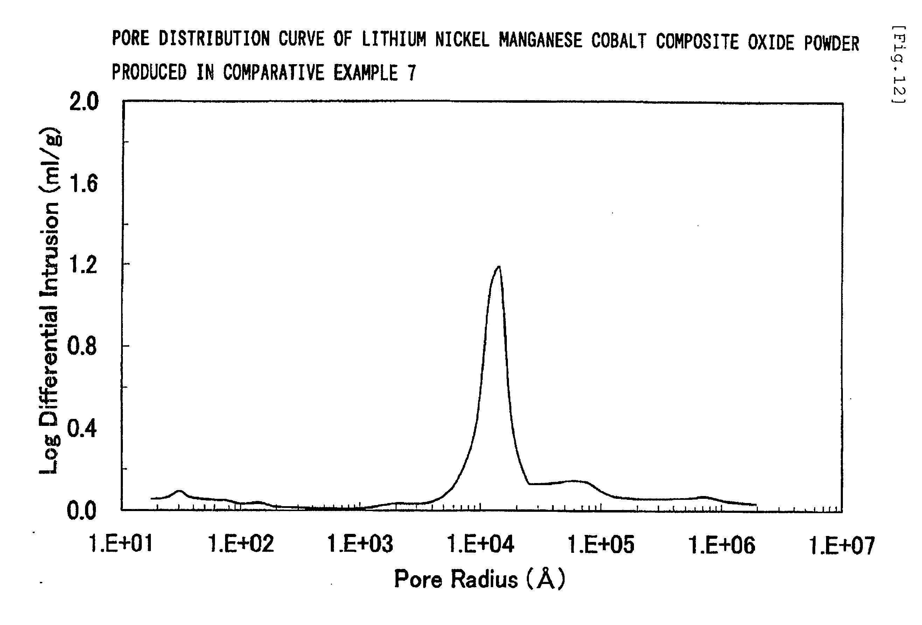

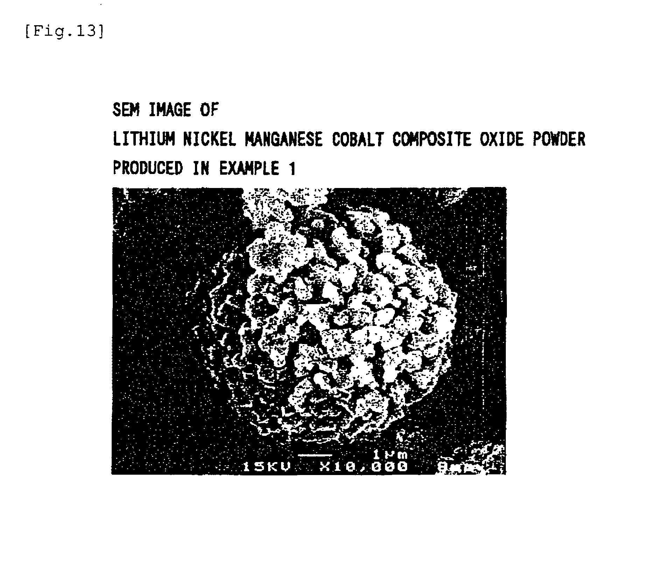

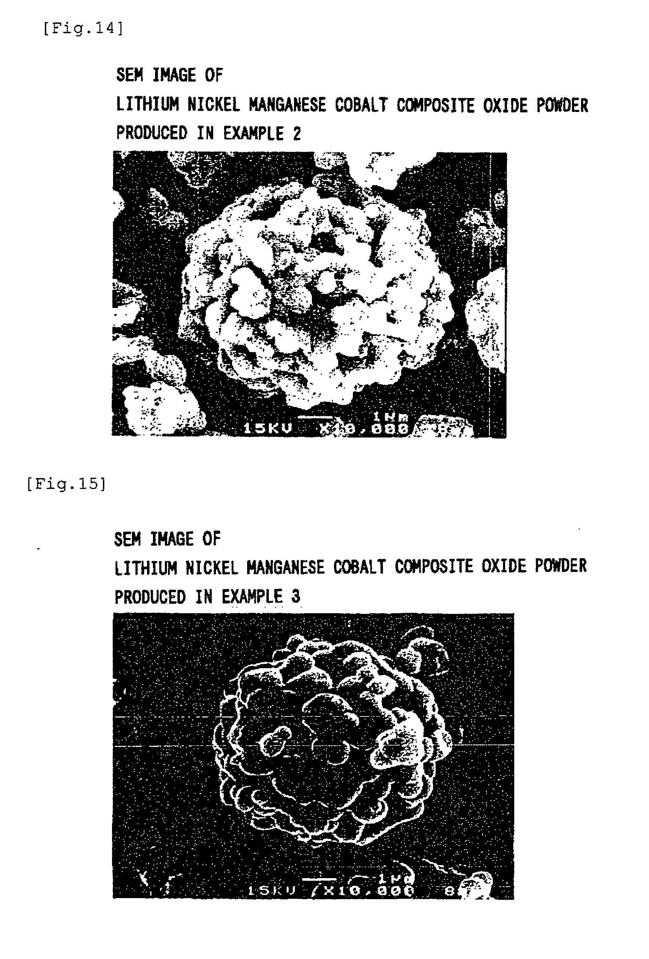

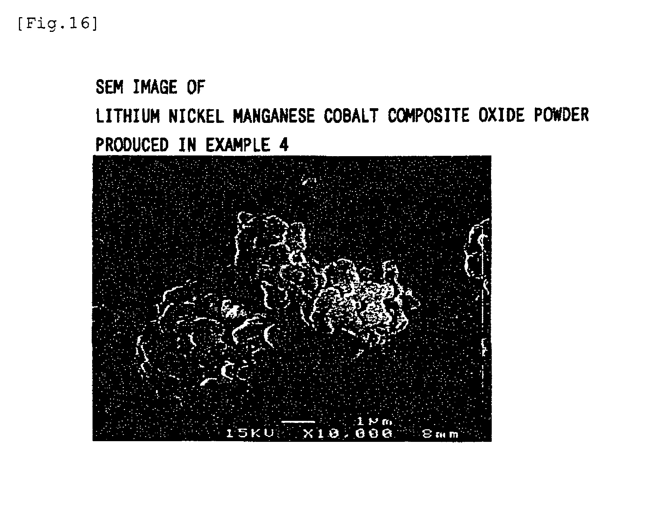

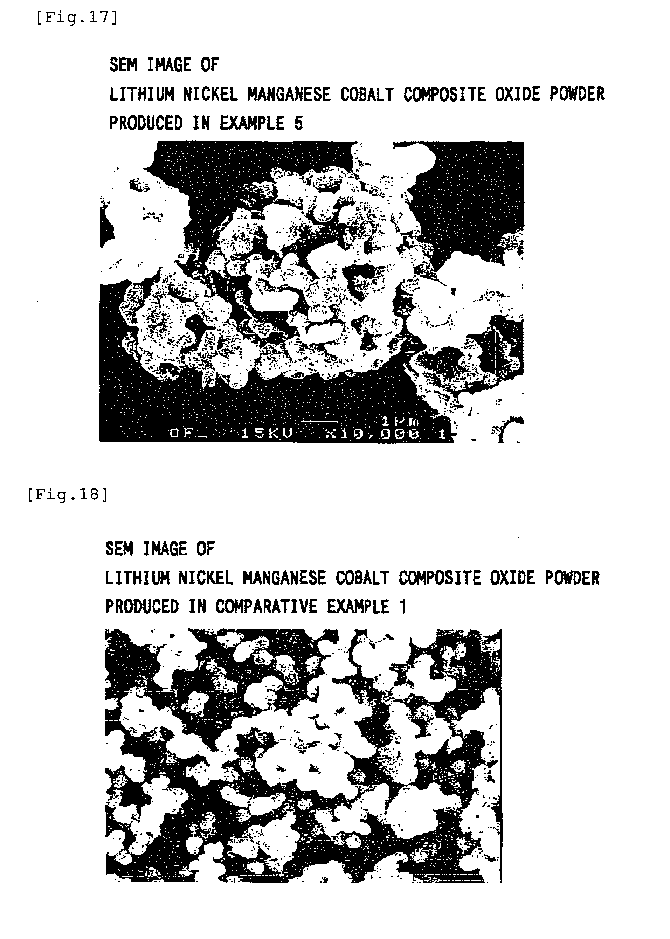

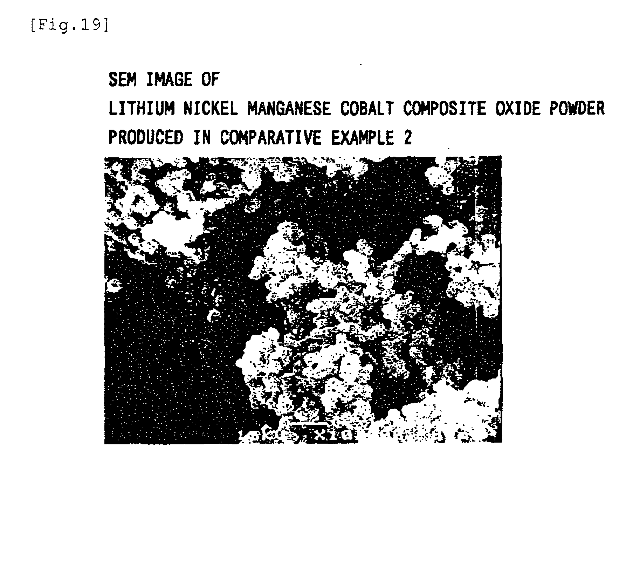

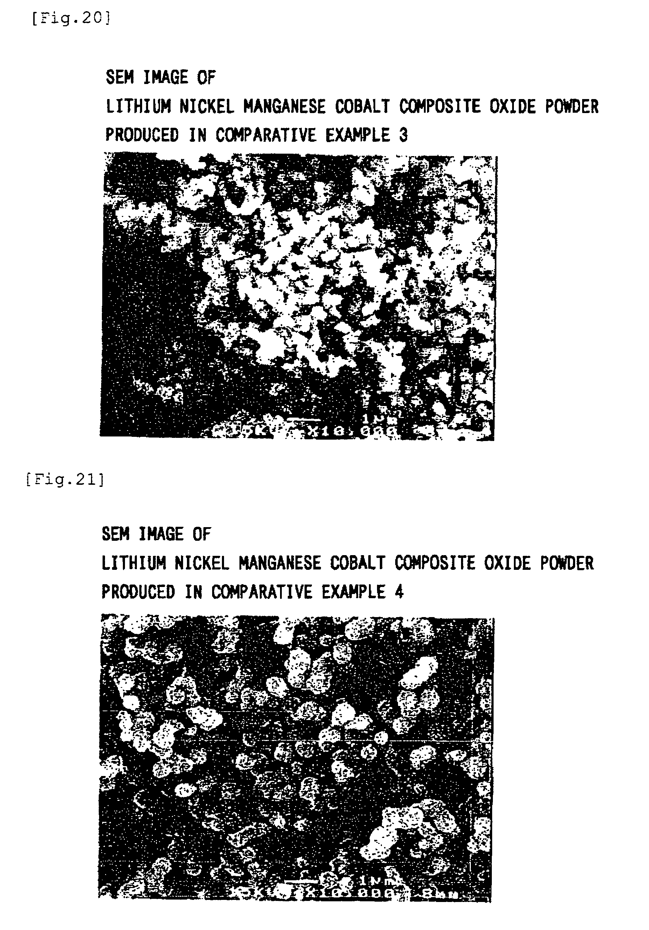

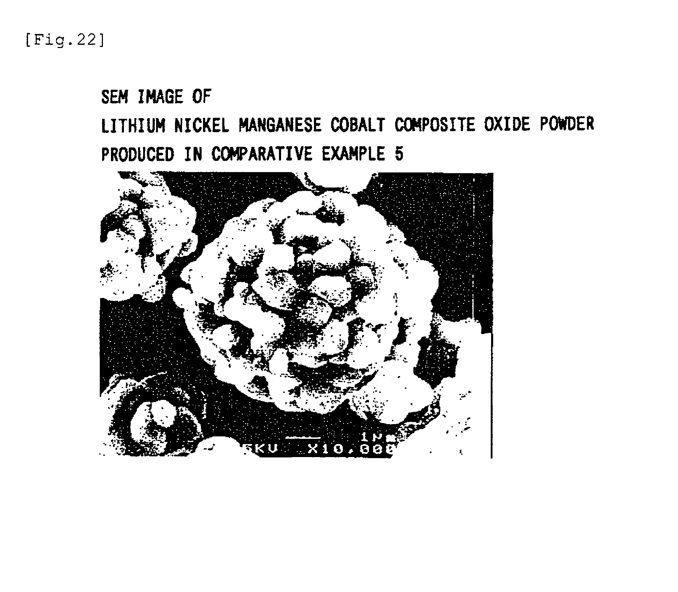

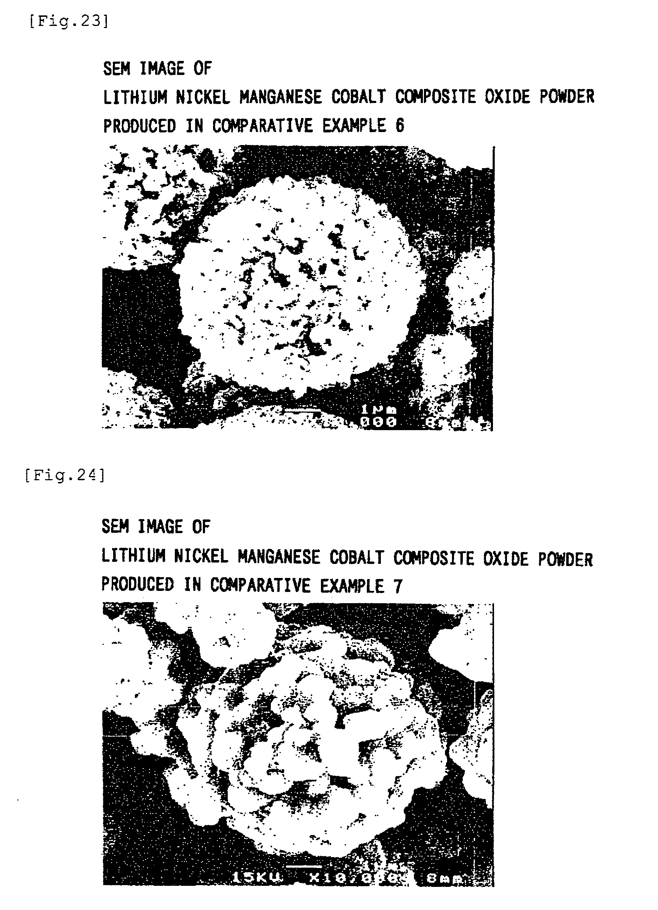

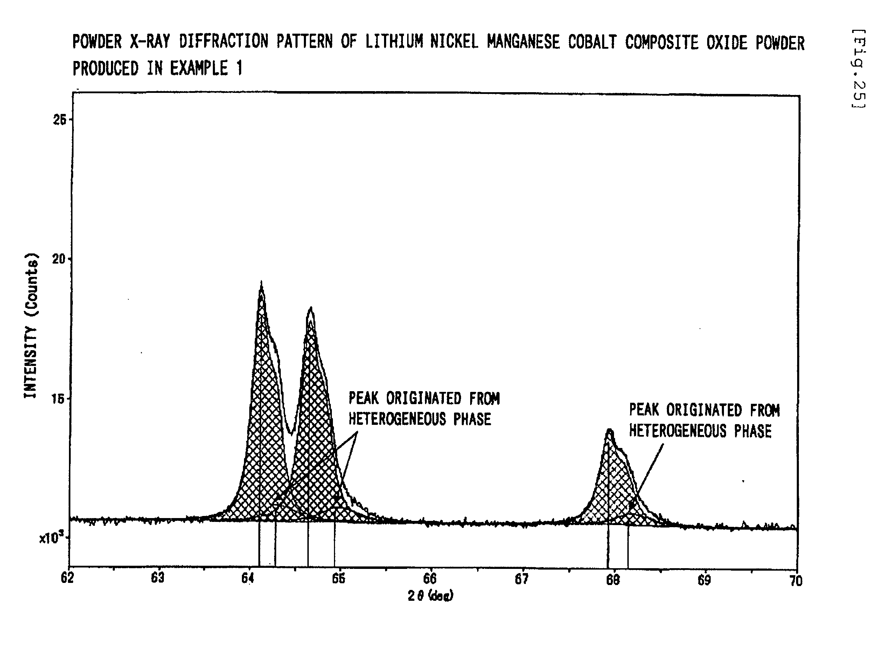

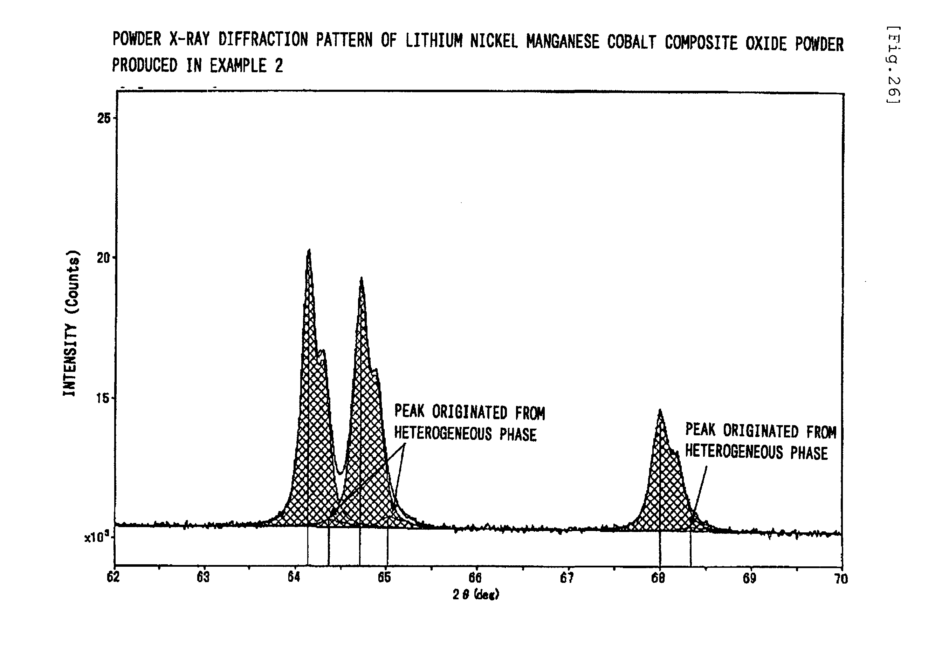

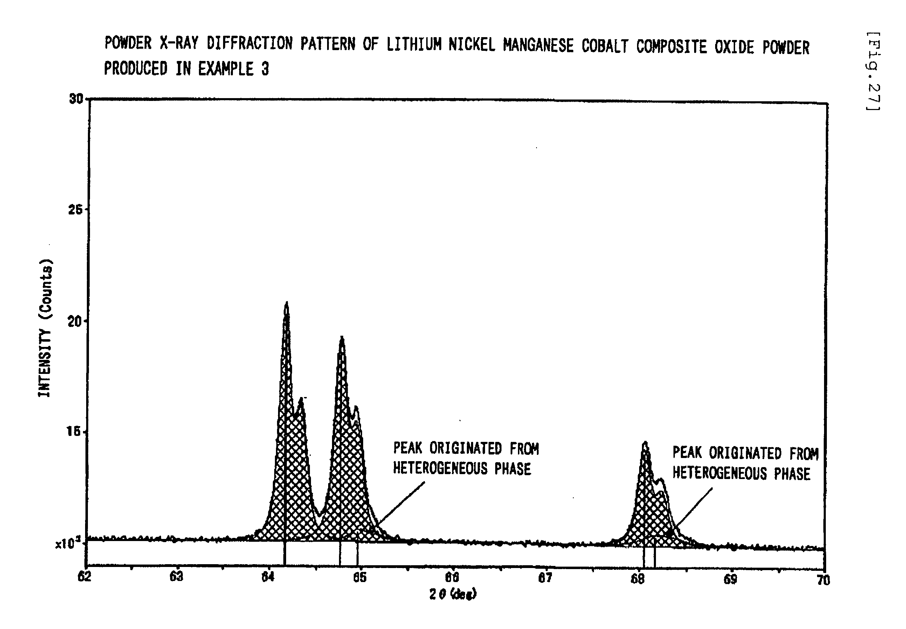

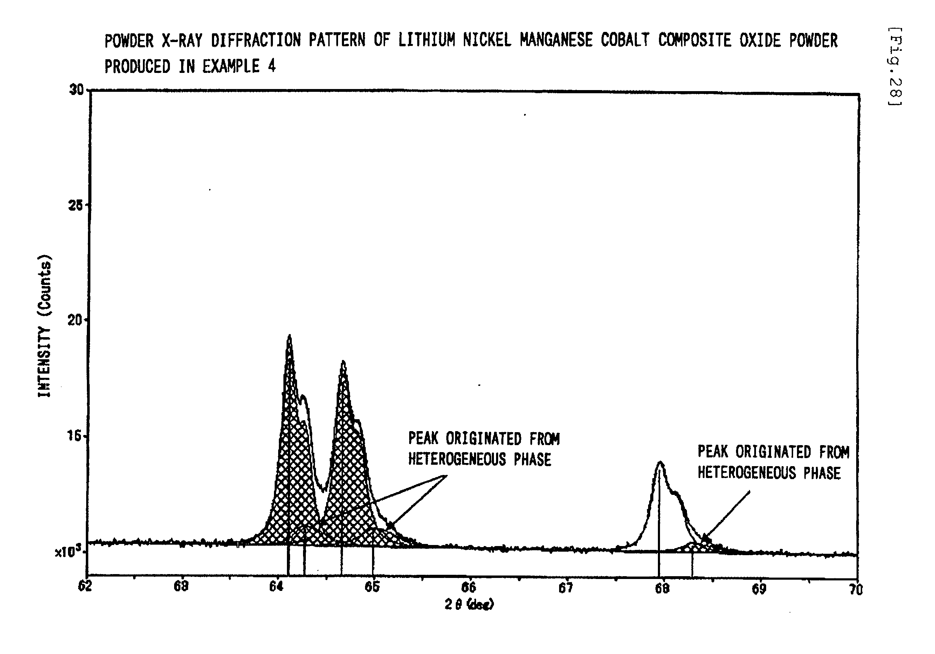

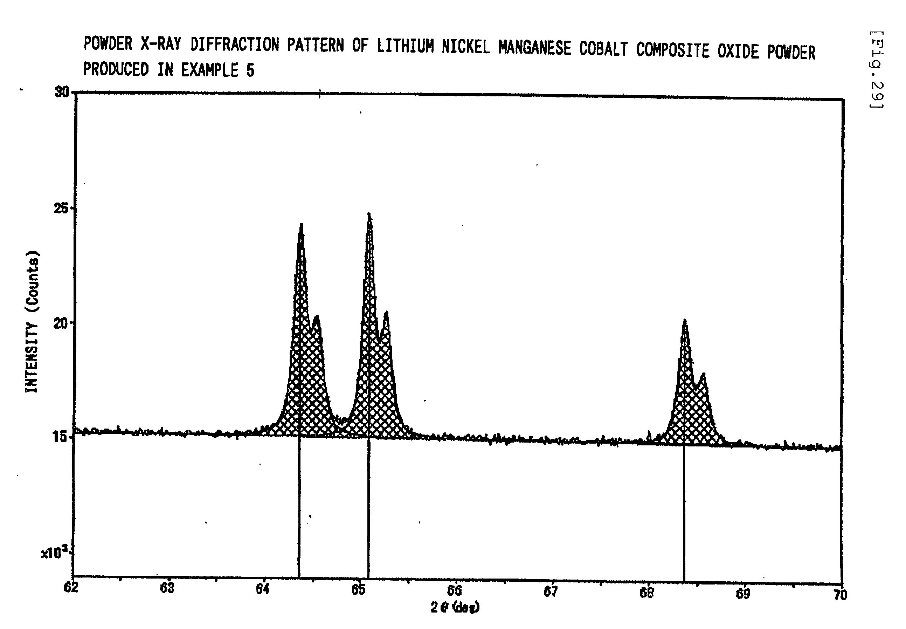

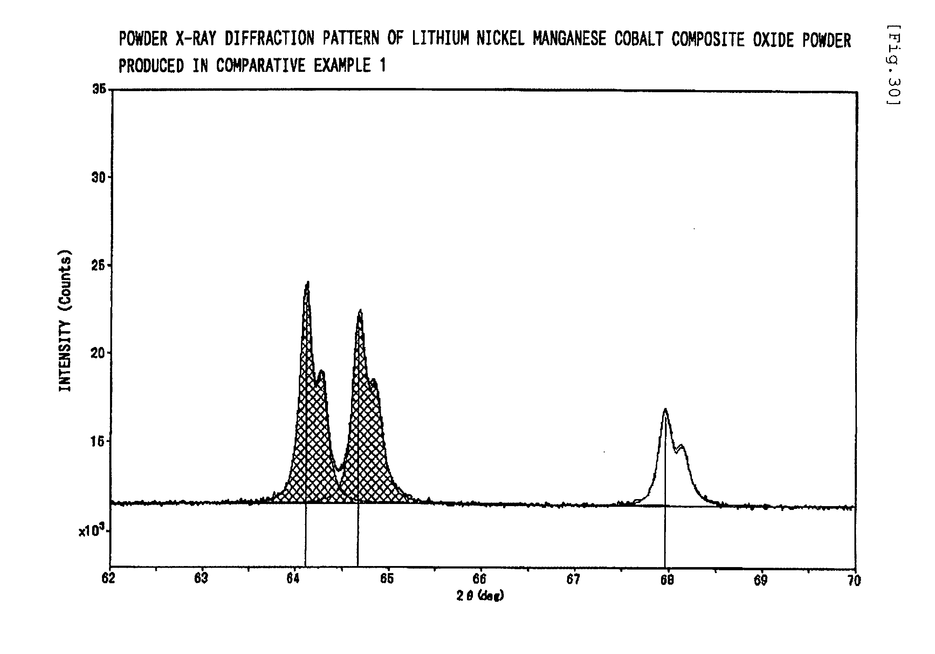

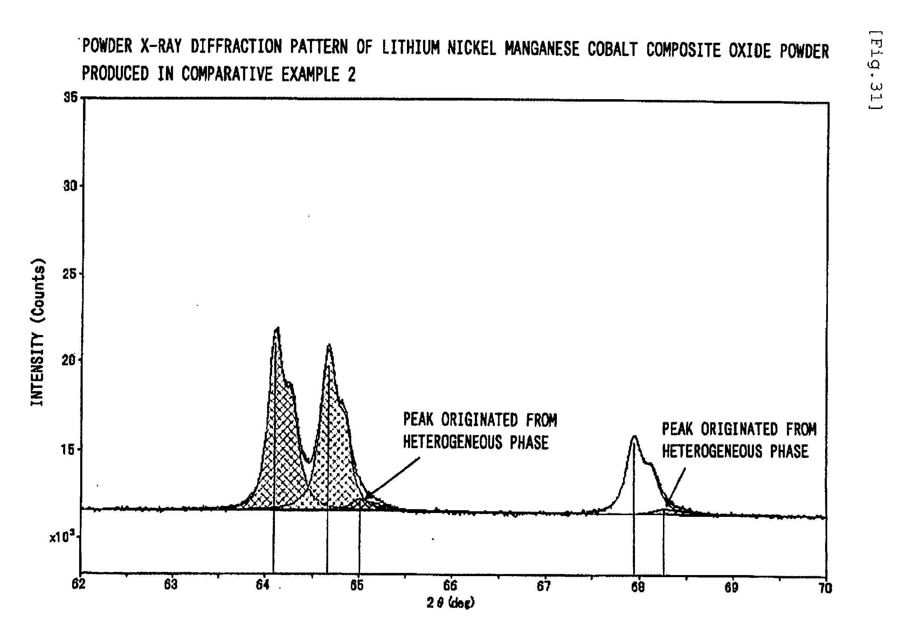

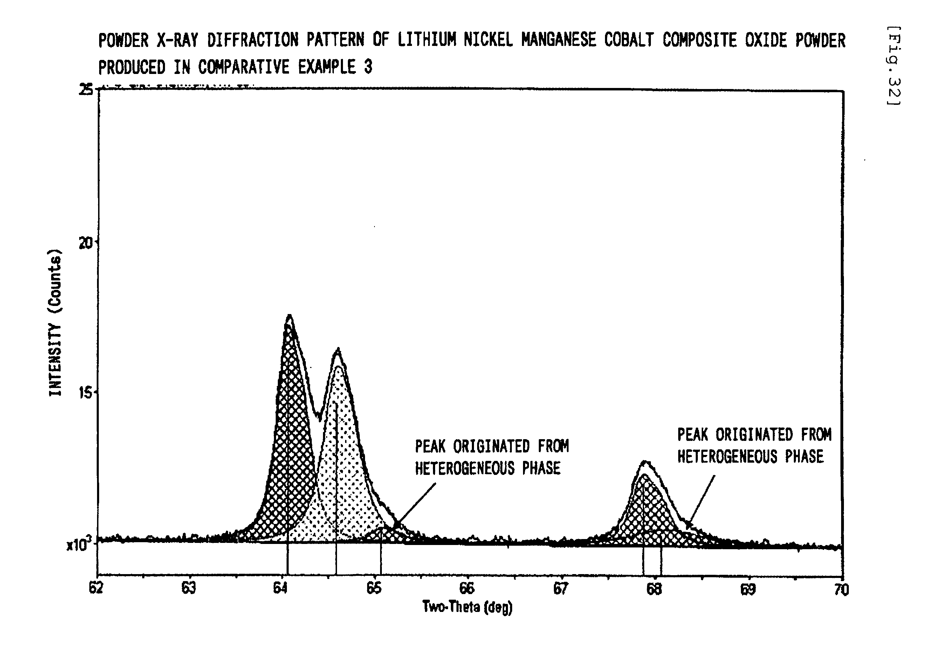

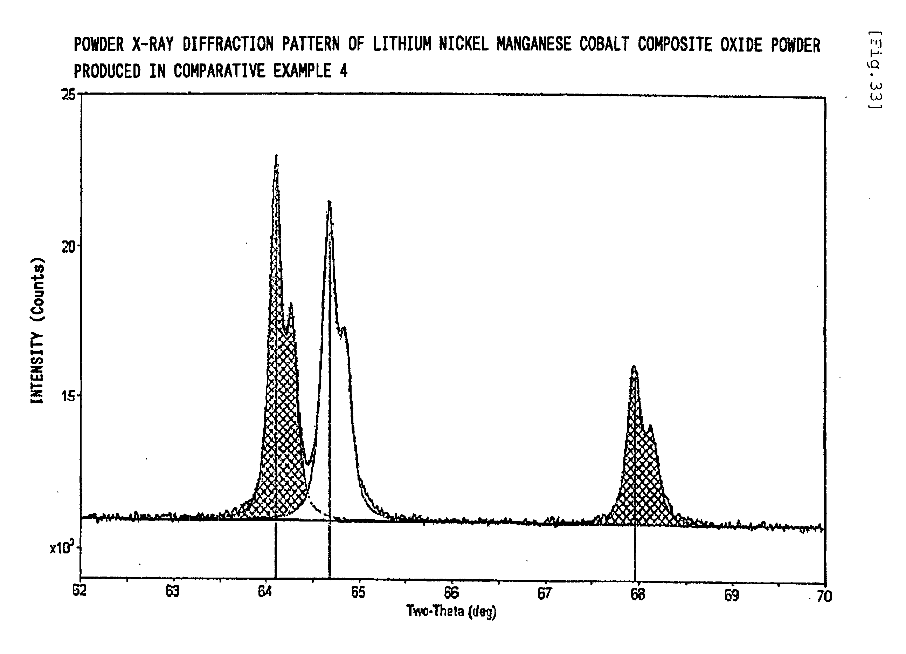

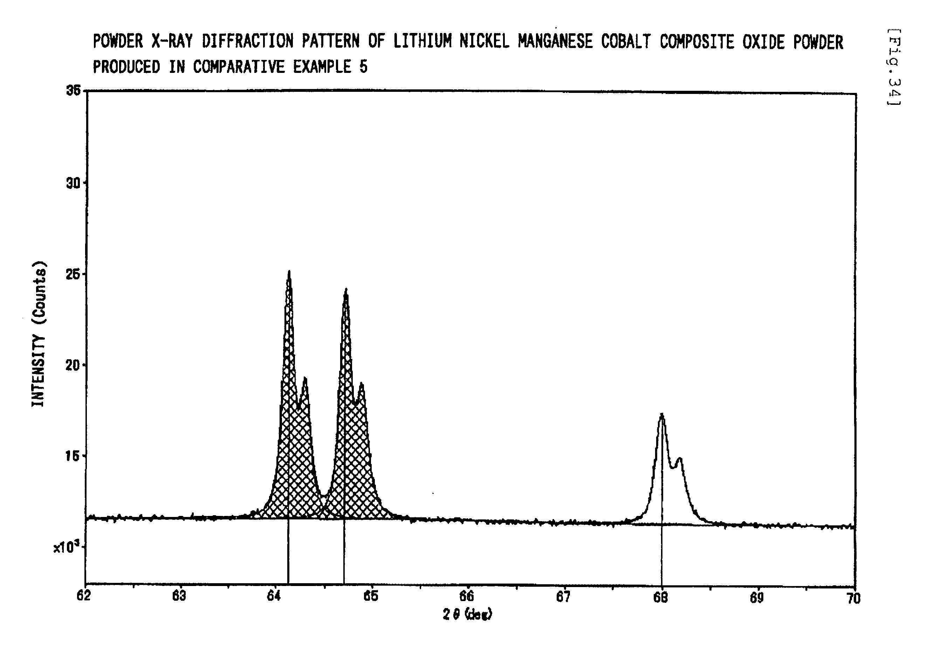

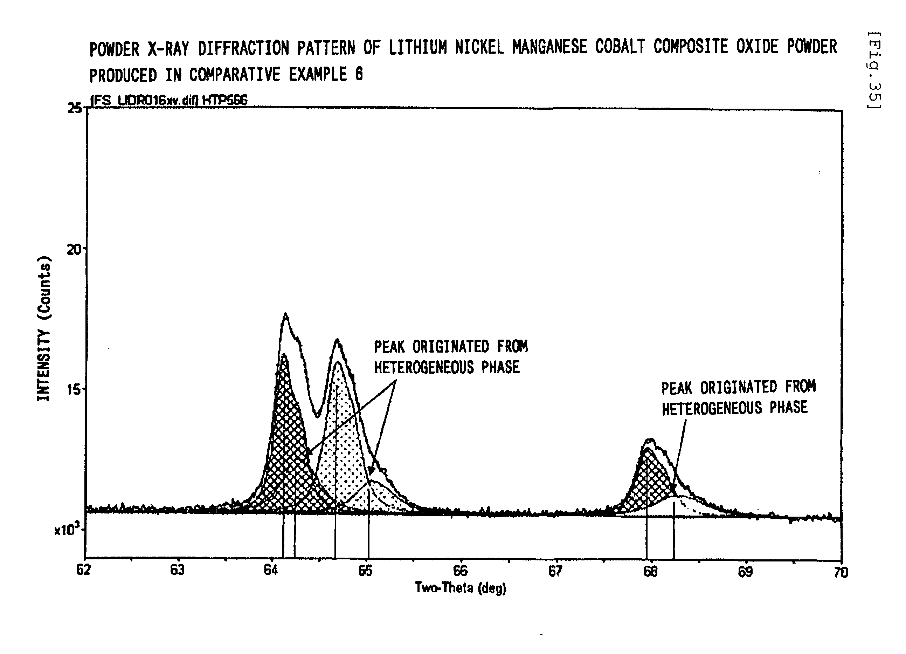

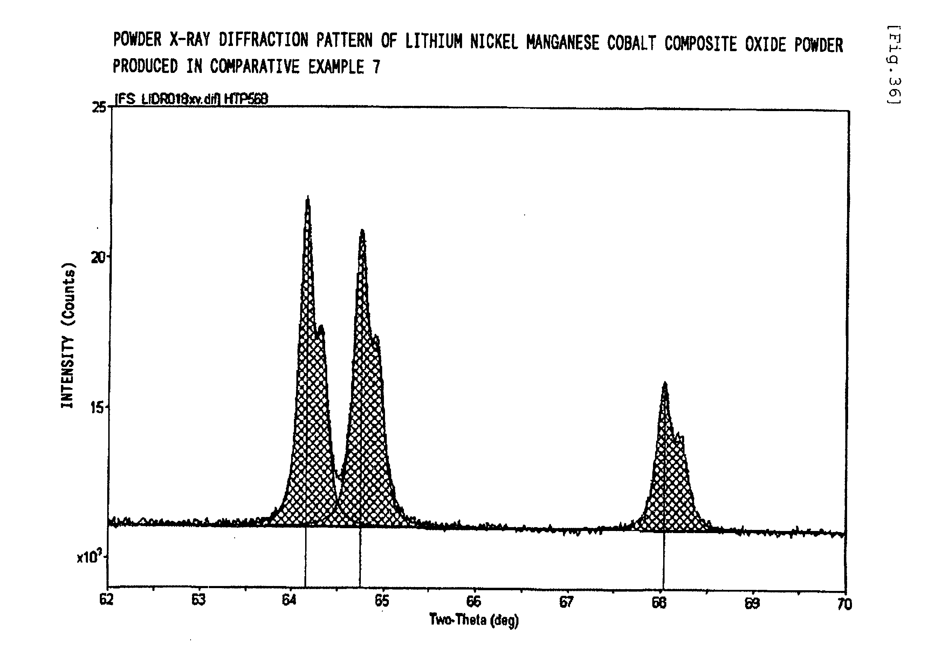

The pore distribution curves of the lithium nickel manganese cobalt composite oxides produced in Examples 1 to 5 and Comparative examples 1 to 7 are shown in Figs. 1 to 12, respectively. The SEM images (photographs) (magnification $\times$10,000) are shown in Figs. 13 to 24, respectively, and the powder X-ray diffraction patterns are shown in Figs. 25 to 36, respectively.

[Table 2]

| Positive electrode material | | Additive element 1 | Molar ratio (mol%) of Additive element 1 (B/Ni+Mn+Co) | | *1) | Additive element 2 | Molar ratio (mol%) of Additive element 2 (W/Ni+Mn+Co) | | *2) |
|---|---|---|---|---|---|---|---|---|---|
| | | | Charge value | Analysis value | | | Charge value | Analysis value | |
| Example | 1 | B | 0.5 | 0.39 | 69 | W | 1 | 0.96 | 6.0 |
| | 2 | B | 0.5 | 0.39 | 134 | W | 1 | 0.96 | 12 |
| | 3 | B | 0.25 | 0.23 | 71 | W | 0.5 | 0.51 | 16 |
| | 4 | B | 0.25 | 0.23 | 53 | W | 1.0 | 1.00 | 9.4 |
| | 5 | B | 0.5 | 0.41 | 73 | W | 0.5 | 0.50 | 15 |
| Comparative example | 1 | - | - | - | - | W | 0.5 | 0.62 | 9.8 |
| | 2 | - | - | - | - | W | 1 | 1.03 | 9.4 |
| | 3 | - | - | - | - | W | 2 | 2.06 | 6 |
| | 4 | - | - | - | - | W | 0.5 | 0.51 | 12 |
| | 5 | B | 0.5 | 0.24 | 213 | - | - | - | - |
| | 6 | B | 0.5 | 0.39 | 40 | - | - | - | - |
| | 7 | B | 0.5 | 0.42 | 113 | - | - | - | - |
| *1) Ratio of an atomic ratio of Additive elements 1 in total to a total of metal elements other than Li, Additive elements 1, and Additive elements 2 of a surface portion of a primary grain to the atomic ratio of the whole primary grain | | | | | | | | | |
| *2) Ratio of an atomic ratio of Additive elements 2 in total to a total of metal elements other than Li, Additive elements 1, and Additive elements 2 of a surface portion of a primary grain to the atomic ratio of the whole primary grain | | | | | | | | | |

[Table 3]

| Positive electrode material | | Amount of mercury penetration *3) (ml/g) | Pore radius (nm) | | Partial pore volume (ml/g) | | Average primary grain size (μm) | Median size (μm) | 90% Cumulative diameter ($D_{90}$)(μm) | Bulk density (g/cm³) | BET specific surface area (m²/g) | Judgment |
|---|---|---|---|---|---|---|---|---|---|---|---|---|
| | | | Peak top 1 *4) | Peak top 2 *5) | Peak top 1 *4) | Peak top 2 *5) | | | | | | |
| Example | 1 | 0.88 | 258 | 941 | 0.14 | 0.45 | 0.3 | 4.7 | 7 | 1.2 | 1.8 | ○ |
| | 2 | 0.53 | 259 | 944 | 0.04 | 0.36 | 0.6 | 4.1 | 6.2 | 1.5 | 1 | ○ |
| | 3 | 0.74 | 329 | 1448 | 0.03 | 0.44 | 1.0 | 3.6 | 5.7 | 1.3 | 0.8 | ○ |
| | 4 | 0.83 | 330 | 941 | 0.10 | 0.49 | 0.5 | 2.1 | 3.9 | 1.2 | 1.5 | ○ |
| | 5 | 0.89 | 328 | 1206 | 0.07 | 0.43 | 0.6 | 3.8 | 7.5 | 1.2 | 1.2 | ○ |
| Comparative example | 1 | 0.91 | - | 400,620 | - | 0.48 | 0.4 | 1.4 | 2.1 | 1.1 | 2.1 | × |
| | 2 | 1.05 | - | 401,621 | - | 0.59 | 0.3 | 2.2 | 3.9 | 1 | 2.9 | × |
| | 3 | 1.07 | 259 | 494 | 0.36 | 0.18 | 0.2 | 0.8 | 1.3 | 0.9 | 3.8 | × |
| | 4 | 0.88 | - | 494 | - | 0.44 | 0.5 | 1.6 | 2.4 | 1 | 2.2 | × |
| | 5 | 0.49 | - | 1210 | - | 0.3 | 1 | 5.9 | 8.9 | 1.8 | 0.8 | ○ |
| | 6 | 0.84 | 170 | 941 | 0.14 | 0.41 | 0.2 | 5.5 | 8.6 | 1.2 | 2.8 | × |
| | 7 | 0.57 | 209 | 1447 | 0.01 | 0.34 | 0.8 | 5.3 | 7.9 | 1.4 | 1 | ○ |

*3) The amount of mercury penetration during penetration during pressurization from a pressure of 3.86 kPa to 413 MPa in a measurement based on a mercury penetration method
*4) Related to subpeaks observed at 80 nm or more, and less than 300 nm (pore radius) or 300 nm or more, and less than 400 nm (pore radius) in a pore distribution curve
*5) Related to main peak observed at 300 nm or more (pore radius) in a pore distribution curve

[Table 4]

| Positive electrode material | | Composition | | | | | Carbon content C (percent by weight) | Volume resistivity ($\Omega \cdot$cm) | Judgment |
|---|---|---|---|---|---|---|---|---|---|
| | | x | y | z | Lower limit of z *6) | Upper limit of z *7) | | | |
| Example | 1 | 0.098 | 0.000 | 0.118 | 0.045 | 0.180 | 0.064 | $2.5 \times 10^6$ | O |
| | 2 | 0.098 | −0.007 | 0.129 | 0.051 | 0.186 | 0.038 | $1.5 \times 10^6$ | O |
| | 3 | 0.097 | −0.010 | 0.135 | 0.054 | 0.188 | 0.038 | $7.3 \times 10^5$ | O |
| | 4 | 0.098 | −0.004 | 0.134 | 0.049 | 0.184 | 0.047 | $3.0 \times 10^6$ | O |
| | 5 | 0.333 | −0.004 | 0.054 | 0.016 | 0.136 | 0.031 | $2.0 \times 10^6$ | O |
| Comparative example | 1 | 0.097 | 0.003 | 0.114 | 0.042 | 0.178 | 0.042 | $5.4 \times 10^4$ | O |
| | 2 | 0.098 | −0.002 | 0.139 | 0.047 | 0.182 | 0.030 | $4.7 \times 10^4$ | O |
| | 3 | 0.097 | 0.012 | 0.124 | 0.035 | 0.171 | 0.050 | $1.1 \times 10^4$ | O |
| | 4 | 0.097 | 0.003 | 0.094 | 0.042 | 0.178 | 0.033 | $5.8 \times 10^4$ | O |
| | 5 | 0.099 | −0.001 | 0.096 | 0.046 | 0.181 | 0.047 | $5.3 \times 10^4$ | O |
| | 6 | 0.100 | −0.007 | 0.096 | 0.051 | 0.186 | 0.065 | $3.5 \times 10^4$ | × |
| | 7 | 0.100 | −0.007 | 0.110 | 0.051 | 0.186 | 0.033 | $5.8 \times 10^4$ | O |

*6) When $0 \leqq x \leqq 0.1$, $(1 - x)(0.05 - 0.98y)$, and when $0.1 < x \leqq 0.35$, $(1 - x)(0.02 - 0.98y)$

*7): $(1-x)(0.20-0.88y)$

[Table 5]

| Positive electrode material | | FWHM (110) | Integrated intensity | | | Integrated intensity ratio | | |
|---|---|---|---|---|---|---|---|---|
| | | | $I_{018}(I_{018}{}^{*})$ | $I_{110}(I_{110}{}^{*})$ | $I_{113}(I_{113}{}^{*})$ | $I_{018}{}^{*}/I_{018}$ | $I_{110}{}^{*}/I_{110}$ | $I_{113}{}^{*}/I_{113}$ |
| Example | 1 | 0.219 | 1906(176) | 1821(202) | 845(137) | 0.092 | 0.111 | 0.162 |
| | 2 | 0.178 | 1964(64) | 1854(105) | 1009(42) | 0.033 | 0.057 | 0.042 |
| | 3 | 0.156 | 1898 (heterogeneous phase is not detected) | 1747(146) | 862(207) | 0 | 0.084 | 0.240 |
| | 4 | 0.185 | 1787(230) | 1693(261) | 904(115) | 0.130 | 0.154 | 0.127 |
| | 5 | 0.129 | 1639 (heterogeneous phase is not detected) | 1622 (heterogeneous phase is not detected) | 951 (heterogeneous phase is not detected) | 0 | 0 | 0 |
| Comparative example | 1 | 0.169 | 2248 (heterogeneous phase is not detected) | 2184 (heterogeneous phase is not detected) | 1118 (heterogeneous phase is not detected) | 0 | 0 | 0 |
| | 2 | 0.193 | 2238 (heterogeneous phase is not detected) | 2062(160) | 1049(73) | 0 | 0.078 | 0.07 |
| | 3 | 0.339 | 2066 (heterogeneous phase is not detected) | 2043(50) | 766(397) | 0 | 0.024 | 0.518 |
| | 4 | 0.169 | 2123 (heterogeneous phase is not detected) | 2112 (heterogeneous phase is not detected) | 1081 (heterogeneous phase is not detected) | 0 | 0 | 0 |
| | 5 | 0.137 | 2201 (heterogeneous phase is not detected) | 2156 (heterogeneous phase is not detected) | 1134 (heterogeneous phase is not detected) | 0 | 0 | 0 |
| | 6 | 0.477 | 1373(711) | 1588(445) | 696(360) | 0.518 | 0.28 | 0.517 |
| | 7 | 0.175 | 2117 (heterogeneous phase is not detected) | 2072 (heterogeneous phase is not detected) | 1063 (heterogeneous phase is not detected) | 0 | 0 | 0 |

[Table 6]

| Powder properties of spray-dried substance | | | | | | | |
|---|---|---|---|---|---|---|---|
| Positive electrode material | | Median size ($\mu$m) *8) | | | | Bulk density (g/cm$^3$) | BET specific surface area (m$^2$/g) |
| | | US 0min. | US 1min. | US 3min. | US 5min. | | |
| Example | 1 | 6.4 | 4.7 | 0.5 | 0.4 | 0.9 | 59.7 |
| | 2 | 5.3 | 1.0 | 0.3 | 0.3 | 0.9 | 55.5 |
| | 3 | 5.7 | 3.6 | 0.5 | 0.4 | 0.9 | 44.3 |
| | 4 | 5.6 | 3.3 | 0.4 | 0.4 | 0.9 | 54.5 |
| | 5 | 6.5 | 4.7 | 1.5 | 0.7 | 0.9 | 68.3 |

(continued)

| Powder properties of spray-dried substance | | | | | | |
|---|---|---|---|---|---|---|
| Positive electrode material | | Median size ($\mu$m) *8) | | | | Bulk density (g/cm$^3$) | BET specific surface area (m$^2$/g) |
| | | US 0min. | US 1min. | US 3min. | US 5min. | | |
| Comparative example | 1 | 6.4 | 5.8 | 4.1 | 1.9 | 0.9 | 59.8 |
| | 2 | 6.7 | 6.0 | 4.4 | 0.8 | 0.9 | 60.4 |
| | 3 | 6.5 | 5.3 | 2.7 | 0.5 | 0.9 | 58.5 |
| | 4 | 6.4 | 5.1 | 2.5 | 0.5 | 0.9 | 59.5 |
| | 5 | 7.6 | 5.7 | 2.9 | 1.6 | 0.9 | 59.4 |
| | 6 | 7.8 | 5.4 | 0.5 | 0.4 | 0.9 | 57.8 |
| | 7 | 7.8 | 5.4 | 0.5 | 0.4 | 0.9 | 57.8 |
| *8) US represents a treatment by ultrasonic dispersion "Ultra Sonic dispersion". and the following numerical value represents a treatment time (minute). | | | | | | | |

[Preparation of battery and evaluation]

Each of the lithium transition metal based compound powders produced in Examples 1 to 5 and Comparative examples 1 to 7 described above was used as a positive electrode material (positive electrode active material). A lithium secondary battery was prepared by the following method and evaluation was conducted.

(1) Rate test:

Regarding each of the lithium transition metal based compound powders produced in Examples 1 to 5 and Comparative examples 1 to 7, 75 percent by weight of the compound powder, 20 percent by weight of acetylene black, and 5 percent by weight of polytetrafluoroethylene powder were weighed and mixed with a mortar sufficiently. The resulting mixture was shaped into a sheet and subjected to punching with a punch of 9 mm diameter. At this time, the whole weight was adjusted to become about 8 mg. This was contact-bonded to an aluminum expanded metal so as to produce a positive electrode of 9 mm diameter.

A coin type cell was assembled by using the resulting positive electrode of 9 mm diameter as a test electrode, a lithium metal sheet as a counter electrode, and an electrolytic solution in which 1 mol/L of LiPF$_6$ was dissolved into a solvent of EC (ethylene carbonate):DMC (dimethyl carbonate):EMC (ethyl methyl carbonate) = 3:3:4 (volume ratio), wherein a porous polyethylene film of 25 $\mu$m thickness was used as a separator.

Regarding the resulting coin type cell, in initial 2 cycles, an upper limit charge voltage was set at 4.4 V, constant-current·constant-voltage charge (constant-current charge at a current density: 0.137 mA/cm$^2$ (0.1C) was conducted up to 4.4 V and, thereafter, constant-voltage charge was conducted until 0.01C was reached) was conducted. Subsequently, a lower limit discharge voltage was set at 3.0 V, and constant-current discharge (current density 0.137 mA/cm$^2$ (0.1C)) was conducted. Furthermore, in 3rd to 10th cycle, the test was conducted, wherein constant-current·constant-voltage charge at 0.2C (constant-current charge at 0.2C was conducted up to 4.4 V and, constant-voltage charge was conducted until 0.01C was reached) was conducted, and constant-current discharge at each of 0.1C, 0.2C, 0.5C, 1C, 3C, 5C, 7C, and 9C was conducted. Here, the current corresponding to 1C was assumed to be 150 mA per gram of active material. At this time, the 0.1C discharge capacity (mAh/g) in the 1st cycle (initial discharge capacity), 0.1C discharge capacity (mAh/g) in the 3rd cycle (3rd cycle discharge capacity [a]), 1C discharge capacity (mAh/g) in the 6th cycle (6th cycle discharge capacity [b]), and 9C discharge capacity (mAh/g) in the 10th cycle (10th cycle discharge capacity [c]) were examined. The results are shown in Table 7.

As for the acceptance standard for judgment in Examples, the initial discharge capacity in the above-described 1st cycle was set at 170 mAh/g or more, the 0.1C discharge capacity in the 3rd cycle was set at 170 mAh/g or more, the 1C discharge capacity in the 6th cycle was set at 155 mAh/g or more, and the 9C discharge capacity in the 10th cycle was set at 120 mAh/g or more.

(2) Low-temperature load characteristic test:

Regarding each of the layer lithium nickel manganese cobalt composite oxide powders produced in Examples 1 to 5 and Comparative examples 1 to 7, 75 percent by weight of the compound powder, 20 percent by weight of acetylene black, and 5 percent by weight of polytetrafluoroethylene powder were weighed and mixed with a mortar sufficiently. The resulting mixture was shaped into a thin sheet and was subjected to punching with punches of 9 mm diameter and 12 mm diameter. At this time, the whole weights were adjusted to become about 8 mg and about 18 mg, respectively. They were contact-bonded to aluminum expanded metals so as to produce positive electrodes of 9 mm diameter and 12 mm diameter. The positive electrodes of 9 mm diameter and 12 mm diameter are referred to as "positive electrode A" and "positive electrode B", respectively.

A coin type cell was assembled by using the positive electrode A of 9 mm diameter as a test electrode, a lithium metal sheet as a counter electrode, and an electrolytic solution in which 1 mol/L of $LiPF_6$ was dissolved into a solvent of EC (ethylene carbonate):DMC (dimethyl carbonate):EMC (ethyl methyl carbonate) = 3:3:4 (volume ratio), wherein a porous polyethylene film of 25 $\mu$m thickness was used as a separator.

Regarding the resulting coin type cell, constant-current·constant-voltage charge, that is, a reaction in which lithium ions were released from the positive electrode, at 0.2 $mA/cm^2$ was conducted while the upper limit was set at 4.2 V. Subsequently, the initial charge capacity per unit weight of positive electrode active material at 0.2 $mA/cm^2$ was assumed to be Qs(C) [mAh/g] and the initial discharge capacity was assumed to be Qs(D) [mAh/gj.

A graphite powder ($d_{002}$ = 3.35 Å) having an average grain size of 8 to 10 $\mu$m was used as a negative electrode active material, and polyvinylidene fluoride was used as a binder. They were weighed at a weight ratio of 92.5:7.5, this was mixed in a N-methylpyrrolidone solution so as to prepare a negative electrode mistura slurry. The resulting slurry was applied to one surface of copper foil of 20 $\mu$m thickness and was dried so as to vaporize the solvent. Thereafter this was punched into a diameter of 12 mm, and was subjected to a press treatment at 0.5 $ton/cm^2$ (49 MPa), so that a negative electrode B was prepared. At this time, the amount of the negative electrode active material on the electrode was adjusted to become about 5 to 12 mg.

A battery cell was assembled by using the resulting negative electrode B as a test electrode and a lithium metal as a counter electrode. A test in which the negative electrode was allowed to absorb lithium ions by a constant current-constant voltage method (cut current 0.05 mA) at 0.2 $mA/cm^2$-3 mV was conducted where the lower limit was set at 0 V, and the initial absorption capacity per unit weight of negative electrode active material at that time was assumed to be Qf [mAh/g].

The above-described positive electrode B and the negative electrode B were combined, a test battery was assembled by using coin cell, and the battery performance was evaluated. That is, the above-described positive electrode B prepared was placed on a positive electrode can of the coin cell, a porous polyethylene film of 25 $\mu$m thickness serving as a separator was placed thereon, and held with a polypropylene gasket. Thereafter, an electrolytic solution in which 1 mol/L of $LiPF_6$ was dissolved into a solvent of EC (ethylene carbonate):DMC

(dimethyl carbonate):EMC (ethyl methyl carbonate) = 3:3:4 (volume ratio) was used as a non-aqueous electrolytic solution, and this was added into the can and was allowed to penetrate into the separator sufficiently. Subsequently, the above-described negative electrode B was placed, a negative electrode can was placed so as to seal and, thereby, a coin type lithium secondary battery was prepared. At this time, the balance between the weight of the positive electrode active material and the weight of the negative electrode active material was set in such a way as to substantially satisfy the following formula.

$$\text{weight of positive electrode active material [g]/weight}$$
$$\text{of negative electrode active material [g]}$$
$$= (Qf \text{ [mAh/g]}/1.2)Qs(C) \text{ [mAh/g]}$$

In order to measure the low-temperature load characteristics of the thus obtained battery, one hour rate current value, that is, 1C, of the battery was set as represented by the following formula, and a test was conducted as described below.

$$1C \text{ [mA]} = Qs(D) \times \text{weight of positive electrode active}$$
$$\text{material [g]/h}$$

Initially, two cycles of 0.2C constant-current charge and discharge and one cycle of 1C constant-current charge and discharge were conducted at room temperature. The upper limit of charge was specified to be 4.1 V, and the lower limit voltage was specified to be 3.0 V. Next, the state of charge of the coin cell was adjusted at 40% through 1/3C constant-current charge and discharge, and the coin cell was kept in a low-temperature atmosphere at -30°C for 1 hour or more. Thereafter, when constant-current discharge was conducted at 0.5C [mA] for 10 seconds, the resistance value R [Ω] was calculated from the following formula, where the voltage after 10 seconds was assumed to be V [mV], the voltage before the discharge was assumed to be $V_0$ [mV], and $\Delta V = V - V_0$.

$$R\ [\Omega]\ =\ \Delta V\ [mV]/0.5C\ [mA]$$

Table 7 shows resistance values measured with respect to batteries by using the lithium nickel manganese cobalt composite oxides in Examples 1 to 5 and Comparative examples 1 to 7 as respective positive electrode active materials. A smaller resistance value indicates that the low-temperature load characteristics are better. The acceptance standard for judgment in Examples was set in such a way that the resistance value was 480 Ω or less.

[Table 7]

| Positive electrode material | | Initial discharge capacity (mAh/g)／3.0–4.4V, 0.1C | 3rd cycle discharge capacity [a] (mAh/g)／3.0–4.4V, 0.1C | 6th cycle discharge capacity [b] (mAh/g)／3.0–4.4V, 1C | 10th cycle discharge capacity [c] (mAh/g)／3.0–4.4V, 9C | Low-temperature resistance (Ω) | Judgment result |
|---|---|---|---|---|---|---|---|
| Example | 1 | 171 | 171 | 156 | 121 | 364 | ○ |
| | 2 | 172 | 173 | 159 | 124 | 349 | ○ |
| | 3 | 171 | 172 | 158 | 123 | 405 | ○ |
| | 4 | 174 | 174 | 160 | 124 | 342 | ○ |
| | 5 | 178 | 177 | 167 | 145 | 220 | ○ |
| Comparative example | 1 | 177 | 177 | 165 | 133 | 406 | ○ |
| | 2 | 176 | 176 | 165 | 131 | 346 | ○ |
| | 3 | 171 | 171 | 159 | 130 | 325 | ○ |
| | 4 | 178 | 178 | 164 | 126 | 413 | ○ |
| | 5 | 175 | 176 | 154 | 109 | 639 | × |
| | 6 | 170 | 169 | 156 | 124 | 439 | ○ |
| | 7 | 175 | 176 | 159 | 120 | 538 | × |

As is clear from Table 7, according to the lithium nickel manganese cobalt based composite oxide powder and the like for a lithium secondary battery positive electrode material of the present invention, a lithium secondary battery exhibiting excellent load characteristics can be realized.

The present invention has been described in detail with reference to specific forms. However, it should be understood by those skilled in the art that various modifications could be made without departing from the scope of the invention as defined in the enclosed claims.

The present invention contains subject matter related to Japanese Patent Application (Japanese Patent Application No. 2006-349912) filed on December 26, 2006 and Japanese Patent Application (Japanese Patent Application No. 2007-79360) filed on March 26, 2007.

**Claims**

1. A lithium transition metal based compound powder for a lithium secondary battery positive electrode material, **characterized by** comprising a lithium transition metal based compound, which has a function of enabling insertion and elimination of lithium ions, as a primary component and being produced by conducting firing after at least one type of compound (hereafter referred to as "Additive 1") containing at least one type of element (hereafter referred to as "Additive element 1") selected from B and Bi and at least one type of compound (hereafter referred to as "Additive 2") containing at least one type of element (hereafter referred to as "Additive element 2") selected from Mo and W are added in combination to a raw material of the primary component at a ratio of a total of Additive 1 and Additive 2 to a total amount of moles of transition metal elements in the raw material of the primary component of 0.01 percent by mole or more, and less than 2 percent by mole, wherein the composition is represented by Composition formula (I) described below:

$$LiMO_2 \qquad (I),$$

wherein in
formula (I) described above, M represents elements composed of Li, Ni, and Mn or Li, Ni, Mn, and Co, a Mn/Ni molar ratio is 0.1 or more, and 5 or less, a Co/(Mn + Ni + Co) molar ratio is 0 or more, and 0.35 or less, and a Li molar ratio in M is 0.001 or more, and 0.2 or less, and wherein in the metal based compound powder Additive elements 1 and/or 2 are present through concentration on a surface portion of a primary grain of the powder.

2. The lithium transition metal based compound powder for a lithium secondary battery positive electrode material according to claim 1, **characterized in that** the molar ratio of addition of Additive 1 to Additive 2 is within the range of 10:1 to 1:20.

3. The lithium transition metal based compound powder for a lithium secondary battery positive electrode material according to claim 1 or 2, **characterized in that** an atomic ratio of Additive elements 1 in total to a total of metal elements other than Li, Additive elements 1, and Additive elements 2 of a surface portion of a primary grain is 20 times or more larger than the atomic ratio on the whole grain basis, or
**characterized in that** an atomic ratio of Additive elements 2 in total to a total of metal elements other than Li, Additive elements 1, and Additive elements 2 of a surface portion of a primary grain is 3 times or more larger than the atomic ratio on the whole grain basis.

4. The lithium transition metal based compound powder for a lithium secondary battery positive electrode material according to any one of claims 1 to 3, **characterized in that** the amount of mercury penetration is 0.4 cm$^3$/g or more, and 1.5 cm$^3$/g or less during pressurization from a pressure of 3.86 kPa to 413 MPa in a mercury penetration curve based on a mercury penetration method, or
**characterized in that** a pore distribution curve based on the mercury penetration method has at least one main peak with a peak top present at a pore radius of 300 nm or more, and 1,500 nm or less and has a subpeak with a peak top present at a pore radius of 80 nm or more, and less than 300 nm, or
**characterized in that** regarding a pore distribution curve based on the mercury penetration method, the pore volume related to the peak with a peak top present at a pore radius of 300 nm or more, and 1,500 nm or less is 0.3 cm$^3$/g or more, and 0.8 cm$^3$/g or less and the pore volume related to the subpeak with a peak top present at a pore radius of 80 nm or more, and less than 300 nm is 0.01 cm$^3$/g or more, and 0.3 cm$^3$/g or less, or **characterized in that** a pore distribution curve based on the mercury penetration method has at least one main peak with a peak top present at a pore radius of 400 nm or more, and 1,500 nm or less and has a subpeak with a peak top present at a pore radius of 300 nm or more, and less than 400 nm.

5. The lithium transition metal based compound powder for a lithium secondary battery positive electrode material according to any one of claims 1 to 4, **characterized in that** the volume resistivity is $1 \times 10^3$ Ω·cm or more, and $1 \times 10^7$Ω·cm or less when compaction is conducted at a pressure of 40 MPa.

6. The lithium transition metal based compound powder for a lithium secondary battery positive electrode material according to any one of claims 1 to 5, **characterized by** comprising a lithium nickel manganese cobalt based composite oxide, which is configured to include a crystal structure belonging to a layer structure, as a primary component.

7. The lithium transition metal based compound powder for a lithium secondary battery positive electrode material according to claim 6, **characterized by** being fired at a firing temperature of 900°C or higher in an oxygen-containing gas atmosphere.

8. The lithium transition metal based compound powder for a lithium secondary battery positive electrode material according to claim 6 or 7, **characterized in that** the carbon content C is 0.005 percent by weight or more, and 0.25 percent by weight or less.

9. The lithium transition metal based compound powder for a lithium secondary battery positive electrode material according to any one of claims 6 to 8, **characterized in that** M in Composition formula (I) described above is represented by Formula (II') described below,

$$M = Li_{z'/(2+z')} \{(Ni_{(1+y')/2}Mn_{(1-y')/2})_{1-x'}Co_{x'}\}_{2/(2+z')} \qquad (II'),$$

wherein in
Composition formula (II'),

$$0.1 < x' \leq 0.35$$

$$-0.1 \leq y' \leq 0.1$$

$$(1 - x') (0.02 - 0.98y') \leq z' \leq (1 - x') (0.20 - 0.88y')$$

, or
**characterized in that** M in Composition formula (I) described above is represented by Formula (II) described below,

$$M = Li_{z/(2+z)} \{(Ni_{(1+y)/2}Mn_{(1-y)/2})_{1-x}Co_x\}_{2/(2+z)} \qquad (II),$$

wherein in
Composition formula (II),

$$0 \leq x \leq 0.1$$

$$-0.1 \leq y \leq 0.1$$

$$(1 - x) (0.05 - 0.98y) \leq z \leq (1 - x) (0.20 - 0.88y) \, .$$

10. The lithium transition metal based compound powder for a lithium secondary battery positive electrode material according to claim 9, **characterized in that** when the full width at half maximum of a (110) diffraction peak present at a diffraction angle $2\theta$ in the vicinity of 64.5° in powder X-ray diffractometry by using CuK$\alpha$ rays is assumed to be FWHM(110), $0.01 \leq$ FWHM(110) $\leq 0.3$ holds.

11. A lithium transition metal based compound powder for a lithium secondary battery positive electrode material according to any of claims 1 to 10, **characterized in that** B is used Additive element 1 and W is used as Additive element 2, and wherein peaks originated from $BWO_5^-$ and $M'BWO_6^-$, wherein M' represents an element capable of assuming the state of divalent, or $BWO_5^-$ and $Li_2BWO_6^-$ are observed in time-of-flight secondary ion mass spectrometry.

**12.** A method for manufacturing the lithium transition metal based compound powder for a lithium secondary battery positive electrode material according to any one of claims 1 to 11, **characterized by** including the steps of pulverizing a lithium compound, at least one type of transition metal compound selected from V, Cr, Mn, Fe, Co, Ni, and Cu, Additive 1, and Additive 2 in a liquid medium and spray-drying a slurry in which they are dispersed homogeneously in a spray-drying step and firing the resulting spray-dried substance in a firing step.

**13.** The method for manufacturing the lithium transition metal based compound powder for a lithium secondary battery positive electrode material according to claim 12, **characterized in that** regarding a slurry preparation step, the lithium compound, the transition metal compound, Additive 1, and Additive 2 are pulverized in the liquid medium until the median size measured with a laser diffraction/scattering grain size distribution measuring apparatus after 5 minutes of ultrasonic dispersion at an output of 30W, and a frequency of 22.5 kHz reaches 0.4 $\mu$m or less, where the refractive index is set at 1.24 and the reference of grain size is on a volume basis, and regarding the spray-drying step, spray drying is conducted under a condition in which 50 cp $\leq$ V $\leq$ 4,000 cp and 500 $\leq$ G/S $\leq$ 10,000 hold, where V (cp) represents a slurry viscosity, S (L/min) represents an amount of supply of slurry, and G (L/min) represents an amount of supply of gas in the spray drying.

**14.** The method for manufacturing the lithium transition metal based compound powder for a lithium secondary battery positive electrode material according to claim 12 or 13, **characterized in that** the transition metal compound contains at least a nickel compound, a manganese compound, and a cobalt compound and regarding the firing step, the spray-dried substance is fired at a firing temperature of 900°C or higher in an oxygen-containing gas atmosphere.

**15.** The method for manufacturing the lithium transition metal based compound powder for a lithium secondary battery positive electrode material according to any one of claims 12 to 14, **characterized in that** the lithium compound is lithium carbonate.

**16.** A spray-dried substance **characterized by** being a spray-dried substance which serves as a precursor of a lithium transition metal based compound powder for a lithium secondary battery positive electrode material according to any one of claims 1 to 11, wherein the spray-dried substance is obtained by pulverizing a lithium compound, at least one type of transition metal compound selected from Mn, Co, and Ni, Additive 1, and Additive 2 in a liquid medium and spray-drying a slurry prepared by dispersing them homogeneously, wherein the median size measured with a laser diffraction/scattering grain size distribution measuring apparatus after 5 minutes of ultrasonic dispersion (output 30W, frequency 22.5 kHz) is 0.1 $\mu$m or more, and 4 $\mu$m or less, where the refractive index is set at 1.24 and the reference of grain size is on a volume basis.

**17.** The spray-dried substance according to claim 16, **characterized in that** the BET specific surface area is 10 m$^2$/g or more, and 100 m$^2$/g or less.

**18.** A lithium secondary battery positive electrode **characterized by** comprising a positive electrode active material layer containing the lithium transition metal based compound powder for a lithium secondary battery positive electrode material, according to any one of claims 1 to 11, and a binder on a collector.

**19.** A lithium secondary battery **characterized by** comprising a negative electrode capable of absorbing and releasing lithium, a non-aqueous electrolyte containing a lithium salt, and a positive electrode capable of absorbing and releasing lithium, wherein the lithium secondary battery positive electrode according to claim 18 is used as the positive electrode.

**Patentansprüche**

**1.** Ein Pulver einer Verbindung auf der Basis einer Lithium-Übergangsmetallverbindung für einen Werkstoff für eine positive Elektrode einer Lithium-Sekundärbatterie, **dadurch gekennzeichnet, dass** es eine Verbindung auf der Basis einer Lithium-Übergangsmetallverbindung, die die Funktion hat, das Einbringen und Entfernen von Lithiumionen zu ermöglichen, als einen Hauptbestandteil umfasst und durch Durchführen von Einbrennen hergestellt wird, nachdem mindestens eine Art einer Verbindung (im Folgenden als "Additiv 1" bezeichnet), die mindestens eine Art eines Elements (im Folgenden als "Additivelement 1" bezeichnet), ausgewählt aus B und Bi, enthält, und mindestens eine Art einer Verbindung (im Folgenden als "Additiv 2" bezeichnet), die mindestens eine Art eines Elements (im Folgenden als "Additivelement 2" bezeichnet), ausgewählt aus Mo und W, enthält, in Kombination zu einem Ausgangsmaterial des Hauptbestandteils in einem Verhältnis einer Gesamtheit von Additiv 1 und Additiv 2 zu einer Gesamtmenge an Mol an Übergangsmetallelementen in dem Ausgangsmaterial des Hauptbestandteils von 0,01 Molprozent oder mehr und weniger als 2 Molprozent gegeben werden, wobei die Zusammensetzung durch nachstehend beschriebene Zusammensetzungsformel (I) dargestellt ist:

$$LiMO_2 \qquad (I),$$

wobei in vorstehend beschriebener Formel (I) M Elemente darstellt, die aus Li, Ni und Mn oder Li, Ni, Mn und Co zusammengesetzt sind, ein Mn/Ni-Molverhältnis 0,1 oder mehr und 5 oder weniger beträgt, ein Co/(Mn+Ni+Co)-Molverhältnis 0 oder mehr und 0,35 oder weniger beträgt und ein Li-Molverhältnis in M 0,001 oder mehr und 0,2 oder weniger beträgt und wobei in dem Pulver einer Verbindung auf Metallbasis Additivelemente 1 und/oder 2 durch Konzentration an einem Oberflächenbereich eines Primärkorns des Pulvers vorhanden sind.

2. Das Pulver einer Verbindung auf der Basis einer Lithium-Übergangsmetallverbindung für einen Werkstoff für eine positive Elektrode einer Lithium-Sekundärbatterie nach Anspruch 1, **dadurch gekennzeichnet, dass** das Molverhältnis der Zugabe von Additiv 1 zu Additiv 2 im Bereich von 10:1 bis 1:20 liegt.

3. Das Pulver einer Verbindung auf der Basis einer Lithium-Übergangsmetallverbindung für einen Werkstoff für eine positive Elektrode einer Lithium-Sekundärbatterie nach Anspruch 1 oder 2, **dadurch gekennzeichnet, dass** ein atomares Verhältnis der Additivelemente 1 insgesamt zu einer Gesamtheit an von Li verschiedenen Metallelementen, Additivelementen 1 und Additivelementen 2 eines Oberflächenbereichs eines Primärkorns um das 20-Fache oder mehr größer ist als das atomare Verhältnis auf der Basis der gesamten Körner, oder
**dadurch gekennzeichnet, dass** ein atomares Verhältnis der Additivelemente 2 insgesamt zu einer Gesamtheit an von Li verschiedenen Metallelementen, Additivelementen 1 und Additivelementen 2 eines Oberflächenbereichs eines Primärkorns um das 3-Fache oder mehr größer ist als das atomare Verhältnis auf der Basis der gesamten Körner.

4. Das Pulver einer Verbindung auf der Basis einer Lithium-Übergangsmetallverbindung für einen Werkstoff für eine positive Elektrode einer Lithium-Sekundärbatterie nach einem der Ansprüche 1 bis 3, **dadurch gekennzeichnet, dass** die Menge an Quecksilberpenetration während der Druckbeaufschlagung von einem Druck von 3,86 kPa auf 413 MPa in einer Quecksilber-Penetrationskurve basierend auf einem Quecksilberpenetrationsverfahren 0,4 $cm^3$/g oder mehr und 1,5 $cm^3$/g oder weniger beträgt, oder
**dadurch gekennzeichnet, dass** eine Porenverteilungskurve basierend auf dem Quecksilberpenetrationsverfahren mindestens einen Hauptpeak mit einer Peakspitze, die bei einem Porenradius von 300 nm oder mehr und 1500 nm oder weniger vorliegt, und einen Nebenpeak mit einer Peakspitze, die bei einem Porenradius von 80 nm oder mehr und weniger als 300 nm vorliegt, aufweist, oder
**dadurch gekennzeichnet, dass** hinsichtlich einer Porenverteilungskurve basierend auf dem Quecksilberpenetrationsverfahren das Porenvolumen, das mit dem Peak mit einer Peakspitze, die bei einem Porenradius von 300 nm oder mehr und 1500 nm oder weniger vorliegt, in Zusammenhang steht, 0,3 $cm^3$/g oder mehr und 0,8 $cm^3$/g oder weniger beträgt, und das Porenvolumen, das mit dem Nebenpeak mit einer Peakspitze, die bei einem Porenradius von 80 nm oder mehr und weniger als 300 nm vorliegt, in Zusammenhang steht, 0,01 $cm^3$/g oder mehr und 0,3 $cm^3$/g oder weniger beträgt, oder **dadurch gekennzeichnet, dass** eine Porenverteilungskurve basierend auf dem Quecksilberpenetrationsverfahren mindestens einen Hauptpeak mit einer Peakspitze, die bei einem Porenradius von 400 nm oder mehr und 1500 nm oder weniger vorliegt, und einen Nebenpeak mit einer Peakspitze, die bei einem Porenradius von 300 nm oder mehr und weniger als 400 nm vorliegt, aufweist.

5. Das Pulver einer Verbindung auf der Basis einer Lithium-Übergangsmetallverbindung für einen Werkstoff für eine positive Elektrode einer Lithium-Sekundärbatterie nach einem der Ansprüche 1 bis 4, **dadurch gekennzeichnet, dass** der spezifische Durchgangswiderstand 1 x $10^3$ Ω · cm oder mehr und 1 x $10^7$ Ω · cm oder weniger beträgt, wenn Verdichten bei einem Druck von 40 MPa durchgeführt wird.

6. Das Pulver einer Verbindung auf der Basis einer Lithium-Übergangsmetallverbindung für einen Werkstoff für eine positive Elektrode einer Lithium-Sekundärbatterie nach einem der Ansprüche 1 bis 5, **dadurch gekennzeichnet, dass** es ein Verbundoxid auf Lithium-Nickel-Mangan-Cobalt-Basis umfasst, das so aufgebaut ist, dass es eine Kristallstruktur, die zu einer Schichtstruktur gehört, als einen Hauptbestandteil beinhaltet.

7. Das Pulver einer Verbindung auf der Basis einer Lithium-Übergangsmetallverbindung für einen Werkstoff für eine positive Elektrode einer Lithium-Sekundärbatterie nach Anspruch 6, **dadurch gekennzeichnet, dass** es bei einer Einbrenntemperatur von 900°C oder höher in einer sauerstoffhaltigen Gasatmosphäre eingebrannt wird.

8. Das Pulver einer Verbindung auf der Basis einer Lithium-Übergangsmetallverbindung für einen Werkstoff für eine positive Elektrode einer Lithium-Sekundärbatterie nach Anspruch 6 oder 7, **dadurch gekennzeichnet, dass** der Kohlenstoffgehalt C 0,005 Gewichtsprozent oder mehr und 0,25 Gewichtsprozent oder weniger beträgt.

9. Das Pulver einer Verbindung auf der Basis einer Lithium-Übergangsmetallverbindung für einen Werkstoff für eine positive Elektrode einer Lithium-Sekundärbatterie nach einem der Ansprüche 6 bis 8, **dadurch gekennzeichnet, dass** M in vorstehend beschriebener Zusammensetzungsformel (I) durch nachstehend beschriebene Formel (II') dargestellt ist:

$$M=Li_{z'/(2+z')} \{(Ni_{(1+y')/2}Mn_{(1-y')/2})_{1-x'}Co_{x'}\}_{2/(2+z')} \qquad (II')$$

wobei in Zusammensetzungsformel (II')

$$0,1 < x' \leq 0,35$$

$$-0,1 \leq y' \leq 0,1$$

$$(1 - x') (0,02 - 0,98y') \leq z' \leq (1 - x') (0,20 - 0,88y')$$

oder **dadurch gekennzeichnet, dass** M in vorstehend beschriebener Zusammensetzungsformel (I) durch nachstehend beschriebene Formel (II) dargestellt ist:

$$M=Li_{z/(2+z)} \{(Ni_{(1+y)/2}Mn_{(1-y)/2})_{1-x}Co_x\}_{2/(2+z)} \qquad (II),$$

wobei in Zusammensetzungsformel (II)

$$0 \leq x \leq 0,1$$

$$-0,1 \leq y \leq 0,1$$

$$(1 - x) (0,05 - 0,98y) \leq z \leq (1 - x) (0,20 - 0,88y).$$

10. Das Pulver einer Verbindung auf der Basis einer Lithium-Übergangsmetallverbindung für einen Werkstoff für eine positive Elektrode einer Lithium-Sekundärbatterie nach Anspruch 9, **dadurch gekennzeichnet, dass**, wenn die gesamte Breite beim Halbmaximum eines (110)-Beugungspeaks, der bei einem Beugungswinkel 2 $\theta$ in der Nähe von 64,5° vorliegt, in der Pulverröntgenbeugungsdiffraktometrie unter Verwendung von CuK$\alpha$-Strahlen als FWHM (110) angenommen wird, dann $0,01 \leq FWHM(110) \leq 0,3$ gilt.

11. Ein Pulver einer Verbindung auf der Basis einer Lithium-Übergangsmetallverbindung für einen Werkstoff für eine positive Elektrode einer Lithium-Sekundärbatterie nach einem der Ansprüche 1 bis 10, **dadurch gekennzeichnet, dass** B als Additivelement 1 verwendet wird und W als Additivelement 2 verwendet wird, und wobei Peaks, die von $BWO_5^-$ und $M'BWO_6^-$ stammen, wobei M' ein Element bedeutet, das in der Lage ist, den divalenten Zustand anzunehmen, oder von $BWO_5^-$ und $Li_2BWO_6^-$ stammen, in Flugzeit-Sekundärionenmassenspektrometrie beobachtet werden.

12. Ein Verfahren zur Herstellung des Pulvers einer Verbindung auf der Basis einer Lithium-Übergangsmetallverbindung für einen Werkstoff für eine positive Elektrode einer Lithium-Sekundärbatterie nach einem der Ansprüche 1 bis 11, **dadurch gekennzeichnet, dass** es die Schritte des Pulverisierens einer Lithiumverbindung, mindestens einer Art einer Übergangsmetallverbindung, ausgewählt aus V, Cr, Mn, Fe, Co, Ni und Cu, von Additiv 1 und Additiv 2 in einem flüssigen Medium und des Sprühtrocknens einer Aufschlämmung, in der sie homogen dispergiert sind, in einem Sprühtrocknungsschritt und des Einbrennens der resultierenden sprühgetrockneten Substanz in einem Einbrennschritt beinhaltet.

13. Das Verfahren zur Herstellung des Pulvers einer Verbindung auf der Basis einer Lithium-Übergangsmetallverbindung für einen Werkstoff für eine positive Elektrode einer Lithium-Sekundärbatterie nach Anspruch 12, **dadurch gekennzeichnet, dass** hinsichtlich eines Schritts zur Herstellung einer Aufschlämmung die Lithiumverbindung, die Übergangsmetallverbindung, Additiv 1 und Additiv 2 in dem flüssigen Medium pulverisiert werden, bis der mit einem Laserbeugungs-/Streukomgrößenverteilungs-Messgerät nach 5-minütiger Ultraschalldispergierung bei einer Leistung von 30 W und einer Frequenz von 22,5 kHz gemessene mittlere Wert 0,4 $\mu$m oder weniger erreicht, wobei der Brechungsindex auf 1,24 eingestellt wird und die Komgrößenreferenz auf Volumenbasis ist, und hinsichtlich des Sprühtrocknungsschritts Sprühtrocknen unter einer Bedingung durchgeführt wird, bei der 50 cP $\leq$ V $\leq$ 4.000 cP und 500 $\leq$ G/S $\leq$ 10.000 gilt, wobei V (cP) eine Aufschlämmungsviskosität bedeutet, S (L/Min.) eine Zufuhrmenge der Aufschlämmung bedeutet und G (L/Min.) eine Zufuhrmenge an Gas beim Sprühtrocknen bedeutet.

14. Das Verfahren zur Herstellung des Pulvers einer Verbindung auf der Basis einer Lithium-Übergangsmetallverbindung für einen Werkstoff für eine positive Elektrode einer Lithium-Sekundärbatterie nach Anspruch 12 oder 13, **dadurch gekennzeichnet, dass** die Übergangsmetallverbindung mindestens eine Nickelverbindung, eine Manganverbindung und eine Cobaltverbindung enthält und hinsichtlich des Einbrennschritts die sprühgetrocknete Substanz bei einer Einbrenntemperatur von 900°C oder höher in einer sauerstoffhaltigen Gasatmoshäre eingebrannt wird.

15. Das Verfahren zur Herstellung des Pulvers einer Verbindung auf der Basis einer Lithium-Übergangsmetallverbindung für einen Werkstoff für eine positive Elektrode einer Lithium-Sekundärbatterie nach einem der Ansprüche 12 bis 14, **dadurch gekennzeichnet, dass** die Lithiumverbindung Lithiumcarbonat ist.

16. Eine sprühgetrocknete Substanz, **dadurch gekennzeichnet, dass** es sich um eine sprühgetrocknete Substanz handelt, die als ein Vorläufer eines Pulvers einer Verbindung auf der Basis einer Lithium-Übergangsmetallverbindung für einen Werkstoff für eine positive Elektrode einer Lithium-Sekundärbatterie nach einem der Ansprüche 1 bis 11 dient, wobei die sprühgetrocknete Substanz durch Pulverisieren einer Lithiumverbindung, mindestens einer Art einer Übergangsmetallverbindung, ausgewählt aus Mn, Co und Ni, von Additiv 1 und Additiv 2 in einem flüssigen Medium und Sprühtrocknen einer durch homogene Dispergierung derselben hergestellten Aufschlämmung erhalten wird, wobei die mit einem Laserbeugungs-/Streukorngrößenverteilungs-Messgerät nach 5-minütiger Ultraschalldispergierung (Leistung 30 W, Frequenz 22,5 kHz) gemessene mittlere Größe 0,1 $\mu$m oder mehr und 4 $\mu$m oder weniger beträgt, wenn der Brechungsindex auf 1,24 eingestellt wird und die Korngrößenreferenz auf Volumenbasis ist.

17. Die sprühgetrocknete Substanz nach Anspruch 16, **dadurch gekennzeichnet, dass** die spezifische BET-Oberfläche 10 m$^2$/g oder mehr und 100 m$^2$/g oder weniger beträgt.

18. Eine positive Elektrode für eine Lithium-Sekundärbatterie, **dadurch gekennzeichnet, dass** sie eine aktive Werkstoffschicht für die positive Elektrode, die das Pulver einer Verbindung auf der Basis einer Lithium-Übergangsmetallverbindung für einen Werkstoff für eine positive Elektrode einer Lithium-Sekundärbatterie nach einem der Ansprüche 1 bis 11 enthält, und ein Bindemittel auf einem Kollektor umfasst.

19. Eine Lithium-Sekundärbatterie, **dadurch gekennzeichnet, dass** sie eine negative Elektrode, die in der Lage ist, Lithium zu absorbieren und freizusetzen, einen nichtwässrigen Elektrolyten, der ein Lithiumsalz enthält, und eine positive Elektrode, die in der Lage ist, Lithium zu absorbieren und freizusetzen, umfasst, wobei die positive Elektrode einer Lithium-Sekundärbatterie nach Anspruch 18 als die positive Elektrode verwendet wird.

## Revendications

1. Poudre de composé à base de lithium et de métaux de transition pour une matière d'électrode positive de batterie secondaire au lithium, **caractérisée en ce qu'**elle comprend un composé à base de lithium et de métaux de transition, qui a une fonction de permettre l'insertion et l'élimination d'ions lithium, comme composant primaire et étant produite par la mise en oeuvre d'une cuisson après qu'au moins un type de composé (appelé dans la suite "additif 1") contenant au moins un type d'élément (appelé dans la suite "élément additif 1") choisi parmi B et Bi et au moins un type de composé (appelé dans la suite "additif 2") contenant au moins un type d'élément (appelé dans la suite "élément additif 2") choisi parmi Mo et W soient ajoutés en combinaison à une matière première du composant primaire à un rapport d'un total de l'additif 1 et de l'additif 2 à une quantité totale de moles d'éléments de métaux de transition dans la matière première du composant primaire de 0,01 pourcent en mole ou plus, et moins de 2 pourcent en mole, où la composition est représentée par la formule de composition (I) décrite ci-dessous :

$$LiMO_2 \qquad (I),$$

où dans
la formule (I) décrite ci-dessus, M représente des éléments composés de Li, Ni, et Mn ou Li, Ni, Mn, et Co, un rapport molaire Mn/Ni est 0,1 ou plus, et 5 ou moins, un rapport molaire Co/(Mn + Ni + Co) est 0 ou plus, et 0,35 ou moins, et un rapport molaire de Li dans M est 0,001 ou plus, et 0,2 ou moins, et où dans la poudre de composé à base de métaux les éléments additifs 1 et/ou 2 sont présents par concentration sur une partie de surface d'un grain primaire de la poudre.

2. Poudre de composé à base de lithium et de métaux de transition pour une matière d'électrode positive de batterie secondaire au lithium selon la revendication 1, **caractérisée en ce que** le rapport molaire d'addition de l'additif 1 à l'additif 2 est dans la plage de 10:1 à 1:20.

3. Poudre de composé à base de lithium et de métaux de transition pour une matière d'électrode positive de batterie secondaire au lithium selon la revendication 1 ou 2, **caractérisée en ce qu'**un rapport atomique des éléments additifs 1 au total à un total d'éléments métalliques différents de Li, des éléments additifs 1 et des éléments additifs 2 d'une partie de surface d'un grain primaire est supérieur de 20 fois ou plus au rapport atomique sur la base des grains totaux, ou **caractérisée en ce qu'**un rapport atomique des éléments additifs 2 au total à un total d'éléments métalliques différents de Li, des éléments additifs 1 et des éléments additifs 2 d'une partie de surface d'un grain primaire est supérieur de 3 fois ou plus au rapport atomique sur la base des grains totaux.

4. Poudre de composé à base de lithium et de métaux de transition pour une matière d'électrode positive de batterie secondaire au lithium selon l'une quelconque des revendications 1 à 3, **caractérisée en ce que** la quantité de pénétration du mercure est 0,4 cm$^3$/g ou plus, et 1,5 cm$^3$/g ou moins pendant la mise sous pression d'une pression de 3,86 kPa à 413 MPa dans une courbe de pénétration du mercure basée sur un procédé de pénétration du mercure, ou

**caractérisée en ce qu'**une courbe de distribution des pores basée sur le procédé de pénétration du mercure a au moins un pic principal avec un sommet de pic présent à un rayon de pores de 300 nm ou plus, et 1 500 nm ou moins et a un pic secondaire avec un sommet de pic présent à un rayon de pores de 80 nm ou plus, et inférieur à 300 nm, ou bien **caractérisée en ce que**, concernant une courbe de distribution de pores basée sur le procédé de pénétration du mercure, le volume des pores par rapport au pic avec un sommet de pic présent à un rayon de pores de 300 nm ou plus, et 1 500 nm ou moins est 0,3 cm$^3$/g ou plus et 0,8 cm$^3$/g ou moins et le volume de pores par rapport au pic secondaire avec un sommet de pic présent à un rayon de pores de 80 nm ou plus et inférieur à 300 nm est 0,01 cm$^3$/g ou plus, et 0,3 cm$^3$/g ou moins, ou bien **caractérisée en ce qu'**une courbe de distribution de pores basée sur le procédé de pénétration du mercure a au moins un pic principal avec un sommet de pic présent à un rayon de pores de 400 nm ou plus, et 1 500 nm ou moins et a un pic secondaire avec un sommet de pic présent à un rayon de pores de 300 nm ou plus et inférieur à 400 nm.

5. Poudre de composé à base de lithium et de métaux de transition pour une matière d'électrode positive de batterie secondaire au lithium selon l'une quelconque des revendications 1 à 4, **caractérisée en ce que** la résistivité volumique est 1 x 10$^3$ Ω.cm ou plus et 1 x 10$^7$ Ω.cm ou moins quand un compactage est réalisé à une pression de 40 MPa.

6. Poudre de composé à base de lithium et de métaux de transition pour une matière d'électrode positive de batterie secondaire au lithium selon l'une quelconque des revendications 1 à 5, **caractérisée en ce qu'**elle comprend un oxyde composite à base de lithium, de nickel, de manganèse, de cobalt qui est configuré pour inclure une structure cristalline appartenant à une structure stratifiée, comme composant primaire.

7. Poudre de composé à base de lithium et de métaux de transition pour une matière d'électrode positive de batterie secondaire au lithium selon la revendication 6, **caractérisée en ce qu'**elle est cuite à une température de cuisson de 900°C ou plus dans une atmosphère de gaz contenant de l'oxygène.

8. Poudre de composé à base de lithium et de métaux de transition pour une matière d'électrode positive de batterie secondaire au lithium selon la revendication 6 ou 7, **caractérisée en ce que** la teneur en carbone C est 0,005 pourcent en poids ou plus et 0,25 pourcent en poids ou moins.

9. Poudre de composé à base de lithium et de métaux de transition pour une matière d'électrode positive de batterie secondaire au lithium selon l'une quelconque des revendications 6 à 8, **caractérisée en ce que** M dans la formule de composition (I) décrite ci-dessus est représenté par la formule (II') décrite ci-dessous,

M = $\text{Li}_{z'/(2+z')}\{(\text{Ni}_{(1+y')/2}\text{Mn}_{(1-y')/2})_{1-x'}\text{Co}_{x'}\}_{2/(2+z')}$ ... (II'), où dans la formule de composition (II'),

$$0{,}1 < x' \leq 0{,}35$$

$$-0{,}1 \leq y' \leq 0{,}1$$

$$(1 - x')(0{,}02 - 0{,}98y') \leq z' \leq (1 - x')(0{,}20 - 0{,}88y'),$$

ou bien
**caractérisée en ce que** M dans la formule de composition (I) décrite ci-dessus est représenté par la formule (II) décrite ci-dessous,

M = $\text{Li}_{z/(2+z)}\{(\text{Ni}_{(1+y)/2}\text{Mn}_{(1-y)/2})_{1-x}\text{Co}_x\}_{2/(2+z)}$ (II),

où dans
la formule de composition (II),

$$0 \leq x \leq 0{,}1$$

$$-0{,}1 \leq y \leq 0{,}1$$

$$(1 - x)(0{,}05 - 0{,}98y) \leq z \leq (1 - x)(0{,}20 - 0{,}88y).$$

10. Poudre de composé à base de lithium et de métaux de transition pour une matière d'électrode positive de batterie secondaire au lithium selon la revendication 9, **caractérisée en ce que**, quand la largeur totale au demi-maximum d'un pic de diffraction (110) présent à un angle de diffraction $2\theta$ au voisinage de 64,5° dans la diffractométrie de poudre des rayons X en utilisant des raies CuK$\alpha$ est supposée être FWHM(110), $0{,}01 \leq$ FWHM(110) $\leq 0{,}3$.

11. Poudre de composé à base de lithium et de métaux de transition pour une matière d'électrode positive de batterie secondaire au lithium selon l'une quelconque des revendications 1 à 10, **caractérisée en ce que** B est utilisé comme élément additif 1 et W est utilisé comme élément additif 2, et où les pics provenant de $\text{BWO}_5^-$ et $\text{M'BWO}_6^-$ où M' représente un élément capable de revêtir l'état divalent, ou $\text{BWO}_5^-$ et $\text{Li}_2\text{BWO}_6^-$ sont observés en spectrométrie de masse à ions secondaires à temps de vol.

12. Procédé pour fabriquer la poudre de composé à base de lithium et de métaux de transition pour une matière d'électrode positive de batterie secondaire au lithium selon l'une quelconque des revendications 1 à 11, **caractérisé en ce qu'**il inclut les étapes de pulvérisation d'un composé du lithium, d'au moins un type de composé de métaux de transition choisi parmi V, Cr, Mn, Fe, Co, Ni et Cu, de l'additif 1 et de l'additif 2 dans un milieu liquide et de séchage par pulvérisation d'une suspension dans laquelle ils sont dispersés de manière homogène dans une étape de séchage par pulvérisation et de cuisson de la substance séchée par pulvérisation résultante dans une étape de cuisson.

13. Procédé pour fabriquer la poudre de composé à base de lithium et de métaux de transition pour une matière d'électrode positive de batterie secondaire au lithium selon la revendication 12, **caractérisé en ce que**, concernant une étape de préparation de suspension, le composé du lithium, le composé de métaux de transition, l'additif 1 et l'additif 2 sont pulvérisés dans le milieu liquide jusqu'à ce que la taille médiane mesurée avec un appareil de mesure de distribution de taille de grain à diffraction/diffusion laser après 5 minutes de dispersion ultrasonique à une puissance délivrée de 30 W et une fréquence de 22,5 kHz atteigne 0,4 μm ou moins, où l'indice de diffraction est fixé à 1,24 et la référence de taille de grain est basée sur le volume, et concernant l'étape de séchage par pulvérisation, le séchage par pulvérisation est réalisé dans des conditions dans lesquelles 50 cp ≤ V ≤ 4 000 cp et 500 ≤ G/S ≤ 10 000, où V (cp) représente une viscosité de suspension, S (L/min) représente une quantité d'apport de suspension et G (L/min) représente une quantité d'apport de gaz dans le séchage par pulvérisation.

14. Procédé pour fabriquer la poudre de composé à base de lithium et de métaux de transition pour une matière d'électrode positive de batterie secondaire au lithium selon la revendication 12 ou 13, **caractérisé en ce que** le composé de métaux de transition contient au moins un composé du nickel, un composé du manganèse et un composé du cobalt et, concernant l'étape de cuisson, la substance séchée par pulvérisation est cuite à une température de cuisson de 900°C ou plus dans une atmosphère de gaz contenant de l'oxygène.

15. Procédé pour fabriquer la poudre de composé à base de lithium et de métaux de transition pour une matière d'électrode positive de batterie secondaire au lithium selon l'une quelconque des revendications 12 à 14, **caractérisé en ce que** le composé du lithium est le carbonate de lithium.

16. Substance séchée par pulvérisation **caractérisée en ce que** c'est une substance séchée par pulvérisation qui sert de précurseur d'une poudre de composé à base de lithium et de métaux de transition pour une matière d'électrode positive de batterie secondaire au lithium selon l'une quelconque des revendications 1 à 11, où la substance séchée par pulvérisation est obtenue par pulvérisation d'un composé du lithium, d'au moins un type de composé de métaux de transition choisi parmi Mn, Co et Ni, d'un additif 1 et d'un additif 2 dans un milieu liquide et séchage par pulvérisation d'une suspension préparée par dispersion de ceux-ci de manière homogène, où la taille médiane mesurée avec un appareil de mesure de distribution de taille de grain à diffraction/diffusion laser après 5 minutes de dispersion ultrasonique (puissance délivrée 30 W, fréquence 22,5 kHz) est 0,1 μm ou plus, et 4 μm ou moins, où l'indice de réfraction est fixé à 1,24 et la référence de taille de grain est basée sur le volume.

17. Substance séchée par pulvérisation selon la revendication 16, **caractérisée en ce que** la surface spécifique BET est 10 m²/g ou plus et 100 m²/g ou moins.

18. Electrode positive de batterie secondaire au lithium **caractérisée en ce qu'**elle comprend une couche de matière active d'électrode positive contenant la poudre de composé à base de lithium et de métaux de transition pour une matière d'électrode positive de batterie secondaire au lithium selon l'une quelconque des revendications 1 à 11 et un liant sur un collecteur.

19. Batterie secondaire au lithium **caractérisée en ce qu'**elle comprend une électrode négative capable d'absorber et de libérer du lithium, un électrolyte non aqueux contenant un sel de lithium et une électrode positive capable d'absorber et de libérer du lithium, où l'électrode positive de batterie secondaire au lithium selon la revendication 18 est utilisée comme électrode positive.

PORE DISTRIBUTION CURVE OF LITHIUM NICKEL MANGANESE COBALT COMPOSITE OXIDE POWDER PRODUCED IN EXAMPLE 1

EP 2 110 872 B1

[Fig. 1]

[Fig.2]

PORE DISTRIBUTION CURVE OF LITHIUM NICKEL MANGANESE COBALT COMPOSITE OXIDE POWDER PRODUCED IN EXAMPLE 2

Log Differential Intrusion (ml/g)

Pore Radius (Å)

[Fig. 3]

EP 2 110 872 B1

PORE DISTRIBUTION CURVE OF LITHIUM NICKEL MANGANESE COBALT COMPOSITE OXIDE POWDER
PRODUCED IN EXAMPLE 3

[Fig.4]

PORE DISTRIBUTION CURVE OF LITHIUM NICKEL MANGANESE COBALT COMPOSITE OXIDE POWDER PRODUCED IN EXAMPLE 4

[Fig.5]

PORE DISTRIBUTION CURVE OF LITHIUM NICKEL MANGANESE COBALT COMPOSITE OXIDE POWDER PRODUCED IN EXAMPLE 5

[Fig. 6]

EP 2 110 872 B1

PORE DISTRIBUTION CURVE OF LITHIUM NICKEL MANGANESE COBALT COMPOSITE OXIDE POWDER PRODUCED IN COMPARATIVE EXAMPLE 1

[Fig. 7]

PORE DISTRIBUTION CURVE OF LITHIUM NICKEL MANGANESE COBALT COMPOSITE OXIDE POWDER
PRODUCED IN COMPARATIVE EXAMPLE 2

EP 2 110 872 B1

[Fig. 8]

PORE DISTRIBUTION CURVE OF LITHIUM NICKEL MANGANESE COBALT COMPOSITE OXIDE POWDER PRODUCED IN COMPARATIVE EXAMPLE 3

EP 2 110 872 B1

[Fig.9]

PORE DISTRIBUTION CURVE OF LITHIUM NICKEL MANGANESE COBALT COMPOSITE OXIDE POWDER PRODUCED IN COMPARATIVE EXAMPLE 4

PORE DISTRIBUTION CURVE OF LITHIUM NICKEL MANGANESE COBALT COMPOSITE OXIDE POWDER PRODUCED IN COMPARATIVE EXAMPLE 5

[Fig.101]

EP 2 110 872 B1

EP 2 110 872 B1

[Fig.11]

PORE DISTRIBUTION CURVE OF LITHIUM NICKEL MANGANESE COBALT COMPOSITE OXIDE POWDER PRODUCED IN COMPARATIVE EXAMPLE 6

60

[Fig.12]

EP 2 110 872 B1

PORE DISTRIBUTION CURVE OF LITHIUM NICKEL MANGANESE COBALT COMPOSITE OXIDE POWDER
PRODUCED IN COMPARATIVE EXAMPLE 7

EP 2 110 872 B1

[Fig.13]

SEM IMAGE OF
LITHIUM NICKEL MANGANESE COBALT COMPOSITE OXIDE POWDER
PRODUCED IN EXAMPLE 1

62

[Fig.14]

SEM IMAGE OF
LITHIUM NICKEL MANGANESE COBALT COMPOSITE OXIDE POWDER
PRODUCED IN EXAMPLE 2

[Fig.15]

SEM IMAGE OF
LITHIUM NICKEL MANGANESE COBALT COMPOSITE OXIDE POWDER
PRODUCED IN EXAMPLE 3

[Fig.16]

SEM IMAGE OF
LITHIUM NICKEL MANGANESE COBALT COMPOSITE OXIDE POWDER
PRODUCED IN EXAMPLE 4

[Fig.17]

SEM IMAGE OF
LITHIUM NICKEL MANGANESE COBALT COMPOSITE OXIDE POWDER
PRODUCED IN EXAMPLE 5

[Fig.18]

SEM IMAGE OF
LITHIUM NICKEL MANGANESE COBALT COMPOSITE OXIDE POWDER
PRODUCED IN COMPARATIVE EXAMPLE 1

[Fig.19]

SEM IMAGE OF
LITHIUM NICKEL MANGANESE COBALT COMPOSITE OXIDE POWDER
PRODUCED IN COMPARATIVE EXAMPLE 2

[Fig.20]

SEM IMAGE OF
LITHIUM NICKEL MANGANESE COBALT COMPOSITE OXIDE POWDER
PRODUCED IN COMPARATIVE EXAMPLE 3

[Fig.21]

SEM IMAGE OF
LITHIUM NICKEL MANGANESE COBALT COMPOSITE OXIDE POWDER
PRODUCED IN COMPARATIVE EXAMPLE 4

[Fig.22]

SEM IMAGE OF
LITHIUM NICKEL MANGANESE COBALT COMPOSITE OXIDE POWDER
PRODUCED IN COMPARATIVE EXAMPLE 5

[Fig.23]

SEM IMAGE OF
LITHIUM NICKEL MANGANESE COBALT COMPOSITE OXIDE POWDER
PRODUCED IN COMPARATIVE EXAMPLE 6

[Fig.24]

SEM IMAGE OF
LITHIUM NICKEL MANGANESE COBALT COMPOSITE OXIDE POWDER
PRODUCED IN COMPARATIVE EXAMPLE 7

[Fig.25]

EP 2 110 872 B1

POWDER X-RAY DIFFRACTION PATTERN OF LITHIUM NICKEL MANGANESE COBALT COMPOSITE OXIDE POWDER PRODUCED IN EXAMPLE 1

[Fig. 26]

EP 2 110 872 B1

POWDER X-RAY DIFFRACTION PATTERN OF LITHIUM NICKEL MANGANESE COBALT COMPOSITE OXIDE POWDER PRODUCED IN EXAMPLE 2

[Fig.27]

EP 2 110 872 B1

POWDER X-RAY DIFFRACTION PATTERN OF LITHIUM NICKEL MANGANESE COBALT COMPOSITE OXIDE POWDER PRODUCED IN EXAMPLE 3

PEAK ORIGINATED FROM HETEROGENEOUS PHASE

PEAK ORIGINATED FROM HETEROGENEOUS PHASE

INTENSITY (Counts)

2 θ (deg)

POWDER X-RAY DIFFRACTION PATTERN OF LITHIUM NICKEL MANGANESE COBALT COMPOSITE OXIDE POWDER
PRODUCED IN EXAMPLE 4

[Fig.28]

EP 2 110 872 B1

[Fig. 29]

EP 2 110 872 B1

74

POWDER X-RAY DIFFRACTION PATTERN OF LITHIUM NICKEL MANGANESE COBALT COMPOSITE OXIDE POWDER
PRODUCED IN EXAMPLE 5

[Fig. 30]

EP 2 110 872 B1

POWDER X-RAY DIFFRACTION PATTERN OF LITHIUM NICKEL MANGANESE COBALT COMPOSITE OXIDE POWDER
PRODUCED IN COMPARATIVE EXAMPLE 1

[Fig.31]

EP 2 110 872 B1

POWDER X-RAY DIFFRACTION PATTERN OF LITHIUM NICKEL MANGANESE COBALT COMPOSITE OXIDE POWDER PRODUCED IN COMPARATIVE EXAMPLE 2

[Fig. 32]

EP 2 110 872 B1

POWDER X-RAY DIFFRACTION PATTERN OF LITHIUM NICKEL MANGANESE COBALT COMPOSITE OXIDE POWDER PRODUCED IN COMPARATIVE EXAMPLE 3

POWDER X-RAY DIFFRACTION PATTERN OF LITHIUM NICKEL MANGANESE COBALT COMPOSITE OXIDE POWDER PRODUCED IN COMPARATIVE EXAMPLE 4

[Fig.33]

EP 2 110 872 B1

[Fig.34]

POWDER X-RAY DIFFRACTION PATTERN OF LITHIUM NICKEL MANGANESE COBALT COMPOSITE OXIDE POWDER PRODUCED IN COMPARATIVE EXAMPLE 5

[Fig.35]

EP 2 110 872 B1

POWDER X-RAY DIFFRACTION PATTERN OF LITHIUM NICKEL MANGANESE COBALT COMPOSITE OXIDE POWDER
PRODUCED IN COMPARATIVE EXAMPLE 6

[Fig. 36]

EP 2 110 872 B1

POWDER X-RAY DIFFRACTION PATTERN OF LITHIUM NICKEL MANGANESE COBALT COMPOSITE OXIDE POWDER PRODUCED IN COMPARATIVE EXAMPLE 7

[FS LIDR018xv.dif] HTP568

[Fig.37]

EXAMPLE 1

[Fig.38]

EXAMPLE 2

[Fig.39]

EXAMPLE 3

[Fig.40]

EXAMPLE 4

[Fig.41]

EXAMPLE 5

[Fig.42]

## (a)

## (b)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 4253162 A
- JP 4328258 A
- JP 5054889 A
- JP 5325971 A
- JP 8213052 A
- JP 5047384 A
- JP 8055624 A
- JP 10241691 A
- JP 11016566 A
- JP 2000048820 A
- JP 2000113884 A
- JP 2002260632 A
- JP 2002304993 A
- JP 2003031219 A
- JP 2004335278 A
- JP 2005251716 A
- JP 2004152753 A
- JP 2005320184 A
- JP 3088716 B
- JP 3362025 B
- WO 2002041419 A
- JP 2004303673 A
- JP 2005235628 A
- JP 2006164934 A
- JP 2006349912 A
- JP 2007079360 A

**Non-patent literature cited in the description**

- *Microelectronics Journal,* 2005, vol. 36, 491
- *J. Power Sources,* 2001, vol. 102, 162
- *J. Electrochem. Soc.,* 2004, vol. 151, A1739